# EUROPEAN PATENT APPLICATION

(11) **EP 4 848 870 A1**
(43) Date of publication of application: **02.12.2026**
(21) Application number: 23959909.5
(22) Date of filing: 30.11.2023
(51) Int. Cl.: H04W 74/0833, H04L 5/00

(54) **PREAMBLE TRANSMISSION METHOD AND APPARATUS, DEVICE, AND MEDIUM**

(71) Applicant: GUANGDONG OPPO MOBILE TELECOMMUNICATIONS CORP., LTD., Dongguan, Guangdong 523860 (CN)
(72) Inventor: XU, Weijie, Dongguan, Guangdong 523860 (CN); WANG, Ke, Dongguan, Guangdong 523860 (CN)
(74) Representative: Novagraaf Technologies
(86) International application number: PCT/CN2023/135697
(87) International publication number: WO 2025/111998

(57) **Abstract**

The present disclosure relates to the field of communications, and discloses a preamble transmission method and apparatus, a device, and a medium. The method is executed by a terminal device. The method comprises: sending a preamble sequence, the preamble sequence being one of first sequences, wherein the types of the first sequences include at least one of the following: m sequences; Gold sequences; and Walsh sequences. By means of a low-complexity preamble sequence, random access, uplink synchronization and frequency offset estimation that have low power consumption are implemented, thereby providing the possibility of preamble transmission for some communication scenarios in which OFDM waveforms are difficult to be used.

## Description

### TECHNICAL FIELD

The present disclosure relates to the field of communications, and in particular, to a preamble transmission method, an apparatus, a device, and a medium.

### RELATED ART

Due to their low complexity, some communication devices find it challenging to transmit common Orthogonal Frequency-Division Multiplexing (OFDM) signals, and the commonly used ZC sequences for generating OFDM signals are no longer suitable. Additionally, there are also some communication devices where transmitting OFDM signals is not an optimal choice due to limitations in their operating frequency range.

For these communication devices that do not utilize OFDM signals, the need to transmit preambles still exists. Currently, there is no feasible solution for designing preambles for non-OFDM waveforms for communication devices that do not utilize OFDM signals.

### SUMMARY

The present disclosure provides a preamble transmission method, an apparatus, a device, and a medium. The technical solutions at least include:

According to an aspect of the embodiments of the present disclosure, a preamble transmission method is provided. The method is performed by a terminal device, and the method includes: transmitting a preamble sequence, wherein the preamble sequence is one of a first sequence; wherein a type of the first sequence includes at least one of an m-sequence, a Gold sequence, or a Walsh sequence.

According to another aspect of the embodiments of the present disclosure, a preamble transmission method is provided. The method is performed by a network device, and the method includes: receiving a preamble sequence, wherein the preamble sequence is one of a first sequence; wherein a type of the first sequence includes at least one of an m-sequence, a Gold sequence, or a Walsh sequence.

According to another aspect of the embodiments of the present disclosure, a preamble transmission apparatus is provided. The apparatus includes: a transmitting module, configured to transmit a preamble sequence, wherein the preamble sequence is one of a first sequence; wherein a type of the first sequence includes at least one of an m-sequence, or a Gold sequence, or a Walsh sequence.

According to another aspect of the embodiments of the present disclosure, a preamble transmission apparatus is provided. The apparatus includes: a receiving module, configured to receive a preamble sequence, wherein the preamble sequence is one of a first sequence; wherein a type of first sequence includes at least one of an m-sequence, a Gold sequence, or a Walsh sequence.

According to an aspect of the embodiments of the present disclosure, a communication device is provided. The communication device includes: a processor; a receiver and/or transmitter connected to the processor; a memory for storing an instruction executable for the processor; wherein the communication device is configured to perform the preamble transmission method as described above.

According to another aspect of the embodiments of the present disclosure, a communication device is provided. The communication device includes: a receiver and/or a transmitter; wherein the communication device is configured to perform the preamble transmission method as described above.

According to an aspect of the present disclosure, a computer-readable storage medium is provided, in which an executable instruction is stored. The executable instruction is loaded and executed by a processor to perform the preamble transmission method as described in the aforementioned aspects.

According to an aspect of the present disclosure, a computer program product is provided, which includes a computer instruction stored in a computer-readable storage medium. The computer instruction, when read by a processor of a computer device from the computer-readable storage medium and executed by the processor, causes the computer device to perform the preamble transmission method as described in the aforementioned aspects.

According to an aspect of the present disclosure, a chip is provided, which includes a programmable logic circuit and/or program instruction. The chip, when running, is configured to perform the preamble transmission method as described in the aforementioned aspects.

According to an aspect of the present disclosure, a computer program is provided, which includes a computer instruction. The computer instruction, when executed by a processor of a computer device, causes the computer device to perform the preamble transmission method as described in the aforementioned aspects.

The technical solution according to the embodiments of the present disclosure may include the following beneficial effects.

Since the first sequence is of type m-sequence, gold sequence, or Walsh sequence, it is composed of "0" and "1", making it highly compatible with non-OFDM waveforms such as an OOK waveform, a PSK waveform, and a FSK waveform. This provides the possibility of transmitting the preamble for some communication scenarios where the OFDM waveforms are difficult to adopt. For some low-power devices, transmitting the preamble sequence belonging to the first sequence can achieve uplink synchronization, random access, and time-frequency offset estimation while maintaining good characteristics of low complexity and low power consumption. For terminal devices operating in the millimeter-wave frequency band, the first sequence has advantages such as simple generation, easy implementation, and power consumption savings. Combined with the high reliability and narrow beam characteristics of millimeter-wave transmission, the preamble sequence belonging to the first sequence can meet the needs of uplink synchronization, random access, and time-frequency offset estimation.

### BRIEF DESCRIPTION OF DRAWINGS

To describe the technical solutions in the embodiments of the present disclosure more clearly, the following briefly describes the accompanying drawings required for describing the embodiments. Apparently, the accompanying drawings in the following description illustrate merely some embodiments of the present disclosure, and those of ordinary skill in the art may still derive other accompanying drawings from these accompanying drawings without creative efforts.
FIG. 1 illustrates a schematic diagram of a wireless communication system according to an exemplary embodiment of the present disclosure;
FIG. 2 illustrates a schematic diagram of a communication system according to an exemplary embodiment of the present disclosure;
FIG. 3 illustrates a schematic diagram of harvesting a radio frequency energy according to an exemplary embodiment of the present disclosure;
FIG. 4 illustrates a schematic diagram of a backscatter communication process according to an exemplary embodiment of the present disclosure;
FIG. 5 illustrates a schematic diagram of resistive load modulation according to an exemplary embodiment of the present disclosure;
FIG. 6 illustrates a schematic diagram of an encoding method according to an exemplary embodiment of the present disclosure;
FIG. 7 illustrates a schematic diagram of generating m-sequences according to an exemplary embodiment of the present disclosure;
FIG. 8 illustrates a schematic diagram of generating m-sequences according to an exemplary embodiment of the present disclosure;
FIG. 9 illustrates a schematic flowchart of preamble transmission according to an exemplary embodiment of the present disclosure;
FIG. 10 illustrates a schematic flowchart of preamble transmission according to an exemplary embodiment of the present disclosure;
FIG. 11 illustrates a schematic diagram of a cyclic shift according to an exemplary embodiment of the present disclosure;
FIG. 12 illustrates a schematic diagram of preamble transmission according to an exemplary embodiment of the present disclosure;
FIG. 13 illustrates a schematic flowchart of a preamble transmission method according to an exemplary embodiment of the present disclosure;
FIG. 14 illustrates a simulation diagram of preamble transmission according to an exemplary embodiment of the present disclosure;
FIG. 15 illustrates a schematic flowchart of a preamble transmission method according to an exemplary embodiment of the present disclosure;
FIG. 16 illustrates a schematic flowchart of a preamble transmission method according to an exemplary embodiment of the present disclosure;
FIG. 17 illustrates a schematic diagram of a preamble transmission method according to an exemplary embodiment of the present disclosure;
FIG. 18 illustrates a structural block diagram of a preamble transmission apparatus according to an exemplary embodiment of the present disclosure;
FIG. 19 illustrates a structural block diagram of a preamble transmission apparatus according to an exemplary embodiment of the present disclosure;
FIG. 20 illustrates a schematic structural diagram of a communication device according to an exemplary embodiment of the present disclosure; and
FIG. 21 illustrates a schematic structural diagram of a communication device according to an exemplary embodiment of the present disclosure.

### DETAILED DESCRIPTION

For clearer descriptions of the objectives, technical solutions, and advantages of the present disclosure, embodiments of the present disclosure are further described in detail hereinafter with reference to the accompanying drawings. Here, exemplary embodiments will be described in detail, with examples illustrated in the accompanying drawings. When the following description refers to the drawings, unless otherwise indicated, the same numerals in different drawings represent the same or similar elements. The implementations described in the following exemplary embodiments do not represent all implementations consistent with the present disclosure. Instead, they are merely examples of apparatuses and methods consistent with some aspects of the present disclosure as detailed in the appended claims.

The terms used in the present disclosure are for the purpose of describing particular embodiments only and are not intended to limit the present disclosure. As used in the present disclosure and the appended claims, the singular forms "a," "an," and "the" are intended to include the plural forms as well, unless the context clearly indicates otherwise. It should also be understood that the term "and/or" as used herein refers to and encompasses any or all possible combinations of one or more associated listed items.

It should be understood that although the terms "first," "second," "third," and the like may be used herein to describe various pieces of information, such information should not be limited to these terms. These terms are only used to distinguish one type of information from another. For example, first information may be referred to as second information, and similarly, second information is referred to as first information, without departing from the scope of the present disclosure. The word "if," as used herein, may be interpreted as "in a case where," " in a case when," or "in response to determining that," depending on the context.

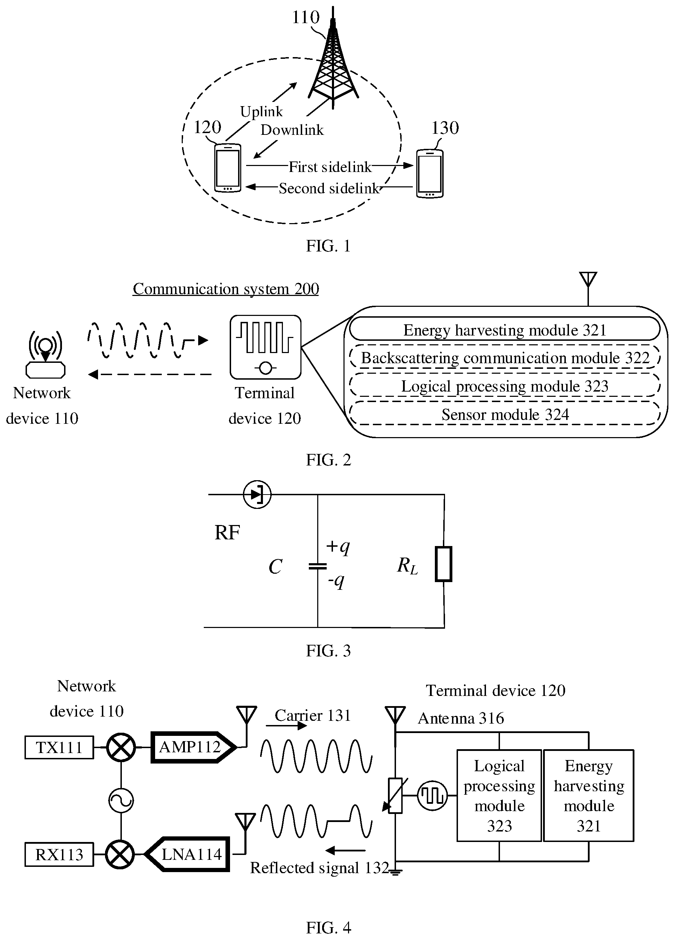

FIG. 1 illustrates a schematic diagram of a wireless communication system according to an exemplary embodiment of the present disclosure. The wireless communication system includes a network device 110 and a terminal device 120, and/or a terminal device 120 and a terminal device 130, which are not limited in the present disclosure.

The network device 110 in the present disclosure provides wireless communication functions, and the network device 110 includes but is not limited to: an evolved node B (eNB), a radio network controller (RNC), a node B (NB), a base station controller (BSC), a base transceiver station (BTS), a home station (such as a home evolved node B or a home node B (HNB)), a baseband unit (BBU), an access point (AP) in a wireless fidelity (Wi-Fi) system, a wireless relay node, a wireless backhaul node, a transmission point (TP), or a transmission and reception point (TRP). The network device 110 can also be a next generation node B (gNB) or transmission point (TRP or TP) in the 5^{th} generation (5G) mobile communication system, or one or a group of antenna panels (including a plurality of antenna panels) of a base station in the 5G system, or a network node constituting a gNB or transmission point, such as a baseband unit (BBU) or distributed unit (DU), or a base station in the beyond fifth generation (B5G) mobile communication system or the 6^{th} generation (6G) mobile communication system, or a core network (CN), fronthaul, backhaul, radio access network (RAN), network slicing, or the like, or a reader/writer of a radio frequency identification (RFID) system.

The terminal device 120 and/or the terminal device 130 in the present disclosure is also referred to as a user equipment (UE), an access terminal, a subscriber unit, a subscriber station, a mobile station, a mobile terminal, a remote station, a remote terminal, a mobile device, a user terminal, a terminal, a wireless communication device, a user agent, or a user device. The terminal includes but is not limited to: a handheld device, a wearable device, a vehicle-mounted device, and an Internet of Things (IoT) device, such as an electronic tag, a controller, a mobile phone, a tablet computer, an e-book reader, a laptop, a desktop computer, a television, a game console, a mobile internet device (MID), an augmented reality (AR) terminal, a virtual reality (VR) terminal and a mixed reality (MR) terminal, a wearable device, a gamepad, a wireless terminal in industrial control, a wireless terminal in self-driving, a wireless terminal in remote medical, a wireless terminal in smart grid, a wireless terminal in transportation safety, a wireless terminal in smart city, a wireless terminal in smart home, a wireless terminal in remote medical surgery, a cellular phone, a cordless phone, a Session Initiation Protocol (SIP) phone, a wireless local loop (WLL) station, a personal digital assistant (PDA), a set top box (STB), a customer premise equipment (CPE), or the like.

In some embodiments, the network device 110 and the terminal device 120 communicate with each other via an air interface technology, such as a Uu interface.

In some embodiments, two communication scenarios are present between the network device 110 and the terminal device 120: an uplink communication scenario and a downlink communication scenario. Uplink communication refers to transmitting a signal to the network device 110, while downlink communication refers to transmitting a signal to the terminal device 120.

In some embodiments, the terminal device 120 and the terminal device 130 communicate with each other via a direct communication interface, such as the PC5 interface.

In some embodiments, there are two communication scenarios between the terminal device 120 and the terminal device 130: a first sidelink communication scenario and a second sidelink communication scenario. The first sidelink communication refers to transmitting a signal to the terminal device 130; the second sidelink communication refers to transmitting a signal to the terminal device 120.

In some embodiments, both the terminal device 120 and the terminal device 130 are within the network coverage and located in the same cell, or both the terminal device 120 and the terminal device 130 are within the network coverage but located in different cells, or the terminal device 120 is within the network coverage but the terminal device 130 is outside the network coverage.

The technical solution according to the embodiments of the present disclosure can be applied to various communication systems, such as a global system of mobile communication (GSM) system, a code division multiple access (CDMA) system, a wideband code division multiple access (WCDMA) system, a general packet radio service (GPRS), a long-term evolution (LTE) system, a LTE frequency division duplex (FDD) system, a LTE time division duplex (TDD) system, an advanced long-term evolution (LTE-A) system, a universal mobile telecommunication system (UMTS), a worldwide interoperability for microwave access (WiMAX) communication system, a 5G mobile communication system, a new radio (NR) system, an evolved system of the NR system, an LTE-based access to unlicensed spectrum (LTE-U) system on an unlicensed spectrum, an NR-based access to unlicensed spectrum (NR-U) system on the unlicensed spectrum, a terrestrial networks (TN) system, a non-terrestrial networks (NTN) system, a wireless local area network (WLAN), a wireless fidelity (Wi-Fi), a cellular Internet of Things system, a cellular passive Internet of Things system, an ambient power enabled Internet of Things (Ambient IoT/A-IoT) system, and a zero-power Internet of Things system. The solution is also applicable to the subsequent evolved systems of the 5G NR system, as well as to B5G, 6G, and subsequent evolved systems. In some embodiments of the present disclosure, "NR" can also be referred to as the 5G NR system or the 5G system. The 5G mobile communication system can include non-standalone (NSA) networking and/or standalone (SA) networking.

The technical solution according to the embodiments of the present disclosure can also be applied to a machine type communication (MTC), a long-term evolution-machine (LTE-M), a device to device (D2D) network, a machine to machine (M2M) network, an Internet of Things (IoT) network, or other networks. The IoT network can include, for example, the Internet of Vehicle (IoV) network. The communication modes in the IoV system are collectively referred to as Vehicle to X (V2X, wherein X can represent anything), such as a vehicle to vehicle (V2V) communication, a vehicle to infrastructure (V2I) communication, a vehicle to pedestrian (V2P) communication, or a vehicle to network (V2N) communication.

The wireless communication system according to the embodiments can be applied to, but is not limited to, at least one of an uplink communication scenario, a downlink communication scenario, or a sidelink communication scenario.

### Low-power devices:

In some embodiments, the terminal device 120 illustrated in FIG. 1 is implemented as a low-power device.

The low-power device can also be referred to as at least one of an ultra-low-power devices, a zero-power device, a passive IoT device, or an ambient power-enabled IoT device (Ambient IoT/A-IoT).

The communication technology implemented via the low-power device can also be referred to as one of a zero-power communication technology, an ultra-low-power communication technology, a low-power communication technology, an ambient IoT (A-IoT) technology, a passive IoT technology, or a zero-power IoT technology.

The low-power device can harvest energy from the environment (such as radio frequency energy, solar energy, light energy, thermal energy, mechanical energy, kinetic energy, or the like) to acquire energy for communication. Generally, based on the source of energy and the way the energy is used, the low-power devices can be categorized into the following three categories.
(1) Passive device; the passive device do not require an internal battery. In a case where the passive device approaches a network device (such as a reader/writer in an RFID system), the passive device is within the near-field range formed by the antenna radiation of the network device. Therefore, the antenna of the passive device generates induced current via electromagnetic induction, wherein the induced current drives the low-power chip circuit of the passive device. The demodulation of a forward link signal and modulation of a backward link signal are implemented. For a backscatter link, the passive device can use backscatter or extremely low-power active transmission methods for signal transmission. The passive device does not require the internal battery to drive either the forward link or the reverse link, and thus can be considered as the zero-power device.

In addition to not requiring the battery, the radio frequency (RF) circuit and the baseband circuit of the passive device are also very simple, for example, components such as a low noise amplifier (LNA), a power amplifier (PA), a crystal oscillator, and an analog to digital converter (ADC) are not needed, such that the passive device has many advantages, such as small size, light weight, very low price, long service life, and so on.

The passive device can also support other energy harvesting methods. By harvesting energy from the environment (such as solar energy, light energy, thermal energy, kinetic energy, mechanical energy, etc.) the passive device acquires energy to drive the circuit, thereby achieving communication.

(2) Semi-passive device; the semi-passive device do not have a conventional battery installed, and can use a radio frequency energy harvesting module to collect radio wave energy, or use an energy harvesting module to collect energy from the environment (such as solar energy, light energy, thermal energy, kinetic energy, mechanical energy, or the like), and store the harvested energy in an energy storage unit (such as a capacitor). Subsequent to acquiring energy, the energy storage unit can drive the low-power chip circuit of the semi-passive device. The demodulation of the forward link signal and the modulation of backward link signal can be implemented. For the backscatter link, the semi-passive device can use backscatter for signal transmission. The semi-passive device can also be able to actively transmit, that is, the backward link can communicate not only by backscatter but also by active transmission.

The semi-passive device does not require an internal battery to operate, whether the forward link or reverse link. Although the semi-passive device utilizes energy stored in the capacitor during operation, this energy originates from radio energy or ambient energy harvested by the energy harvesting module. Therefore, the semi-passive device can be considered as a type of the zero-power device.

The semi-passive device inherits many advantages from the passive device, such as small size, light weight, very low price, and long service life.

(3) Active device; the active device can have a built-in battery. The battery is used to drive the low-power chip circuit of the active device, enabling demodulation of the forward link signal and modulation of the backward link signal. The signal transmission of the active device's backward link can be achieved without consuming the device's own power, by backscattering, thus achieving zero-power consumption. The active device can also have the capability of active transmission, that is, the reverse link can communicate not only by backscattering but also by active transmission.

Although equipped with the built-in battery, the active device exhibits extremely low power consumption and complexity. Consequently, the battery capacity can be set within a narrow range, resulting in a reduced cost and dimension. The battery integrated in the active device can also function as the energy storage unit, storing the environmental energy harvested by the energy harvesting module, thereby enabling the active device to have a longer maintenance cycle, or even become maintenance-free.

In the active device, the built-in battery is used to supply power, extending the communication distance of the active device, such as increasing the read and write distance of electronic tag, to enhance the reliability of communication. Therefore, the active device is applicable in scenarios where requirements for communication distance, reading latency, and other aspects are relatively high.

In terms of communication methods, the low-power device can support both backscatter and/or active transmission communication methods. Generally, based on the type of transmitter, the low-power devices can be categorized into the following three categories.
(1) Low-power device based on backscatter; this device uses the aforementioned backscatter method for uplink data transmission. This device does not have an active transmitter that transmits actively, but only has a backscatter transmitter. Therefore, when this device transmits uplink data, a carrier provided by a network device is needed, and this device performs backscatter based on the carrier to achieve uplink data transmission.
(2) Low-power device based on the active transmitter; this device utilizes the active transmitter with active transmission capability for uplink data transmission. Therefore, when transmitting uplink data, this device can use its own active transmitter to transmit the uplink data without requiring the network device to provide a carrier. Examples of active transmitters suitable for such device include an ultra-low-power ASK transmitter and an ultra-low-power FSK transmitter. Based on current implementations, when transmitting a signal of 100 microwatts, the overall power consumption of these transmitters can be reduced to 400 to 600 microwatts.
(3) Low-power device that possesses both backscatter capability and the active transmitter; this device can support both backscatter and the active transmitter. Depending on various conditions (such as different battery levels, varying availability of environmental energy), or based on the scheduling of network device, this device can determine whether to use backscatter or the active transmitter for active transmission.

FIG. 2 illustrates a communication system 200 according to an exemplary embodiment of the present disclosure. The communication system 200 includes a network device 110 and a terminal device 120 belonging to a low-power device.

The terminal device 120 belonging to the low-power device includes an energy harvesting module 321. Optionally, in addition to the energy harvesting module 321, the terminal device 120 also includes a backscatter communication module 322. Optionally, in addition to the energy harvesting module 321, the terminal device 120 also includes a logic processing module 323. Illustratively, the logic processing module 323 includes a low-power computing module. Optionally, in addition to the energy harvesting module 321, the terminal device 120 also includes a sensor module 324. Optionally, in addition to the energy harvesting module 321, the terminal device 120 also includes a memory (not illustrated in the figure). Optionally, in addition to the energy harvesting module 321, the terminal device 120 also includes one or more of the backscatter communication module 322, the logic processing module 323, the sensor module 324, and the memory.

Illustratively, the energy harvesting module 321 can harvest energy carried by a radio wave in space, or optical energy, or kinetic energy, or mechanical energy, or solar energy, or the like, to power various modules that drive the terminal device 120. Subsequent to acquiring energy, the terminal device 120 can receive a signal from the network device 110 via a receiver, reflect a signal to the network device 110 via the backscatter communication module 322, or transmit a signal to the network device 110 via a transmitter (not illustrated in the figure). The data reflected or transmitted by the terminal device 120 can be its own stored data (such as an identity identifier or pre-written information, such as the production date, brand, manufacturer, or the like, of a product). The sensor module 324 can include various sensors, and the terminal device 120 can report the data collected by these sensors based on a low-power mechanism. The memory is used to store some basic information (such as item identifiers) or acquire sensor data such as environmental temperature and humidity.

The terminal device 120 can utilize the logic processing module 323 to perform simple operations such as signal demodulation, decoding or encoding, and modulation. The hardware design can be quite straightforward, resulting in a low cost and compact terminal device 120.

It should be understood that the modules in the terminal device 120 illustrated in FIG. 2 are merely an example and not a limitation.

FIG. 3 illustrates a schematic diagram of radio frequency power harvesting performed by the energy harvesting module 321. Radio frequency power harvesting is based on the principle of electromagnetic induction, which utilizes a radio frequency module RF to collect energy from spatial electromagnetic waves and acquire the energy required to drive low-power devices through electromagnetic induction and connection with a capacitor C and a load resistor RL in parallel, for example, the energy is used to drive a low-power demodulation module, a modulation module, a sensor, and a memory read operation. Based on this, the low-power devices can operate without traditional batteries.

FIG. 4 illustrates a schematic diagram of the backscatter communication module 322 performing backscatter communication. The terminal device 120 receives a wireless signal carrier 131 transmitted by the transmitting module (Transmit, TX) 111 of the network device 110 using an amplifier (AMP) 112, modulates the wireless signal carrier 131, loads the information to be transmitted using the logic processing module 323, and collects radio frequency energy using the energy harvesting module 321. The terminal device 120 radiates the modulated reflected signal 132 using the antenna 316. This information transmission process is referred to as backscatter communication. The receiving module (Receive, RX) 113 of the network device 110 receives the modulated reflected signal 132 using a low noise amplifier (LNA) 114. Backscatter and load modulation functions are inseparable. Load modulation adjusts and controls the circuit parameters of the oscillating loop of the terminal device 120 based on the beat of the data stream, causing parameters such as the impedance of the terminal device 120 to change accordingly, thus completing the modulation process.

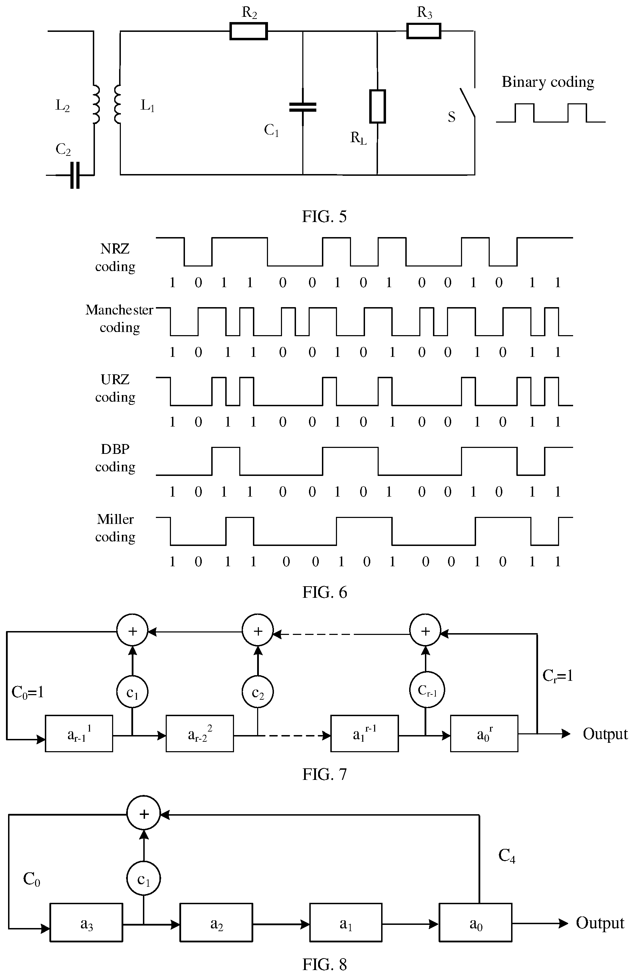

Load modulation technology primarily includes resistive load modulation and capacitive load modulation. FIG. 5 illustrates the schematic diagram of resistive load modulation. In the resistive load modulation, the load resistor RL is connected in parallel with a third resistor R3. The switch S, controlled based on binary encoding, is used to establish a connection or disconnection. The on/off state of the third resistor R3 causes variations in the voltage across the circuit. The load resistor RL maintains a parallel connection with the first capacitor C1, and the load resistor RL maintains a series connection with the second resistor R2. The second resistor R2 maintains a series connection with the first inductor L1. The first inductor L1 is coupled with the second inductor L2, wherein the second inductor L2 maintains a series connection with the second capacitor C2. As an example, amplitude shift keying (ASK) can be implemented, where signal modulation and transmission are achieved by adjusting the amplitude of the backscatter signal from the terminal device. Similarly, in the capacitive load modulation, the circuit resonance frequency can be altered by switching capacitors on and off, enabling frequency shift keying (FSK), where signal modulation and transmission are achieved by adjusting the operating frequency of the backscatter signal from the terminal device.

The terminal device 120 can modulate the incoming wave signal with information through load modulation, thus realizing the process of backscatter communication.

Therefore, the low-power devices have the following significant advantages: (1) They can avoid actively transmitting signals, thus eliminating the need for complex radio frequency chains such as power amplifiers (PAs) and radio frequency filters; (2) They do not require actively generating high-frequency signals, thus eliminating the need for high-frequency crystal oscillators; (3) With the help of backscatter communication, signal transmission does not consume their own energy.

FIG. 6 illustrates the schematic diagram of the encoding method employed by the wireless communication system illustrated in FIG. 1 or the communication system illustrated in FIG. 2. In the wireless communication system illustrated in FIG. 1 or the communication system illustrated in FIG. 2, data transmitted can be represented by different forms of codes to signify binary "1" and "0", that is, using distinct pulse signals to denote "0" and "1". Here are several encoding methods introduced:
·Non-Return to Zero (NRZ) encoding: NRZ encoding represents binary "1" with a high voltage level and binary "0" with a low voltage level. FIG. 6 illustrates the voltage level diagram of encoding binary data: 101100101001011 using the NRZ method.
· Manchester (Manchester) encoding: Manchester encoding is also referred to as Split-Phase Coding. In Manchester encoding, binary values are represented by changes in voltage level (rising or falling) within half a bit period of the bit length. A negative transition at half a bit period indicates a binary "1", while a positive transition at half a bit period indicates a binary "0". Manchester encoding is commonly used for data transmission from low-power devices to network devices when employing carrier load modulation or backscatter modulation, as it facilitates the detection of data transmission errors. This is because in Manchester encoding, a state of "no change" within the bit length is not allowed. When a plurality of low-power devices simultaneously transmit data bits with different values, the received rising and falling edges cancel each other out, resulting in a continuous carrier signal throughout the entire bit length. Since this state is not allowed, the network device can use this error to determine the specific location of the collision. FIG. 6 illustrates the schematic diagram of the voltage levels when encoding binary data: 101100101001011 using the Manchester method.
· Unipolar Return to Zero (URZ) encoding: In the first half bit period, a high level in unipolar return to zero encoding represents binary "1", while a low level signal that persists throughout the entire bit period represents binary "0". FIG. 6 illustrates a level diagram of encoding binary data: 101100101001011 using the URZ method.
· Differential Binary Phase (DBP) encoding: In DBP encoding, any edge within a half bit period represents a binary "0", while the absence of an edge represents a binary "1". Additionally, the voltage level is inverted at the beginning of each bit period. Therefore, it is relatively easy for the receiver to reconstruct the bit timing. FIG. 6 illustrates the voltage level diagram for encoding binary data: 101100101001011 using the DBP method.
·Miller encoding: Miller encoding represents binary "1" at any edge within half a bit period, while the unchanged level in the next bit period represents binary "0". The level alternation occurs at the beginning of the bit period, making it easier for the receiver to reconstruct the bit timing. FIG. 6 illustrates the level diagram of encoding binary data: 101100101001011 using the Miller method.
·Differential coding: In differential coding, each binary "1" to be transmitted may cause a change in signal level, while for binary "0", the signal level remains the same.

It should be noted that the aforementioned encoding methods are merely examples of encoding methods that can be adopted by the wireless communication system illustrated in FIG. 1 or the communication system illustrated in FIG. 2, and are not intended to be limiting.

Due to its significant advantages such as extremely low cost, low power consumption, and small size, the communication system illustrated in FIG. 2 can be widely applied in various industries, such as logistics for vertical industries, intelligent warehousing, smart agriculture, energy and power, industrial Internet, or the like; and can also be applied to personal applications such as smart wearables and smart homes.

For example, it can be applied to at least the following four types of scenarios: (1) object recognition, such as logistics, management of products on the production line, and supply chain management; (2) environmental monitoring, such as monitoring temperature, humidity, and harmful gases in the working environment and natural environment; (3) positioning, such as indoor positioning, intelligent object searching, and positioning of items on the production line; (4) intelligent control, such as intelligent control of various electrical appliances in smart homes (switching on/off air conditioning, adjusting temperature) and intelligent control of various facilities in agricultural greenhouses (automatic watering, fertilization).

### Random Access:

After the cell search process, the terminal device has achieved downlink synchronization with the cell, such that the terminal device is capable of receiving downlink data. However, the terminal device can only perform uplink transmission subsequent to achieving uplink synchronization with the cell. The terminal device can establish a connection with the cell and achieve uplink synchronization through the random access procedure (RAR). That is, through random access, the terminal device can obtain uplink synchronization and acquire a unique identifier assigned by the network device, namely the cell radio network temporary identifier (C-RNTI). Therefore, random access can be applied not only in initial access but also in cases where the user loses uplink synchronization.

The random access process can typically be triggered by one of the following six types of triggering events:
(1) Initial Access. The terminal device transitions from the radio resource control (RRC) idle state (RRC_IDLE) to the RRC connected state (RRC_CONNECTED).
(2) Handover. When the terminal device needs to establish uplink synchronization with a new cell, the terminal device needs to initiate random access in the new cell.
(3) RRC Connection Re-establishment. The terminal device re-establishes a radio connection after a radio link failure (RLF) occurs.
(4) In the RRC connected state, when downlink data arrives, the uplink is in an "out-of-sync" state. At this time, upon the arrival of downlink data, the terminal device needs to reply with an acknowledgement (ACK) or a negative acknowledgement (NACK).
(5) In the RRC connected state, when uplink data arrives, the uplink is in an "out-of-sync" state or no physical uplink control channel (PUCCH) resource is available for scheduling request (SR) transmission.
   When uplink data arrives, such as when a measurement report needs to be reported or data needs to be transmitted, in the case where the uplink is in an "out-of-sync" state, the terminal device can initiate a random access process; alternatively, in the case where the terminal devices already in an uplink sync state is allowed to use the random access channel (RACH) to replace the role of SR, then when the uplink is in an "out-of-sync" state, the terminal device can initiate a random access process.
(6) In the RRC connected state, to facilitate positioning, it is necessary to acquire the timing advance (TA). Additionally, the random access may be triggered due to reasons such as transitioning from the RRC inactive state (RRC_INACTIVE), requesting other system information (OSI), or beam failure recovery.

The process of 4-step random access can include the following four steps: Step 1, the terminal device transmits Msg 1; Step 2, the network device transmits Msg 2; Step 3, the terminal device transmits Msg 3; Step 4, the network device transmits Msg 4.

Step 1: The terminal device transmits the Msg 1 to the network device to inform the network device that the terminal device has initiated a random access request. This Msg 1 carries the random access preamble (RAP), also referred to as the random access preamble, preamble, preamble, or the like. At the same time, the Msg 1 can also be used for the network device to estimate the transmission delay between the network device and the terminal device and calibrate the uplink time accordingly.

Step 2: Subsequent to receiving the Msg 1 from the terminal device, the network device transmits Msg 2, namely the random access response (RAR) message, to the terminal device. This Msg 2 can be scrambled using the random access radio network temporary identifier (RA-RNTI). The terminal device can monitor the PDCCH within the RAR window to receive the RAR message scrambled with the RA-RNTI (not considering possible measurement gaps).

In the case where the terminal device does not receive the RAR message replied by the network device within the RAR window, it is considered that the random access fails. In the case where the terminal device successfully receives one RAR message within the RAR window and the index of the preamble carried in the RAR message is the same as the index of the preamble in Msg 1 transmitted by the terminal device, the terminal device can stop listening to RAR messages. The terminal device uses RA-RNTI to descramble the RAR message.

The RAR message can include corresponding messages for a plurality of terminal devices that transmit preambles. For each terminal device, the response message includes the index of the preamble (RAPID) used by that terminal device, resource allocation information for Msg 3, time advance (TA) adjustment information, and a temporary cell-radio network temporary identity (TC-RNTI).

In the NR standard, the RAR message can be scheduled using the downlink control information (DCI) format 1-0, and the PDCCH used to schedule this RAR message can be scrambled using the aforementioned RA-RNTI.

Step 3: Subsequent to receiving the RAR message, the terminal device determines whether the RAR is its own RAR message. For example, the terminal device can use the preamble identifier for verification. Subsequent to confirming that it is its own RAR message, the terminal device generates Msg 3 at the RRC layer and transmits the Msg 3 to the network device. The message needs to carry the identification information of the terminal device, or the like.

For different random access triggering events, the Msg 3 transmitted by the terminal device in step 3 of the 4-step random access process can include different contents.

For example, in the scenario of initial access, Msg 3 includes the RRC connection request message generated by the RRC layer, which carries at least the non-access stratum (NAS) identification information of the terminal device. Additionally, Msg 3 can also carry, for example, the serving-temporary mobile subscriber identity (S-TMSI) of the terminal device, a random number, or the like.

For another example, in the RRC connection re-establishment scenario, the Msg 3 includes the RRC connection re-establishment request generated by the RRC layer and does not carry any NAS messages. Additionally, the Msg 3 can also carry, for example, the cell radio network temporary identifier (C-RNTI), protocol control information (PCI), and the like.

For another example, in the handover scenario, the Msg 3 includes the RRC handover confirm message generated by the RRC layer, which carries the C-RNTI of the terminal device. Additionally, the Msg 3 can also carry information such as the buffer status report (BSR). For other triggering events, such as the arrival of uplink/downlink data, the Msg 3 at least needs to include the C-RNTI of the terminal device.

It should be noted that uplink transmission typically utilizes terminal-specific information, such as C-RNTI, to scramble the data carried in the uplink shared channel (UL-SCH). However, at this point, conflicts have not yet been resolved, so when scrambling the Msg 3, the C-RNTI cannot be used and only TC-RNTI can be employed.

Step 4: The network device transmits Msg 4 to the terminal device, and the terminal device correctly receives the Msg 4 to complete contention resolution. For example, during the RRC connection establishment process, the Msg 4 can carry the RRC connection establishment message.

Since the terminal device in step 3 will carry its unique identifier in the Msg 3, such as C-RNTI or identifier information from the core network (such as S-TMSI or a random number), the network device will carry the unique identifier of the terminal device in the Msg 4 during the contention resolution mechanism to specify the terminal device that wins the competition. Other terminal devices that do not win the competition will initiate random access again. The PDCCH of the Msg 4 can be scrambled using TC-RNTI.

In the 5G system, when a terminal device performs random access, the terminal device can adopt a 2-step random access method in addition to the aforementioned 4-step random access method. One possible approach is to transmit messages Msg 1 and Msg 3 from the 4-step random access process as the first message in the 2-step random access process, and to transmit messages Msg 2 and Msg 4 from the 4-step random access process as the second message in the 2-step random access process.

The process of 2-step random access can include the following two steps: Step 1, the terminal device transmits the first message; Step 2, the network device transmits the second message.

Step 1: This first message (temporarily referred to as "New_Msg 1") can include a preamble and uplink data. The uplink data can be carried on an uplink channel, such as the physical uplink shared channel (PUSCH). This uplink channel can carry, for example, identification information of the terminal device and the reason for the RRC request. This first message is similar to some or all of the information carried in the Msg 1 and the Msg 3 in the 4-step random access process.

Step 2: In the case where the network device successfully receives the first message from the terminal device, the network device transmits a second message to the terminal device. This second message (temporarily referred to as "New_Msg 2") may include, for example, conflict resolution information, C-RNTI allocation information, TA adjustment information, or the like. This second message is similar to some or all of the information carried in the Msg 2 and the Msg 4 in the 4-step random access process.

In the 2-step random access process, this second message carries conflict resolution information specific to a single terminal device (including information related to the terminal device's identity transmitted in the first message), C-RNTI allocation information, TA adjustment information, or the like. Additionally, this second message may also carry an RRC resume message, or the like.

### Preamble:

The preamble is a message initiated by the terminal device for random access, and the preamble can be the first message in the random access process. Therefore, it can be considered that the preamble is used to implement the random access of the terminal device.

Random access is a necessary process for the terminal device to establish a wireless link with the network device. The terminal device needs to transmit the preamble to request access to the network and wait for the network to grant an uplink resource, such that uplink transmission on other channels except for the random access channel (RACH) can be achieved. Therefore, whether establishing a radio resource control (RRC) connection, re-establishing an RRC connection, or performing cell handover, the terminal device needs to transmit the preamble to initiate random access.

Moreover, as data transmission via an air interface requires a certain amount of time, if the terminal device intends to transmit uplink data, the terminal device should transmit in advance according to the TA to ensure that the data arrives at the network at the scheduled time. That is, the terminal device needs to maintain uplink synchronization with the network device, otherwise serious intra-cell interference, inter-code interference, and other issues will arise. This important uplink synchronization also needs to be achieved through random access. In addition to uplink time-domain synchronization, the preamble can also achieve uplink frequency synchronization (also referred to as frequency offset estimation), wireless channel estimation, and some positioning processes also require the terminal device to transmit the preamble.

As a terminal device with low power consumption characteristics, low-power devices naturally have the need to transmit preambles for random access and achieve uplink synchronization. However, due to the low complexity of low-power devices, it is difficult to support the transmission of common orthogonal frequency division multiplexing (OFDM) waveforms. Therefore, it is also difficult for low-power devices to transmit preambles using OFDM waveforms for random access and maintain uplink time-frequency synchronization.

Therefore, in certain scenarios where it is difficult to transmit OFDM signals, no feasible solution is present for how to transmit preambles, yet the need for various terminal devices to transmit preambles is urgent.

To this end, the present disclosure provides a method for transmitting a preamble, an apparatus, a device, and a medium, which support the terminal device to transmit a preamble sequence belonging to a first sequence(s) to achieve one or more of random access, uplink synchronization, frequency offset estimation, and the like. The first sequence is generated based on a binary sequence.

The binary sequence mentioned in the present disclosure refers to a sequence consisting of elements with only two possible values. It can also be understood as the bits within the binary sequence having only two possible values. For instance, in a pseudo-noise (PN) sequence, m-sequence, or gold sequence, any given bit can take the value of either "1" or "0".

Here are three types of binary sequences introduced: m-sequence, gold sequence, and Walsh sequence.

### m-sequence:

An m-sequence is the longest code sequence generated by a multistage shift register or its delay elements through linear feedback. The m-sequence is also referred to as the longest linear feedback shift register sequence or maximum-length sequence. The number of stages of a shift register can be understood as the number of shift registers. The sequence currently stored in one shift register is referred to as one state. When one bit is output from the shift register and supplemented by one bit from the feedback function, the shift register moves to the next state.

In a binary shift register, if r represents the number of stages of the shift register, an r-stage shift register has a total of 2*^{r}* states. Excluding the all-zero state, 2*^{r}* -1 states are remained. Therefore, the maximum length of code sequence it can generate is 2*^{r}* - 1 bits. That is, the longest period generated by one r-stage linear feedback shift register is equal to 2*^{r}* - 1 .

First, let's introduce the linear feedback shift register. FIG. 7 illustrates a general structural schematic of a linear feedback shift register. Assuming the initial state of the shift register is (a₀a₁···aᵣ₋₂aᵣ₋₁), after one shift and linear feedback, the input to the first stage at the left end of the shift register is as illustrated in equation (1) below.${a}_{r} = {c}_{1} {a}_{\left(r-1\right)} + {c}_{2} {a}_{\left(r-2\right)} + ⋯ + {c}_{\left(r-1\right)} {a}_{1} + {c}_{r} {a}_{0} = {\sum }_{i = 1}^{r} {c}_{i} {a}_{\left(r-i\right)}$ (1)

If f times shift is performed, the input to the first stage at the left end of the shift register is as illustrated in equation (2) below.${a}_{1} = {\sum }_{i = 1}^{r} {c}_{i} {a}_{\left(e-i\right)}$ (2)

Here, e = r + f - 1 ≥ r, f=1, 2, 3··· it can be seen that the input of the first stage of the shift register is affected by the feedback logic and the initial state of the shift register. Equation (2) is referred to as the recurrence relation of the r-stage linear feedback shift register.

Based on the recurrence relation described in equation (2), an r-order shift register can generate 2*^{r}* - 1 non-zero sequences depending on the initial state. Therefore, the maximum length of the code sequence that an r-stage linear feedback shift register can produce is 2*^{r}* -1 bits, which means that the longest period of the sequence generated by one r-stage linear feedback shift register is equal to 2*^{r}* - 1 .

The following equation (3) is referred to as the characteristic polynomial of an r-stage linear feedback shift register and can be used to describe the feedback connection state of the r-stage linear feedback shift register. The existence of *xⁱ* indicates that *cᵢ* = 1 , otherwise *cᵢ* = 0, the value of x itself has no practical significance. The value of *cᵢ* determines the feedback connection of the shift register. Since *c*₀ *= cᵣ* =1, therefore, *f*(*x*) is an r-order polynomial with a constant term of 1.$f \left(x\right) = {c}_{0} + {c}_{1} x + ⋯ + {c}_{r} {x}^{r} = {\sum }_{i = 0}^{r} {c}_{i} {x}^{i}$ (3)

The necessary and sufficient condition for one r-stage linear feedback shift register to generate an m-sequence is that *f*(x) is an r-degree primitive polynomial. If *f*(x) meets the following three conditions, *f*(x) is considered to be an r-degree primitive polynomial: (1) *f*(x) is a reduced polynomial, that is, *f*(x) cannot be further factored; (2) *f*(x) is divisible by (*x^{p}* +1), where *p =* 2*^{r}* -1; (3) *f*(x) is not divisible exactly by (*x^{q}* +1), where *q* < *p* .

Let's illustrate the generation of an m-sequence with *r* = 4 as an example. The longest period of the sequence generated by a 4-stage linear feedback shift register is 2*^{r}* - 1 = 15. When *r = 4,* the characteristic polynomial *f*(x) must be a 4th-order primitive polynomial to generate an m-sequence. That is, *f*(x) is required to be irreducibly factorized, divisible by (x¹⁵+1) , and not divisible exactly by (x*^{q}* + 1),q < 15.

First, (x¹⁵+1) is factorized as illustrated in equation (4), ensuring that each factor of (x¹⁵ + 1) is an irreducible polynomial. Then, proceed to find *f*(*x*)*.*${x}^{15} + 1 = \left(x+1\right) \left({x}^{2}+x+1\right) \left({x}^{4}+x+1\right) \left({x}^{4}+{x}^{3}+1\right) \left({x}^{4}+{x}^{3}+{x}^{2}+x+1\right)$ (4)

Here, three factors of degree 4 of (x¹⁵+1) is present. However, (*x*⁴ *+ x*³ *+ x*² *+ x +* 1) is divisible by *x*⁵ + 1, so (*x*⁴ *+ x*³ *+ x² + x* + 1) not a primitive polynomial. Therefore, two primitive polynomials of degree 4 can be found: (*x*⁴ *+ x +* 1) and (*x*⁴ *+ x*³ + 1), either of which can generate an m-sequence.

Illustratively, *f(x) = x*⁴ *+ x* + 1 is taken as an example, the constructed m-sequence generator is illustrated in FIG. 8. The modulo-2 sum of *a*₀ and *a*₃ will serve as the new highest bit *a*₃ after the sequence is shifted to the right, and the lowest bit *a*₀ of the sequence will be output. Assuming the initial state of the 4-stage shift register is "1000", *c*₄ = *c*₁ = *c*₀ =1, *c*₃ = *c*₂ = 0 . After a period of length 15, the lowest bit of the sequence outputted by each sequence shift constitutes the m-sequence. Therefore, the m-sequence "100110101111000" is acquired.

The m-sequence exhibits balance. In one period of the m-sequence, the number of "1"s and "0"s is essentially equal. To be precise, the number of "1"s is one more than the number of "0"s.

The run-length distribution of an m-sequence also exhibits unique characteristics. In one sequence, consecutive elements with the same value are collectively referred to as one run. The number of elements in one run is termed the run-length. Runs of length h account for a certain percentage 2^{-*h*} of the total number of runs in the m-sequence, and among runs of length h, runs of consecutive "1"s and runs of consecutive "0"s each constitute half. For instance, in the m-sequence "100110101111000", a total of 8 runs are present. Specifically, one run of length 4 is present, which is 1111. One run of length 3 is also present, which is 000. Two runs of length 2 are present, which are 11 and 00. Additionally, four runs of length 1 are present, consisting of two "1"s and two "0"s.

The sequence acquired by performing modulo-2 addition of the m-sequence and its shift sequence is still a shift sequence of the m-sequence. This property is referred to as the shift-addition property of the m-sequence, also referred to as linear superposition. The shift sequence is relative to the basic m-sequence. The sequence acquired by performing the cyclic shift on the basic m-sequence can be referred to as the shift sequence. Please refer to the "cyclic shift" section below for details.

The m-sequence exhibits excellent autocorrelation properties. Assuming the autocorrelation function of the m-sequence is defined as equation (5). Here, A denotes the number of corresponding elements that are identical between the m-sequence and its j shift sequence within one period, D denotes the number of corresponding elements that are different between the m-sequence and its j shift sequence within one period, wherein L denotes the period of the m-sequence.$R \left(j\right) = \frac{A - D}{A + D} = \frac{A - D}{L}$ (5)

Equation (5) can also be rewritten as equation (6).$R \left(j\right) = \frac{quantityof \left[{a}_{i}⊕{a}_{j + i}=0\right] - quantityof \left[{a}_{i}⊕{a}_{j + i}=1\right]}{L}$ (6)

From the shift-and-add property of the m-sequence, it can be inferred that a*ᵢ* ⊕ a_{*j*+*i*} remains one element of the m-sequence. Therefore, the numerator of equation (6) equals the difference between the number of "0"s and the number of "1"s in one period of the m-sequence.

From the symmetry of the m-sequence, it can be seen that the number of "0"s in one period of the m-sequence is one less than the number of "1"s, so the numerator equals "-1".

Therefore, the autocorrelation function of the m-sequence can be acquired as illustrated in equation (7).$R \left(j\right) = \left\{\begin{matrix}1 , j = 0 \\ - \frac{1}{L} , j = 1 , 2 , ⋯ , L - 1\end{matrix}\right.$ (7)

Due to the similarity between the balance, run-length distribution, and autocorrelation characteristics of m-sequences and the basic properties of random sequences, m-sequences can also be referred to as Pseudo-Noise (PN) sequences, pseudo-random sequences, or the like.

### Gold Sequence:

The gold sequence is a code sequence acquired based on the preferred pair of m-sequences. First, let's introduce preferred pair of the m-sequences. Two different primitive polynomials, both of degree r, generate one m-sequence respectively. The condition for these two m-sequences to form a preferred pair of m-sequences is that their cross-correlation function values satisfy equation (8).$\left|{R}_{ab}\left(τ\right)\right| \leq \left\{\begin{matrix}{2}^{\left(r+1\right) / 2} + 1 , mod \left(r, 2\right) = 1 \\ {2}^{\left(r+2\right) / 2} + 1 , mod \left(r, 2\right) = 0\end{matrix}\right.$ (8)

Two m-sequences that satisfy equation (8) can be referred to as one preferred pair of m-sequences. The gold sequence is constructed by performing modulo-2 addition of one preferred pair of m-sequences. Furthermore, each time one of the m-sequences undergoes a cyclic shift, a new gold sequence can be acquired. Therefore, compared to m-sequences, a significant advantage of gold sequences is that they can acquire more independent code sequences.

The gold sequence exhibits good cross-correlation properties and retains excellent characteristics similar to those of the m-sequence, such as excellent balance, run-length distribution, and autocorrelation properties. Furthermore, the maximum cross-correlation value between each gold sequence acquired from one preferred pair of m-sequences does not exceed the maximum cross-correlation value between the preferred pair of m-sequences.

### Walsh Sequence:

The Walsh sequence, also referred to as the Walsh code, originates from the Hadamard matrix.

Assuming a second-order Hadamard matrix ${H}_{2} = \left[\begin{matrix}1 & 1 \\ 1 & - 1\end{matrix}\right]$, we can acquire the 2nd-order Walsh sequences (1,1) and (1,-1).

Assuming a high-order Hadamard matrix ${H}_{2 n} = \left[\begin{matrix}{H}_{n} & {H}_{n} \\ {H}_{n} & - {H}_{n}\end{matrix}\right]$, a Walsh sequence of length 2n can be acquired. As an example, a 4-order Walsh sequence can be acquired as (1,1,1,1), (1,-1,1,-1), (1,1,-1,-1), and (1,-1,-1,1).

The Walsh sequence is a set of orthogonal sequences, implying that all elements within a Walsh sequence are mutually orthogonal and free from mutual interference. Each Walsh sequence is a binary sequence with a length that is a power of two, such as lengths of 2, 4, 8, 16, and so on. Walsh sequences exhibit symmetry, meaning that the positive and negative versions of a Walsh sequence are identical, only in reverse order. Additionally, Walsh sequences possess favorable cross-correlation properties.

In the present disclosure, "agreement" can be achieved by pre-storing corresponding codes, tables, or other means that can be used to indicate relevant information in communication devices (such as terminal devices, network devices). The present disclosure does not limit the specific implementation methods. Communication protocol agreement can also be understood as predefined in the communication protocol.

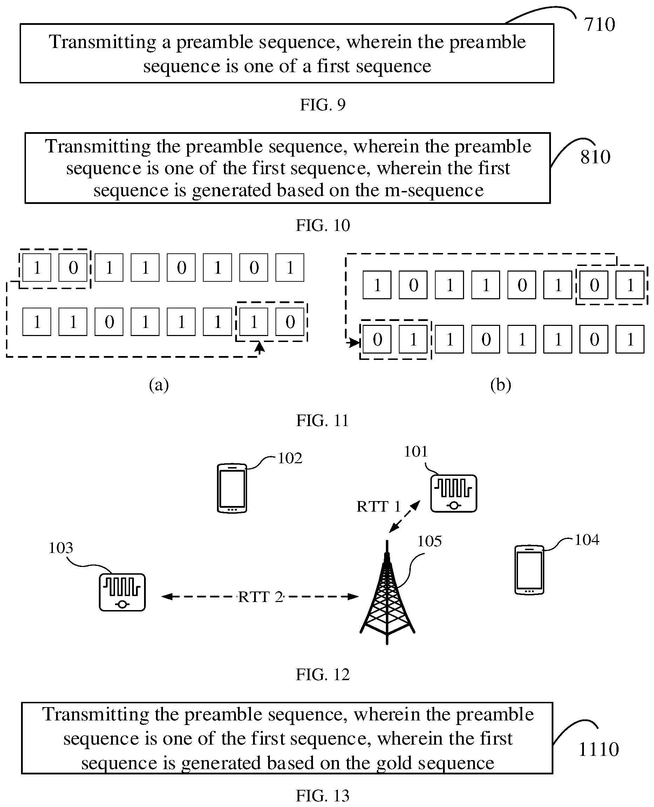

FIG. 9 illustrates a flow diagram of a preamble transmission method according to an exemplary embodiment of the present disclosure. The method is performed by a terminal device and includes:
process 710: transmitting a preamble sequence, wherein the preamble sequence is one of a first sequence.

The first sequence is generated based on a binary sequence. Since binary sequences only consist of sequence elements with two possible values, the first sequence also only consists of sequence elements with two possible values. For example, the first sequence may only consist of "0" and "1", or it may only consist of "+1" and "-1".

In some embodiments, the first sequence is generated based on at least one of the m-sequence, the gold sequence, or the Walsh sequence.

In some embodiments, the modulation method of the preamble sequence includes at least one of on-off keying (OOK) modulation, phase shift keying (PSK) modulation, binary phase shift keying (BPSK) modulation, or frequency shift keying (FSK) modulation.

It should be noted that the types of binary sequences according to the present disclosure are not limited to m-sequences, gold sequences, and Walsh sequences. Other binary sequences or sequences with characteristics similar to binary sequences are also applicable to the methods according to the embodiments of the present disclosure.

The terminal device performing process 710 can be terminal device 120 or terminal device 130 as illustrated in FIG. 1, or terminal device 120 belonging to a low-power device as illustrated in FIG. 2, or a terminal device operating in the millimeter wave (mmWave) frequency range, and so on.

In summary, in the method according to the embodiments of the present disclosure, due to the fact that the first sequence is generated based on a binary sequence, the first sequence has only two possible values for its sequence elements, making it highly compatible with non-OFDM waveforms such as OOK waveform, PSK waveform, and FSK waveform. The method provides the possibility of transmitting preambles for some communication scenarios where OFDM waveforms are difficult to adopt, offering a new feasible solution for preamble transmission. With respect to some low-power devices, if the preamble sequence belonging to the first sequence is transmitted, the low-power devices can achieve random access, uplink synchronization, and frequency offset estimation while maintaining good characteristics of low complexity and low power consumption. With respect to terminal devices operating in the millimeter-wave frequency range, the first sequence has advantages such as simple generation, easy implementation, and power consumption saving. Combined with the high reliability and narrow beam characteristics of millimeter-wave transmission, the preamble sequence belonging to the first sequence can meet the requirements of random access, uplink synchronization, and frequency offset estimation in the millimeter-wave frequency range.

**Next, taking the generation of the first sequence based on the m-sequence as an example, we will further introduce the relevant content regarding the generation of the preamble sequence based on the m-sequence, building upon process 710.**

FIG. 10 illustrates a flow diagram of a preamble transmission method according to an exemplary embodiment of the present disclosure. The method is performed by a terminal device and includes:
**process 810**: transmitting a preamble sequence, wherein the preamble sequence is one of the first sequence; wherein the first sequence is generated based on the m-sequence.

In some embodiments, the preamble sequence is one default sequence in the first sequence. Alternatively, the preamble sequence is one sequence randomly selected by the terminal device from the first sequence. Alternatively, the preamble sequence is one sequence selected by the terminal device from the first sequence according to a specific rule. Alternatively, the preamble sequence is one sequence indicated by the network device in the first sequence.

The specific rule mentioned in the present disclosure can be a rule defined in a communication protocol, a rule configured by the network device, a default rule, and so on.

In some embodiments, the preamble sequence is carried on the random access channel (RACH).

In some embodiments, the bandwidth occupied by the preamble sequence is related to at least one of: the total bandwidth of the RACH; the available bandwidth of the RACH; or the frequency margin for downlink frequency synchronization.

Illustratively, assuming the total bandwidth of the RACH is 180 kHz and the frequency margin for downlink frequency synchronization is 10 kHz, if a guard band of 10 kHz is reserved on both sides of the preamble sequence, then the maximum bandwidth occupied by the preamble sequence can be 180-2*10=160 kHz. At this point, the symbol rate of the preamble can reach up to 160 symbols/ms.

In some embodiments, the binary sequence used to generate the first sequence includes a first m-sequence and/or a second m-sequence.

The first m-sequence is the m-sequence generated according to the primitive polynomial mentioned earlier. A primitive polynomial of degree r can generate an r-order first m-sequence.

Table 1 illustrates the upper limit of the number of first m-sequences that can be generated by shift registers of different orders, where the upper limit of the number of first m-sequences is equal to the number of primitive polynomials. For example, when the order r=7, 18 primitive polynomials are present, so the upper limit of the number of first m-sequences is 18.

**Table 1 Upper limit of the number of first m-sequences under different orders**

| Shift register stage r | Upper limit of the number of the first m-sequence |
|---|---|
| 2 | 1 |
| 3 | 2 |
| 4 | 2 |
| 5 | 6 |
| 6 | 6 |
| 7 | 18 |
| 8 | 16 |
| 9 | 48 |
| 10 | 60 |
| 11 | 176 |

The second m-sequence is acquired by cyclic shift of the first m-sequence. It can also be understood that the second m-sequence is the cyclic shift sequence of the first m-sequence.

In the present disclosure, the first m-sequence can also be referred to as at least one of: a basic m-sequence, a root m-sequence, a primary m-sequence, a first-order m-sequence, or the like. The second m-sequence can also be referred to as at least one of: a shift sequence, a displaced sequence, a cyclic shift sequence, an extended m-sequence, a secondary m-sequence, a subordinate m-sequence, an auxiliary m-sequence, a second-order m-sequence, or the like.

This section introduces the related concepts of cyclic shift. As the name suggests, cyclic shift involves circularly shifting the values in a sequence. There are two common types of cyclic shifts: cyclic left shift and cyclic right shift. In the cyclic left shift, the shifted high bits are placed at the low position of the sequence, while in the cyclic right shift, the shifted low bits are placed at the high position of the sequence. The number of bits or positions shifted in one cyclic shift is referred to as the cyclic offset of that shift, and the sequence acquired through cyclic shift can be referred to a shift sequence. Taking the basic m-sequence "10110101" as an example, FIG. 11 illustrates a process of cyclic shift with a cyclic offset of 2 positions. The process of the cyclic left shift is illustrated in (a) of FIG. 11, and the process of the cyclic right shift is illustrated in (b) of FIG. 11. In the embodiments of the present disclosure, the cyclic shift can be either the cyclic left shift or the cyclic right shift. The cyclic offset can also be referred to as the cyclic offset.

According to the previous text, the longest period of a first m-sequence with an order of r is 2*^{r}* -1. If the cyclic offset is 1 for each cyclic shift, then a maximum of 2*^{r}* - 2 second m-sequences can be generated. Therefore, by performing cyclic shifts on the first m-sequence with a cyclic offset of 1, a total of 2*^{r}* -1 m-sequences (including the first m-sequence itself) can be acquired at most.

If the cyclic shift step of the first m-sequence is *N_{cs},* then a maximum of $\left⌊\left({2}^{r}-1\right)/{N}_{CS}\right⌋$ m-sequences can be acquired, including one basic m-sequence and $\left⌊\left({2}^{r}-1\right)/{N}_{CS}\right⌋ - 1$ cyclic shift sequences. In the present disclosure, "└ ┘" denotes rounding down, and "┌ ┐" denotes rounding up, which will not be further elaborated in the following text.

Assuming that in the case where the number of orders is r, the number of the first m-sequences is N, subsequent to performing cyclic shifts on these N first m-sequences based on the cyclic shift step *N_{cs},* a maximum of $N * \left⌊\left({2}^{r}-1\right)/{N}_{CS}\right⌋$ m-sequences can be acquired, including N first m-sequences themselves and ( $N * \left⌊\left({2}^{r}-1\right)/{N}_{CS}\right⌋ - N$) second m-sequences.

It can be understood that the cyclic offset can be acquired based on the cyclic shift step *N_{CS},* and by performing a cyclic shift on the first m-sequence according to the cyclic offset, several second m-sequences can be acquired. Furthermore, the smaller the cyclic shift step *N_{cs},* the more second m-sequences can be acquired.

Assuming the first m-sequence is x(*n*)*,* the second m-sequence can be represented as *x*((*n + C*) mod *L*), where L is the length of the first m-sequence, C is the cyclic offset of the second m-sequence relative to the first m-sequence, and mod is the modulo operation. Theoretically, the value of the cyclic offset C can be any integer between 0 and L.

However, in some cases, a too small cyclic offset can make it difficult for the receiver to distinguish between two adjacent cyclic shift sequences, especially when the chip corresponding to each bit of the m-sequence is relatively small. Therefore, the present disclosure also supports further limiting the value of the cyclic offset in some embodiments to ensure the reception quality of the preamble.

In actual communication scenarios, the distance between the transmitter and the receiver varies, leading to different transmission delays. As illustrated in FIG. 12, terminal devices 101, 102, 103, and 104 transmit preambles to network device 105, respectively. Due to the different distances, the transmission delays generated by each terminal device when transmitting preambles also vary. Among these four terminal devices, the terminal device 101 is the closest to network device 105, while the terminal device 103 is the farthest. Assuming that the round trip time (RTT) between the terminal device 101 and the network device 105 is RTT 1, and the RTT between the terminal device 103 and the network device 105 is RTT 2, with the difference between RTT 1 and RTT 2 being t, if t is greater than (T-1) chip lengths and less than T chip lengths, then to facilitate the network device 105 in distinguishing the preambles transmitted by each terminal device, the cyclic offset is required to be greater than or equal to T. Here, the chip length refers to the chip length corresponding to the sequence used to generate the preamble. Optionally, to further ensure the reliability of the preamble detection results, it is best to design a certain margin for the cyclic offset, such as setting the cyclic offset to be greater than T, and the difference between the cyclic offset and T to be greater than a certain value.

**Subsequent to understanding how the first m-sequence and the second m-sequence are generated, we can consider how to generate the first sequence based on the first m-sequence and the second m-sequence.**

In some embodiments, the first sequence includes all preamble sequences corresponding to the cell where the terminal device is located, which can also be understood as that all preamble sequences transmitted by terminal devices located in the same cell belong to the first sequence. Therefore, the first sequence can be considered as a cell-level preamble sequence set, and the preamble sequence transmitted by the terminal device is associated with the cell where it is located.

In some embodiments, the total number of preamble sequences corresponding to one cell is pre-configured or defined in the communication protocol. That is, the total number of preamble sequences in the first sequence is pre-configured or defined in the communication protocol.

In some embodiments, the number of m-sequences used to generate the first sequence is pre-configured or defined in the communication protocol.

The embodiments of the present disclosure provide two methods for generating a first sequence for a single cell through an m-sequence.

Method 1: First, X first m-sequences corresponding to one cell is determined, then Y second m-sequences are generated based on these X first m-sequences. The first sequence corresponding to this cell is generated from the X first m-sequences and the Y second m-sequences. The first sequence corresponding to this cell can also be generated solely from the X first m-sequences, or even solely from the Y second m-sequences.

Method 2: First, one large sequence set is generated, which includes several first m-sequences and second m-sequences. Then, the sequence set is divided into several sequence subsets, and a certain sequence subset is mapped as the first sequence of a certain cell. The sequence set can also only include several first m-sequences, or even only several second m-sequences.

**Next, we will first introduce the Method 1, which involves generating the first sequence corresponding to one cell based on X first m-sequences.**

The first sequence corresponding to one cell can be generated based solely on X first m-sequences or Y second m-sequences, or on both X first m-sequences and Y second m-sequences. However, regardless of the generation method, determination of the X first m-sequences is of primary importance. Since the second m-sequences are cyclic shift sequences of the first m-sequences, subsequent to determining the X first m-sequences, the Y second m-sequences can be naturally acquired based on the cyclic shift step or cyclic offset.

Therefore, the next step is to discuss how to determine the X first m-sequences. In some embodiments, the value of X is defined in the communication protocol, configured by the network equipment, or determined autonomously by the terminal device. Illustratively, the value of X is adjusted by the network device or the terminal device based on one or more factors such as the capabilities of the terminal device, the capabilities of the network device, the capacity of the communication system, the communication requirements, the total number of cell identifiers, and the number of terminal devices within the same cell.

In some embodiments, the X first m-sequences are defined in the communication protocol, indicated by the network device, or determined by the terminal device.

In some embodiments, the X first m-sequences are X of the N first m-sequences, wherein N is an integer greater than or equal to 1, and 1 ≤ X ≤ N. The N first m-sequences are determined based on the shift register stage number r.

There is an upper limit to the number of primitive polynomials that can be generated at different orders, so naturally, there is also an upper limit to the number of first m-sequences that are one-to-one corresponding to the primitive polynomials. The upper limit of the number of first m-sequences at different orders r can be referred to in Table 1. Therefore, the value of N here can either be equal to or less than the upper limit of the number of primitive polynomials. For example, when the order r is 5, a maximum of 6 quintic primitive polynomials can be generated, which means a maximum of 6 order-5 first m-sequences can be generated, and the value of N can be less than or equal to 6.

Optionally, the X first m-sequences are any X of the N first m-sequences. Optionally, the X first m-sequences are the X defaulted by the communication system in the N first m-sequences. Optionally, the X first m-sequences are the X indicated by the network device in the N first m-sequences. Optionally, the X first m-sequences are the X selected according to a specific rule from the N first m-sequences.

Since the X first m-sequences are in the N first m-sequences, we first need to introduce the design of the N first m-sequences, and then we can introduce how to determine/indicate/select X first m-sequences.

**Firstly, we introduce the design of N first m-sequences.**

It can be understood that, in order to facilitate the distinction between various first m-sequences, the N first m-sequences should each have a one-to-one corresponding number or index. The embodiments of the present disclosure take numbering as an example for illustration. Illustratively, the numbers of these N first m-sequences are 0,1, 2,···, N-1, or, the numbers of these N first m-sequences are 1, 2,···, N , and so on. Other numbering schemes that can distinguish between various first m-sequences are also applicable to the embodiments of the present disclosure. The embodiments of the present disclosure take the numbering of 0,1, 2,···, N-1 as an example.

In some embodiments, the sequence of N first m-sequences is either default, random, arranged according to a specific rule, defined by a communication protocol, or indicated by a network device.

In some embodiments, the N first m-sequences are numbered in ascending order of their values, or in descending order of their values.

In some embodiments, the N first m-sequences are arranged in order according to the coefficients of the primitive polynomial used to generate them. For example, the N first m-sequences are arranged in order according to the coefficients of the primitive polynomial from higher powers to lower powers. For example, the N first m-sequences are arranged in order according to the coefficients of the primitive polynomial from lower powers to higher powers. For example, the coefficients of the primitive polynomial are represented in binary numbers, and the N first m-sequences are arranged according to the ascending order of the binary numbers corresponding to the primitive polynomial. For example, the N first m-sequences are arranged according to descending order of the binary numbers corresponding to the primitive polynomial.

In some embodiments, N first m-sequences are first arranged according to a specific rule, and then assigned numbers to form N first m-sequences with a numbered sequence 0,1,2,···,N-1.

Illustratively, the N first m-sequences are first arranged in ascending order based on the binary numbers corresponding to the primitive polynomial, and then numbers are assigned to them. Then, the binary number corresponding to the first m-sequence with number 0 is the smallest among all the binary numbers corresponding to these N first m-sequences, and the binary number corresponding to the first m-sequence with number N-1 is the largest among all the binary numbers.

In some embodiments, N first m-sequences are first assigned numbers, and then arranged according to a specific rule. Therefore, the resulting sequence of numbers for the N first m-sequences may be scrambled, such as not being in the order from 0 to N-1.

Illustratively, the network device indicates the sequence of numbers for N first m-sequences is 2,0, *N* -1···,1, which means that the first m-sequence with the number 2 is ranked first among the N first m-sequences, and the first m-sequence with the number 1 is ranked N^{th} among the N first m-sequences.

In some embodiments, the design of the numbering order can be understood as a situation where the first m-sequence has both logical and physical numbers. The logical number refers to the order of the numbering of the first m-sequence in terms of data logic, which can be understood as the numbering 0,1,2···, *N* -1 in the embodiments of the present disclosure, or simply as the numbering 1,2···, *N* ; the physical number refers to the position of the numbering of the first m-sequence in the memory, or in an agreed mapping relationship, which can be understood as the numbering order in the embodiments of the present disclosure (for example 2,0, *N* -1···,1).

In the case where the numbering order of the N first m-sequences is arranged in ascending order according to their values, it can be understood that the logical number of the first m-sequence is the same as its physical number.

In the case where the numbering order of the N first m-sequences is not arranged in ascending order according to their numerical values, it can be understood that the logical numbering of the first m-sequences is different from their physical numbering. The reason why the numbering order of the N first m-sequences may be disrupted is due to the consideration of the correlation between the m-sequences. For example, by changing the numbering order of the first m-sequences, first m-sequences with good correlation can be arranged adjacently. In the case where the network device determines the first sequence by configuring the first start information, it is easy to make the preamble sequence set corresponding to one cell have good correlation. By appropriately configuring the X first m-sequences corresponding to different adjacent cells (for example, indicating different first start information to different cells) by the network device, the preamble sequence sets corresponding to adjacent cells can also have good correlation. In addition, data storage may be affected by factors such as memory allocation methods and memory management of the operating system. The numbering order of the N first m-sequences may need to be adjusted based on the storage situation. Therefore, there is a possibility of adjusting the numbering order of the N first m-sequences, i.e. adjusting the physical numbering of the first m-sequences, based on the actual condition.

In simple terms, the numbering order involved in the present disclosure can be understood as either a logical sequence or a physical sequence, and it supports adjustments based on factors such as the actual condition, the communication requirement, and the convention of the communication protocol.

**Next, we will introduce how to determine, indicate, or select X first m-sequences from the N first m-sequences mentioned above.**

In some embodiments, the X first m-sequences are randomly selected by the terminal device from the N first m-sequences. Alternatively, the X first m-sequences are the default first m-sequences in the N first m-sequences, such as default first m-sequence with the number of 1 (or other values), or default first m-sequence that is arranged last (or in other positions), or default first m-sequence with the even number, and so on.

In some embodiments, X first m-sequences are indicated by the network device. Illustratively, the network device indicates the numbers of the X first m-sequences over signaling. The signaling may be one or more of system information, RRC signaling, media access control (MAC) control element (CE), downlink control information (DCI), or the like.

**Considering the value of X, we will proceed to discuss the determination methods of X first m-sequences in two distinct cases.**

### 1. The case of X=1

In the case where X=1, it implies that the first sequence corresponding to one cell is generated based on one basic m-sequence.

In some embodiments, the first m-sequence is determined or selected based on the cell identifier of the terminal device. Illustratively, the number of the first m-sequence used to generate the first sequence is determined based on the cell identifier of the terminal device. Here, the number of the first m-sequence refers to its index in the N first m-sequences.

In some embodiments, the number of the first m-sequence used to generate the first sequence is equal to the cell identifier of the terminal device. For example, the cell identifier of the terminal device is 5, the first m-sequence in the first sequence is the first m-sequence with the number 5 in the N first m-sequences.

In some embodiments, the number of the first m-sequence used to generate the first sequence is determined based on the mathematical operation result of the cell identifier of the terminal device.

Illustratively, the number of the first m-sequence used to generate the first sequence is equal to the modulo result of the cell identifier of the terminal device and N. Here, N represents the number of N first m-sequences, which is determined by the stage number r of the shift register. The value of N can be equal to or less than the upper limit of the number of primitive polynomials. Illustratively, the cell identifier of the terminal device is 16 and the stage number r=6, then a maximum of 6 primitive polynomials can be generated. Let N take the value of 6, 16 mod 6 = 4 , then the first m-sequence used to generate the first sequence is the first m-sequence numbered 4 in the N first m-sequences.

Illustratively, the number of the first m-sequence used to generate the first sequence is equal to an integer multiple of the cell identifier of the terminal device, or equal to the ceiling of the quotient of the cell identifier of the terminal device and N, or equal to the floor of the quotient of the cell identifier of the terminal device and N, or the like.

In some embodiments, the network device indicates the number of the first m-sequence used to generate the first sequence, or the communication protocol specifies the number of the first m-sequence used to generate the first sequence.

### 2. The case of X > 1

In the case where X > 1, it implies that the first sequence corresponding to one cell is generated based on a plurality of basic m-sequences.

In some embodiments, X first m-sequences are determined based on the first sequence information. Optionally, at least part of the information in the first sequence information is indicated by the network device, and/or at least part of the information is defined in the communication protocol, and/or at least part of the information is determined by the terminal device.

In some embodiments, the first sequence information includes at least one of the following information:
·first start information, used to indicate the start position of X first m-sequences in the N first m-sequences;
· first length information, used to indicate the value of X;
·first end information, used to indicate the end position of X first m-sequences in the N first m-sequences;
·the first bit bitmap, where bits are one-to-one corresponding to the N first m-sequences;
·the number(s) of X first m-sequence;
·the total number of sequences in the first sequence S;
·the number of the preamble sequence transmitted by the terminal device in the first sequence;
·the cyclic shift step *N_{CS}* , also referred to as the cyclic shift factor;
·the numbering order of N first m-sequences; or
·the cyclic offset C.

Here, the first sequence can be understood as the preamble sequence set corresponding to the cell where the terminal device is located.

In some embodiments, the first sequence information includes the first start information and the first length information. Alternatively, the first sequence information includes the first start information, the first length information, and the numbering order of the N first m-sequences. For example, N=9, the communication protocol specifies the numbering order of the N first m-sequences as 0,1,2···,8. The network device indicates that the first start information is 2 and the first length information is 3. Consequently, the X first m-sequences include the first m-sequences numbered 2, 3, and 4. This approach requires fewer indication bits, facilitating the determination of consecutive X first m-sequences.

In some embodiments, the first start information and the first length information can also be represented by an encoded value, such as the start and length indicator value (SLIV).

In some embodiments, the first sequence information includes the first start information and the first end information. Alternatively, the first sequence information includes the first start information, the first end information, and the numbering order of the N first m-sequences. For example, N=9, the network device indicates the numbering order of the N first m-sequences as 2,6,5,7,1,3,8,4,0 . The communication protocol specifies that the first start information is equal to 3, while the terminal device autonomously determines that the first end information=7. Thus, the X first m-sequences include the first m-sequences with numbers 5, 7, 1, 3, and 8. This approach requires fewer indication bits, facilitating the determination of consecutive X first m-sequences.

In some embodiments, the first sequence information includes the first length information and the first end information. Alternatively, the first sequence information includes the first length information, the first end information, and the numbering order of the N first m-sequences. For example, N=8, and the terminal device autonomously determines the numbering order of the N first m-sequences as 3,7,1,0,5,6,4,2. The network device indicates that the first length information=3 and the first end information=7. Then, the X first m-sequences include the first m-sequences numbered 5, 6, and 4. This approach requires fewer indication bits, facilitating the determination of consecutive X first m-sequences.

In some embodiments, the first sequence information includes the number(s) of X first m-sequence. For example, the network device indicates to the terminal device that the numbers of the X first m-sequences are 2, 6, and 9, then the terminal device generates the first sequence based on the first m-sequences with numbers 2, 6, and 9.

In some embodiments, the first sequence information includes the first bit bitmap. Alternatively, the first sequence information includes the first bit bitmap and the numbering order of N first m-sequences. In the case where the bit value is set to a first value, it is indicated that the first m-sequence corresponding to that bit is indicated as one of the X first m-sequences. In the case where the bit value is set to a second value, it is indicated that the first m-sequence corresponding to that bit is not indicated as one of the X first m-sequences. Here, the first value is "1" and the second value is "0", or the first value is "0" and the second value is "1". The first value and the second value can also be other numerical values. In the embodiments of the present disclosure, the first value is set to "1" and the second value is set to "0" for illustrative purposes. For example, N=6, and the communication protocol specifies the numbering order of the N first m-sequences as 1,0,5,4,2,3, the first bit bitmap transmitted by the network device includes 6 bits, which correspond one-to-one from the least significant bit to the most significant bit to the N first m-sequences. Assuming that the value of the first bit bitmap is 001101, it implies that the X first m-sequences include the first m-sequences numbered 5, 4, and 3. Through the first bit bitmap, the discrete X first m-sequences can be determined, which provides better flexibility but may require more bits for indication.

In some embodiments, the first sequence information includes the cyclic shift step *N_{CS}* and the numbering order of N first m-sequences. Alternatively, the first sequence information includes the cyclic shift step *N_{CS}* and first start information. Alternatively, the first sequence information includes first start information and the numbering order of N first m-sequences.

In some embodiments, the first sequence information includes the first start information, the cyclic shift step *N_{CS}* , and the numbering order of N first m-sequences. Alternatively, the first sequence information includes the first start information, the cyclic shift step *N_{CS}* , and the total number of sequences in the first sequence. Alternatively, the first sequence information includes the first start information, the numbering order of N first m-sequences, and the total number of sequences in the first sequence. Alternatively, the first sequence information includes the cyclic shift step *N_{CS}* , the numbering order of N first m-sequences, and the total number of sequences in the first sequence.

In some embodiments, the first sequence information includes the first start information, the cyclic shift step *N_{CS}* , the numbering order of N first m-sequences, and the total number of sequences in the first sequence.

Illustratively, the first m-sequence with the given number u is determined based on the first start information. Assuming the length of the first m-sequence with the given number u is L, the cyclic offset C is determined based on the cyclic shift step ${N}_{CS} . \left⌊L/{N}_{CS}\right⌋$ m-sequences (including the first m-sequence with the given number u itself) are determined by performing, based on the determined cyclic offset C, the cyclic shift on the first m-sequence with the given number u. It is determined whether $\left⌊L/{N}_{CS}\right⌋$ is less than the total number of sequences in the first sequence S. If $\left⌊L/{N}_{CS}\right⌋ < S$, it is indicated that the first sequence has not been constructed completely. If $\left⌊L/{N}_{CS}\right⌋ \geq S$, it is indicated that the first sequence has been constructed completely, and the X first m-sequences include the first m-sequence with the given number u. Taking $\left⌊L/{N}_{CS}\right⌋ < S$ as an example, the first m-sequence with the given number d that follows the first m-sequence with the given number u is determined based on the numbering order of the N first m-sequences. Assuming the length of the first m-sequence with the given number d is also L, $\left⌊L/{N}_{CS}\right⌋$ m-sequences (including the first m-sequence with the given number d itself) are acquired by similarly performing, based on the determined cyclic offset C, the cyclic shift on the first m-sequence with the given number d. It is determined whether is less than the total number of sequences in the first sequence S. If $2 * \left⌊L/{N}_{CS}\right⌋ < S$, it is indicated that the first sequence has not been constructed completely, and the cyclic shift is continually performed on the first m-sequence that follows the first m-sequence with the given number d. The above processes are repeated until the total number of m-sequences acquired after cyclic shifting is equal to the total number of sequences in the first sequence S. If $2 * \left⌊L/{N}_{CS}\right⌋ \geq S$, it is indicated that the first sequence has been constructed completely, and the X first m-sequences include the first m-sequences with the given numbers u and d.

In the embodiments of the present disclosure, an example is provided for illustrative purposes where the lengths of N first m-sequences are all equal. Therefore, the lengths of the X first m-sequences used to generate the first sequence are also all equal. This does not mean that the case where the lengths of N first m-sequences are not equal is excluded.

Optionally, the network device indicates to the terminal device: the first start information, the cyclic shift step *N_{CS}.* The numbering order of the N first m-sequences, and the total number of sequences in the first sequence S are defined in the communication protocol.

Optionally, the network device indicates to the terminal device: the first start information, the cyclic shift step *N_{cs},* the numbering order of N first m-sequences, the total number of sequences in the first sequence S.

Optionally, the network device indicates to the terminal device: the first start information, the numbering order of N first m-sequences. The cyclic shift step *N_{CS}* and the total number of sequences in the first sequence S are defined in the communication protocol.

Optionally, the network device indicates to the terminal device: the first start information. The cyclic shift step *N_{CS}* and the total number of sequences in the first sequence S are defined in the communication protocol. The numbering order of the N first m-sequences is determined by the terminal device.

Optionally, the network device indicates to the terminal device: the first start information. The total number of sequences in the first sequence S is defined in the communication protocol. The cyclic shift step *N_{CS}* and the numbering order of the N first m-sequences are determined by the terminal device.

Illustratively, the communication protocol defines that *N_{CS}* = 2, and that the first sequence corresponding to one cell includes a total of S = 64 sequences. The network device indicates that the numbering order of the N first m-sequences is 3,7,1,0,5,6,4,2. Assuming that the length of each of the N first m-sequences is L=63, the network device indicates that the first start information=2. Subsequent to receiving the network device's indication, the terminal device determines the first m-sequence with the number 7 based on the first start information. Subsequent to performing the cyclic shift on the first m-sequence with the number 7, a total of $\left⌊L/{N}_{CS}\right⌋ = \left⌊63/2\right⌋ = 31$ m-sequences (including the first m-sequence with the number 7 itself) is acquired, wherein 31 is obviously less than 64. Then, based on the numbering order of the N first m-sequences, the first m-sequence with the number 1 is determined. Subsequent to performing the cyclic shift on the first m-sequence with the number 1, 31 m-sequences (including the first m-sequence with the number 1 itself) are also acquired, wherein 31*2 is obviously less than 64. Repeating the above processes, the first m-sequence with the number 0 is subjected to one cyclic shift, resulting in two m-sequences (including the first m-sequence with the number 0 itself), which makes 31*2+2=64. Therefore, the X first m-sequences include the first m-sequences with the numbers 7, 1, and 0. The Y second m-sequences include all the second m-sequences of the first m-sequences with the numbers 7 and 1, as well as one second m-sequence of the first m-sequence with the number 0.

The above example involves determining the cyclic offset C based on the cyclic shift step *N_{CS}.* Equation (9) below exemplifies one design:
$C = {νN}_{CS} , ν = 0 , 1 ⋯ , \left⌊L/{N}_{CS}\right⌋ - 1$ (9)

In some embodiments, the cyclic shift step *N_{CS}* is defined in the communication protocol, and/or indicated by the network device, and/or determined by the terminal device. For example, the cyclic shift step *N_{CS}* is associated with the cell radius, which can also be understood as the cyclic shift step *N_{CS}* is associated with the coverage radius of the network device, and the terminal device determines the cyclic shift step *N_{CS}* based on the cell radius. For example, the cyclic shift step *N_{CS}* is associated with the cell identifier, and the terminal device determines the cyclic shift step *N_{CS}* based on the cell identifier.

In some embodiments, the first sequence information includes the first start information, the cyclic shift offset C, the numbering order of N first m-sequences, and the total number of sequences in the first sequence S. The principle of this case is similar to the previous case where "the first sequence information includes the first start information, the cyclic shift step *N_{cs},* the numbering order of N first m-sequences, and the total number of sequences in the first sequence S". The difference lies in that the cyclic shift offset C does not need to be determined by the cyclic shift step *N_{cs},* but can be directly determined based on the first sequence information.

In some embodiments, the first sequence information includes the first start information, a cyclic offset set, the numbering order of N first m-sequencesS, and the total number of sequences in the first sequence S. The reason why the first sequence information includes the cyclic offset set is that the number of second m-sequences that can be generated by the first m-sequences affects the number of first m-sequences in the first sequence. If the first m-sequences are supported to undergo cyclic shifts through more cyclic offsets, then the number of first m-sequences required to form the first sequence will be fewer. Optionally, different cyclic offset sets can be configured for different first m-sequences to achieve more flexible cyclic shifts.

### Regarding Y second m-sequences:

Subsequent to acquiring X first m-sequences according to the above method, Y second m-sequences can be determined by combining the cyclic shift step *N_{CS}.* For example, the length of the first m-sequence is L, based on the cyclic shift step *N_{cs},* one first m-sequence can generate up to $\left⌊L/{N}_{CS}\right⌋ - 1$ second m-sequences. Therefore, X first m-sequences can generate up to $X * \left(\left⌊L/{N}_{CS}\right⌋-1\right)$ second m-sequences. $Y = X * \left(\left⌊L/{N}_{CS}\right⌋-1\right)$ or $Y < X * \left(\left⌊L/{N}_{CS}\right⌋-1\right)$.

The reason for this situation $Y < X * \left(\left⌊L/{N}_{CS}\right⌋-1\right)$ is that the total number of sequences in the first sequence, denoted as S, may be indicated by the network device or defined in the communication protocol, while the cyclic shift step *N_{CS}* is determined autonomously by the terminal device. For example, the communication protocol specifies S=63 and the network device indicates X=6, if $X * \left(\left⌊L/{N}_{CS}\right⌋-1\right) = 66$, then *Y* = 57 < 66 .

Regardless of whether the first sequence information is indicated by the network device, defined in the communication protocol, or determined by the terminal device, in the case where the first sequence information includes the total number of sequences in the first sequence S, the terminal device should ensure X+Y=S when acquiring the first sequence.

In some embodiments, the value of Y is defined in the communication protocol, configured by the network device, or determined autonomously by the terminal device. Illustratively, the value of Y is adjusted by the network device or terminal device based on one or more factors such as the capabilities of the terminal device, the capabilities of the network device, the capacity of the communication system, communication requirements, the total number of cell identifiers, and the number of terminal devices within the same cell.

**Subsequent to determining X first m-sequences and Y second m-sequences, the first sequence can be generated. Next, we will introduce the sequence arrangement within the first sequence.**

In some embodiments, the first sequence is generated based on X first m-sequences and Y second m-sequences. That is, in the binary sequence used to generate the first sequence, the number of first m-sequences is X, and the number of second m-sequences is Y. Here, X is an integer greater than or equal to 0, Y is an integer greater than or equal to 0, and X and Y cannot be 0 simultaneously. It can also be understood that the first sequence corresponding to the cell where the terminal device is located is generated by X first m-sequences and several shift sequences thereof.

### The arrangement of X first m-sequences within the first sequence:

In some embodiments, the numbering order of the X first m-sequences corresponding to the first sequence follows its numbering order in the N first m-sequences. That is, the numbering order of the X first m-sequences when generating the first sequence is the same as the numbering order of the X first m-sequences in the N first m-sequences. For example, the numbering order of the N first m-sequences is 5,1,0,4,3,2,7,8,6, the X first m-sequences include the first m-sequences numbered 4, 3, 2, and 7, then when generating the first sequence, the X first m-sequences are still arranged in the numbering order of 4, 3, 2, and 7.

In some embodiments, the numbering order of the X first m-sequences corresponding to the first sequence is determined based on at least one of: the coefficients of the corresponding primitive polynomial, the binary numbers of the coefficients of the corresponding primitive polynomial, or the numerical values of the numbers of the first m-sequences.

In some embodiments, the numbering order of the X first m-sequences corresponding to the first sequence is either default, random, arranged according to a specific rule, defined by a communication protocol, or indicated by a network device.

In some embodiments, the numbering order of the X first m-sequences corresponding to the first sequence is different from the numbering order of these X first m-sequences in the N first m-sequences. For example, these X first m-sequences are arranged in ascending order of their number values, or in descending order of their number values, or in a sequence in which the coefficients of the primitive polynomial are from lower powers to higher powers, or in a sequence in which the coefficients of their primitive polynomial are from higher powers to lower powers, or in descending order of the binary numbers of the primitive polynomial, or in ascending order of the binary numbers of the primitive polynomial, and so on. Illustratively, the numbering order of the N first m-sequences is 5,1,0,4,3,2,7,8,6 , the X first m-sequences include the first m-sequences numbered 4, 3, 2, and 7, then the X first m-sequences in the first sequence are arranged in the numbering order of 2, 3, 4, and 7.

### The arrangement of Y second m-sequences within the first sequence:

In some embodiments, the numbering order of the Y second m-sequences within the first sequence is either default, random, arranged according to a specific rule, defined by a communication protocol, or indicated by a network device.

In some embodiments, the numbering order of these Y second m-sequences in the first sequence is determined based on at least one of: the cyclic offset, the numbering order of corresponding first m-sequences, the coefficients of corresponding primitive polynomial, the binary numbers of the coefficients of the corresponding primitive polynomial, or the numerical values of the numbers of the second m-sequences.

In some embodiments, the Y second m-sequences are numbered in the first sequence first according to the numbering order of corresponding first m-sequences, and then arranged according to the ascending order of the cyclic offsets. Alternatively, they are first arranged according to the numbering order corresponding first m-sequences, and then arranged according to the descending order of the cyclic offsets. Illustratively, the Y second m-sequences include: *y*₁ second m-sequences acquired by performing the cyclic shift based on the first m-sequence numbered *H*₁, *y*₂ second m-sequences acquired by performing the cyclic shift based on the first m-sequence numbered *H*₂, and *y*₃ second m-sequences acquired by performing the cyclic shift based on the first m-sequence numbered *H*₃ , wherein *H*₁ < *H*₂ < *H*₃. Therefore, the arrangement order of the Y second m-sequences is: the *y*₁ second m-sequence arranged according to the ascending order of the cyclic offsets, the *y*₂ second m-sequence arranged according to the ascending order of the cyclic offsets, and the *y*₃ second m-sequence arranged according to the ascending order of the cyclic offsets, wherein *y*₁ , *y*₂ and *y*₃ are equal, or *y*₁, *y*₂ and *y*₃ are not equal.

In some embodiments, the numbering order of these Y second m-sequences in the first sequence is first arranged according to the coefficients of the corresponding primitive polynomial from higher powers to lower powers, and then arranged according to the ascending order of the cyclic offsets. Alternatively, it is first arranged according to the coefficients of the corresponding primitive polynomial from higher powers to lower powers, and then arranged according to the descending order of the cyclic offsets. It is first arranged according to the coefficients of the corresponding primitive polynomial from lower powers to higher powers, and then arranged according to the ascending order of the cyclic offsets. Alternatively, it is first arranged according to the coefficients of the corresponding primitive polynomial from lower powers to higher powers, and then arranged according to the descending order of the cyclic offsets.

In some embodiments, the numbering order of these Y second m-sequences in the first sequence is first arranged according to the ascending order of the binary numbers of the coefficients of the corresponding primitive polynomial, and then arranged according to the ascending order of the cyclic offsets. Alternatively, it is first arranged according to the ascending order of the binary numbers of the coefficients of the corresponding primitive polynomial, and then arranged according to the descending order of the cyclic offsets. It is first arranged according to the descending order of the binary numbers of the coefficients of the corresponding primitive polynomial, and then arranged according to the ascending order of the cyclic offsets. Alternatively, it is first arranged according to the descending order of the binary numbers of the coefficients of the corresponding primitive polynomial, and then arranged according to the descending order of the cyclic offsets.

In some embodiments, the values for the numbers of Y second m-sequences are 1,2···,*Y* , or 0,1,2···,*Y* -1, and so on. Other numbering schemes that can distinguish between various first m-sequences are also applicable to the embodiments of the present disclosure.

### The arrangement of X first m-sequences and Y second m-sequences within the first sequence:

In some embodiments, in the first sequence, X first m-sequences are first arranged, then Y second m-sequences are arranged, wherein the Y second m-sequences are arranged after the X first m-sequences. For example, assuming that the X first m-sequences are represented as *M*_{1,1}, *M*_{1,2} ··· *, M*_{1*,*X} , and the Y second m-sequences are represented as *M*_{2,1}, *M*_{2,2} ··· , *M*_{2,Y} , then the arrangement order of the m-sequences in the first sequence is *M*_{1,1}, *M*_{1,2} ··· *, M*_{1,X}, *M*_{2,1}, *M*_{2,2} ··· ,*M*_{2,Y} or *M*_{1,X}, *M*_{1,X-1} ··· , *M*_{1,1}, *M*_{2,Y}, *M*_{2,Y-1} ··· , *M*_{2,1}.

In some embodiments, Y second m-sequences are arranged first within the first sequence, then X first m-sequences are arranged, wherein the Y second m-sequences are followed by the X first m-sequences.

In some embodiments, X first m-sequences and Y second m-sequences are arranged in a crosswise manner. Illustratively, within the first sequence, the X first m-sequences are arranged first (which can be arranged according to binary numbers and/or coefficients of primitive polynomial and/or numerical values, as described earlier), and each second m-sequence is arranged after its corresponding first m-sequence in ascending order of cyclic offsets. Alternatively, within the first sequence, X first m-sequences are arranged first, and each second m-sequence is arranged after its corresponding first m-sequence in descending order of cyclic offsets. Illustratively, assuming that X first m-sequences are represented as *M*_{1,0} , *M*_{2,0}, *M*_{3,0}, and each first m-sequence generates two second m-sequences, the second m-sequences corresponding to *M*_{1,0} are represented as *M*_{1,1}, *M*_{1,2}, the second m-sequences corresponding to *M*_{2,0} are represented as *M*_{2,1}, *M*_{2,2} , the second m-sequences corresponding to *M*_{3,0} are represented as *M*_{3,1}, *M*_{3,2} , then the arrangement order of the m-sequences within the first sequence is *M*_{1,0}, M_{1*,*1}, *M*_{1,2}, *M*_{2,0}, *M*_{2,1}, *M*_{2,2}, *M*_{1,1}, *M*_{3,1}, *M*_{3,2}. That is, after each first m-sequence, its corresponding second m-sequence is arranged immediately.

After sorting the X first m-sequences and/or Y second m-sequences based on the aforementioned method, the first sequence of the corresponding required quantity (such as S) can be acquired. The number of each sequence within the first sequence can correspond to the number of the preamble sequence, that is, the numbers of sequences within the first sequence are one-to-one corresponding to the numbers of the preamble sequences. For example, the m-sequence numbered 0 within the first sequence corresponds to the preamble sequence numbered 0; the m-sequence numbered 1 within the first sequence corresponds to the preamble sequence numbered 1; and so on. Similarly, the m-sequence numbered 0 within the first sequence corresponds to the preamble sequence numbered 1; the m-sequence numbered 1 within the first sequence corresponds to the preamble sequence numbered 2; and so on.

The rules for the numbering order of X first m-sequences and Y second m-sequences can be the same or different. For example, both the first m-sequences and the second m-sequences are arranged according to their numerical values. For instance, the first m-sequences are arranged according to the coefficients of the primitive polynomial, while the second m-sequences are arranged according to their cyclic offsets. Other possibilities can be found in the previous content and will not be elaborated here.

The range of values for the numbers of X first m-sequences can be completely or partially identical to, or completely different from, the range of values for the numbers of Y second m-sequences. For reference, see the relevant content in Method 2 below, "First, introduce the design of the m-sequence set.".

By the method 1, we can determine the first sequence corresponding to one cell. However, whether it is feasible for different cells to use the same first sequence is open to further discussion.

In some cases, terminal devices within different cells are configured with different time-frequency resources, which can support the same or partially identical first sequences corresponding to different cells. For example, the time-frequency resources configured for transmitting preamble sequences in cell 1 are different from those configured in cell 2, then the first sequence corresponding to cell 1 and the first sequence corresponding to cell 2 can be completely identical or partially identical. Especially when the distance between cell 1 and cell 2 is relatively large, the mutual interference problem between the two cells is not severe, so it is possible to support the use of the same first sequence in both cells. In the case where cell 1 and cell 2 are close or even adjacent, there may be mutual interference between the two cells. If the time-frequency resource locations configured for preamble transmission in these two cells are completely different, then it is possible to support the use of completely identical or partially identical first sequence in both cells. In the case where the time-frequency resource locations configured for preamble transmission in these two cells are overlapped, then it is possible to support the use of partially identical or even completely different first sequences in both cells.

In some cases, terminal devices within different cells are configured with the same time-frequency resources, it is supported that different cells correspond to completely different or partially identical first sequences. For example, the time-frequency resources configured for transmitting preamble sequences in cell 3 are overlapped with those configured in cell 4, then the first sequence corresponding to cell 3 and the first sequence corresponding to cell 4 can be partially identical or completely different. Especially when the distance between cell 3 and cell 4 is relatively large, the mutual interference between the two cells is not severe, allowing the two cells to adopt partially identical or even completely identical first sequences. When cell 3 and cell 4 are close or even adjacent, there may be mutual interference between the two cells. In the case where the time-frequency resource locations configured for preamble transmission in these two cells are completely identical, then the two cells can adopt completely different first sequences. In the case where the time-frequency resource locations configured for preamble transmission in these two cells are overlapped, then the two cells can adopt partially identical or completely different first sequences.

Whether different cells use the same first sequence, combined with the generation of the first m-sequence and the second m-sequence, there can be the following three scenarios:
1. Different cells correspond to the same first m-sequence and the same second m-sequence. For example, this can be achieved by indicating the same first sequence information for different cells, or by specifying in the communication protocol that different cells use the same first sequence information.
2. Different cells correspond to the same first m-sequence and different second m-sequences, which means that different cells correspond to the same basic m-sequence but different shift sequences. For example, this can be achieved by assigning different first sequence information to different cells. Illustratively, the network device indicates the same first start information, and the communication protocol specifies that the cyclic shift steps corresponding to different cells are different. Therefore, the second m-sequences corresponding to different cells are naturally different. Illustratively, the communication protocol specifies that different cells use the same basic m-sequence, and the network device indicates the cyclic shift steps for different cells respectively, or the terminal device autonomously determines the cyclic shift steps. Therefore, the second m-sequences corresponding to different cells are naturally different.
3. Different cells correspond to different first m-sequences and different second m-sequences. That is, different cells correspond to different basic m-sequences. For example, this is achieved by assigning different first sequence information to different cells. Illustratively, the network device indicates different first start information to different cells, such that different cells use different basic m-sequences. The communication protocol specifies the cyclic shift steps corresponding to different cells. Regardless of whether different cells use the same cyclic shift step, since the first m-sequences used by the cells are different, the second m-sequences acquired through cyclic shift will naturally not be exactly the same. Illustratively, the network device indicates different first start information and different cyclic shift steps to different cells, such that different cells correspond to different basic m-sequences and second m-sequences. Another example is that the basic m-sequences corresponding to different cells are determined based on the cell identifiers or the operation results of the cell identifiers, so different cells can naturally correspond to different first m-sequences and second m-sequences.

**Next, we introduce the method 2, which involves generating the first sequence corresponding to one cell based on an m-sequence subset.**

The m-sequence subset is a subset of the m-sequence set. The m-sequence set includes the first m-sequence and/or the second m-sequence.

In some embodiments, the m-sequence set includes the first m-sequence and the second m-sequence, and the m-sequence subset includes the first m-sequence and/or the second m-sequence.

In some embodiments, within the m-sequence set, the number of the first m-sequences is determined based on the stage number r of the shift register, and the number of the second m-sequences is determined based on the cyclic shift step. The relationship between the stage number r and the number of the first m-sequences can be referred to Table 1 illustrated previously. The number of the second m-sequences can be referred to the content in the "Related concepts of cyclic shift" previously mentioned.

In some embodiments, the number of m-sequences within the m-sequence set is determined based on the stage number of the shift register and the cyclic shift step.

In some embodiments, the m-sequence subset is a subset of the m-sequence set. Optionally, the m-sequence subset can be any subset of the m-sequence set. It can be understood that any set is a subset of itself, therefore, the m-sequence subset can also be the m-sequence set itself. Optionally, the m-sequence subset is a subset selected from the m-sequence set according to a specific rule. Optionally, the m-sequence subset is a default subset of the m-sequence set in the communication system.

In some embodiments, the m-sequence subset is determined or selected by the terminal device from the m-sequence set. Alternatively, the m-sequence subset is indicated by the network device.

Next, we will first introduce the design of the m-sequence set, and then explain how the m-sequence subset is determined, selected, or indicated.

**Firstly, the design of the m-sequence set is introduced.**

It can be understood that, for ease of distinction, each m-sequence within the m-sequence set should have a one-to-one corresponding number or index. The embodiment of the present disclosure uses number as an example for illustration.

Considering that the m-sequence set may contain both the first m-sequence and the second m-sequence, two numbering methods are provided here:
1. The numbers do not distinguish between the first m-sequences and the second m-sequences. Assuming that the m-sequence set includes a total of W m-sequences, then the m-sequence set corresponds to a total of W numbers, with each number corresponding to one m-sequence.
2. The numbers distinguish between the first m-sequences and the second m-sequences. Assuming that the m-sequence set includes a total of W m-sequences, including *W*₁ first m-sequences and *W*₂ second m-sequences, *W = W*₁ *+ W*₂, then the number of each m-sequence consists of two parts. One part is used to distinguish between the first m-sequences and the second m-sequences, and the other part is used to indicate the number within the first m-sequences or the second m-sequences. For example, a third value is used to indicate belonging to the first m-sequence, and *W*₁ first m-sequences correspond to *W*₁ numbers; a fourth value is used to indicate belonging to the second m-sequence, and *W*₂ second m-sequences correspond to *W*₂ numbers. The third value and the fourth value are any two different integers. Here, the third value is 1 and the fourth value is 0 as an example. The numbering rules for the *W*₁ numbers corresponding to the *W*₁ first m-sequences and the *W*₂ numbers corresponding to the *W*₂ second m-sequences can be the same or different, and the range of values for the numbers can also be the same or different. For example, the numbering of the *W*₁ first m-sequences is 1□*W*₁ , and the numbering of the *W*₂ second m-sequences is 1□ *W*₂. Then, the number "1-1" indicates the first m-sequence with the number 1 in the *W*₁ first m-sequences, the number "0-1" indicates the second m-sequence with the number 1 in the *W*₂ second m-sequences, the number "1-*W*₁" indicates the first m-sequence with the number *W*₁ in the *W*₁ first m-sequences, and the number "0-W₂ " indicates the second m-sequence with the number *W*₂ in the *W*₂ second m-sequences.

The numbering order of m-sequences within the m-sequence set:
In some embodiments, all m-sequences within the m-sequence set are first arranged according to a specific rule, and then assigned numbers to form W m-sequences with a numbering order of 0,1, 2..., *W* -1. Alternatively, all m-sequences within the m-sequence set are first randomly arranged, and then assigned numbers to form W m-sequences with a numbering order of 0,1,2···,*W* -1.

In some embodiments, all m-sequences within the m-sequence set are first assigned numbers, and then arranged according to a specific rule. Alternatively, all m-sequences within the m-sequence set are first assigned numbers, and then randomly arranged. Therefore, the final m-sequence set may have a scrambled numbering order, rather than a sequential numbering from 0 to *W* -1.

In some embodiments, the numbering order of m-sequences within the m-sequence set is either default, random, arranged according to a specific rule, defined by a communication protocol, or indicated by a network device.

Illustratively, each m-sequence within the m-sequence set has a one-to-one corresponding number, and the numbering order of the m-sequences within the m-sequence set is arranged in ascending order of the numerical values of the numbers, or alternatively, in descending order of the numerical values of the numbers.

In some embodiments, the numbering order of the first m-sequences within the m-sequence set is determined based on at least one of: the coefficients of the corresponding primitive polynomial, the binary numbers of the coefficients of the corresponding primitive polynomial, or the values of the numbers of the first m-sequences.

In some embodiments, the first m-sequences within the m-sequence set are arranged in ascending order of their respective sequence numbers, or alternatively, in descending order of their respective sequence numbers.

In some embodiments, the numbering order of the first m-sequences within the m-sequence set is arranged according to the coefficients of the primitive polynomial used to generate the first m-sequence. For example, all the first m-sequences are arranged in the order of the coefficients of the primitive polynomial, from higher powers to lower powers. For another example, all the first m-sequences are arranged in the order of the coefficients of the primitive polynomial, from lower powers to higher powers.

In some embodiments, the numbering order of the first m-sequences within the m-sequence set is arranged according to the binary numbers of the coefficients of the corresponding primitive polynomial. For example, the coefficients of the primitive polynomial are represented in binary numbers, and all the first m-sequences are arranged according to the ascending order of the binary numbers corresponding to the primitive polynomial. For another example, all the first m-sequences are arranged according to the descending order of the binary numbers corresponding to the primitive polynomial.

In some embodiments, the numbering order of the second m-sequences within the m-sequence set is determined based on at least one of: the cyclic offset, the numbering order of the corresponding first m-sequences, coefficients of corresponding primitive polynomial, binary numbers of the coefficients of the corresponding primitive polynomial, or the values of the numbers of the second m-sequences.

In some embodiments, the second m-sequences within the m-sequence set are arranged in ascending order of their respective sequence numbers, or in descending order of their respective sequence numbers.

In some embodiments, the second m-sequences within the m-sequence set are arranged in numerical order based on their cyclic offsets. For example, the second m-sequences are arranged in ascending order of their cyclic offsets. For another example, the second m-sequences are arranged in descending order of their cyclic offsets.

In some embodiments, within the m-sequence set, all first m-sequences are arranged first (which can be arranged according to binary numbers and/or coefficients of primitive polynomial and/or number values, as described earlier), then all second m-sequences are arranged (which can be arranged according to cyclic offsets and/or the numbering order of the first m-sequences and/or binary numbers and/or coefficients of primitive polynomial and/or number values, as described earlier). All second m-sequences are arranged after all first m-sequences. For example, assuming that all first m-sequences are represented as *M*_{1,1}, *M*_{1,2} ···, *M*_{1,X} , and all second m-sequences are represented as *M*_{2,1}, *M*_{2,2} ···, *M*_{1,12,Y} , then the arrangement order of the m-sequences in the m-sequence set is *M*_{1,1}, *M*_{1,2} ··· , *M*_{1,X}, *M*_{2,1}, *M*_{2,2} ···, *M*_{2,Y} or *M*_{1,X}, *M*_{1,X-1} ··· , *M*_{1,1}, *M*_{2,Y}, *M*_{2,Y-1} ··· , *M*_{2,1}.

In some embodiments, within the m-sequence set, all second m-sequences are arranged first (which may be arranged according to the cyclic offset and/or the numbering order of the first m-sequences and/or the binary numbers and/or the coefficients of the primitive polynomial and/or the values of the numbers, as described earlier), then all first m-sequences are arranged (which may be arranged according to the binary numbers and/or the coefficients of the primitive polynomial and/or the values of the numbers, as described earlier), wherein all second m-sequences are followed by all first m-sequences.

In some embodiments, within the m-sequence set, the first m-sequences and the second m-sequences are arranged in a cross manner. Illustratively, within the m-sequence set, X first m-sequences are arranged first (which can be arranged according to binary numbers and/or coefficients of primitive polynomial and/or numerical values, as described earlier), and each second m-sequence is arranged after its corresponding first m-sequence in the ascending order of cyclic offset. Illustratively, within the m-sequence set, X first m-sequences are arranged first, and each second m-sequence is arranged after its corresponding first m-sequence in the descending order of cyclic offsets. Illustratively, within the m-sequence set, X first m-sequences are arranged first, and each second m-sequence is arranged after its corresponding first m-sequence in the ascending order of numerical values. Illustratively, within the m-sequence set, X first m-sequences are arranged first, and each second m-sequence is arranged after its corresponding first m-sequence in the descending order of numerical values.

The rule for the numbering orders of the first m-sequences and the second m-sequences can be the same or different. For example, the first m-sequences and the second m-sequences are arranged according to their numerical values. For instance, the first m-sequences are arranged according to the coefficients of the primitive polynomial, while the second m-sequences are arranged according to the cyclic offsets. Other possibilities can be found in the previous content, which will not be elaborated here.

Next, we will introduce how the m-sequence subset is determined, selected, or indicated.

In some embodiments, the number of m-sequences within the m-sequence subset is pre-configured or determined by the communication protocol. Optionally, the number of the first m-sequence within the m-sequence subset is pre-configured or determined by the communication protocol. Optionally, the number of the second m-sequence within the m-sequence subset is pre-configured or determined by the communication protocol.

In some embodiments, the m-sequence subset is randomly selected by the terminal device from the m-sequence set. Alternatively, the m-sequence subset is a default subset of the m-sequence set. For example, the m-sequence subset is a default subset consisting of m-sequences with odd numbers, or a default subset consisting of m-sequences with numbers ranging from 1 to 64, or a default subset consisting of m-sequences arranged in the last few positions, and so on.

In some embodiments, the m-sequence set is divided into at least one m-sequence subset, and each m-sequence subset has a one-to-one corresponding set number.

In some embodiments, the m-sequence subset is indicated by the network device. Illustratively, the network device indicates the set number of the m-sequence subset over signaling. The signaling may be one or more of system information, RRC signaling, MAC CE, DCI, or the like.

In some embodiments, the m-sequence subset used to generate the first sequence is determined or selected based on the cell identifier of the terminal device. Illustratively, the set number of the m-sequence subset is determined based on the cell identifier of the terminal device.

In some embodiments, the set number of the m-sequence subset used to generate the first sequence is equal to the cell identifier of the terminal device. For example, the cell identifier of the terminal device is 20, the m-sequence subset used to generate the first sequence is the m-sequence subset with the set number 20 in the m-sequence set.

In some embodiments, the set number of the m-sequence subset used to generate the first sequence is determined based on the mathematical operation result of the cell identifier of the terminal device.

Illustratively, the m-sequence set is divided into x m-sequence subsets (x ≥ 1), and the set number of the m-sequence subset used to generate the first sequence is equal to the modulo result of the cell identifier of the terminal device and x. Illustratively, the cell identifier of the terminal device is 18 and the value of x is 5, 18 mod 5 = 3, then the m-sequence subset used to generate the first sequence is the m-sequence subset with the set number 3 in the m-sequence set.

Illustratively, the set number of the m-sequence subset used to generate the first sequence is equal to an integer multiple of the cell identifier of the terminal device, or equal to the rounded-up result of the quotient of the cell identifier of the terminal device and x, or equal to the rounded-down result of the quotient of the cell identifier of the terminal device and x, and so on.

Subsequent to sorting the m-sequences within the m-sequence set based on the aforementioned method, m-sequence subsets can be acquired. Based on the m-sequence subset and the total number of sequences in the first sequence S, the corresponding required number of first sequences can be determined. The first sequence includes all or part of the m-sequences in the m-sequence subset. The numbers of sequences in the first sequence can correspond to the numbers of the preamble sequences, that is, the numbers of sequences in the first sequence are one-to-one corresponding to the numbers of the preamble sequences. For example, the m-sequence with number 0 in the first sequence corresponds to the preamble sequence with number 0; the m-sequence with number 1 in the first sequence corresponds to the preamble sequence with number 1; and so on. Similarly, the m-sequence with number 0 in the first sequence corresponds to the preamble sequence with number 1; the m-sequence with number 1 in the first sequence corresponds to the preamble sequence with number 2; and so on.

Through the method 2, the sequence subset corresponding to one cell can be determined. Then, whether it is supported for different cells to use the same sequence subset is open for further discussion.

Similar to the method 1, the embodiments of the present disclosure support different cells corresponding to completely identical m-sequence subsets, partially identical m-sequence subsets, or completely different m-sequence subsets. Whether the m-sequence subsets are identical can be determined by comparing the set numbers, or by comparing the m-sequence numbers within the m-sequence subsets.

If different cells are assigned to different sequence subsets, different first sequences can be generated for different cells, enabling terminal devices within different cells to select preamble sequences from different first sequences, thereby minimizing preamble conflicts and interference issues between cells.

Illustratively, suppose that cell A corresponds to the m-sequence subset {0,2,4,6,8} with set number 2, indicating that the first sequence adopted by cell A includes m-sequences with sequence numbers 0, 2, 4, 6, and 8. Suppose that cell B corresponds to the m-sequence subset {1,5,7} with set number 5, indicating that the first sequence adopted by cell B includes m-sequences with sequence numbers 1, 5, and 7. It can be seen that the m-sequence subset corresponding to cell A is different from the m-sequence subset corresponding to cell B, and naturally, the first sequences generated based on different m-sequence subsets are also different. When terminal devices within cell A and terminal devices within cell B transmit preamble sequences, the possibility of collision and interference is significantly reduced.

Subsequent to understanding how the first sequence is generated, we can further consider how to generate the preamble sequence transmitted by the terminal device. The embodiments of the present disclosure provide two schemes for generating the preamble sequence.

Scheme 1: According to Method 1 or Method 2 described earlier, the terminal device generates the first sequence. When transmitting the preamble sequence, one sequence is randomly selected from the first sequence as the preamble sequence.

It can be seen that in Scheme 1, the terminal device actually generates a preamble sequence set for the cell where the terminal device is located, and selects one from the generated preamble sequence set when the terminal device needs to transmit the preamble sequence.

Scheme 2: The terminal device first determines the number of the preamble sequence to be transmitted in the first sequence, and then generates the preamble sequence according to Method 1 or Method 2 described earlier.

It can be seen that in Scheme 2, the terminal device actually only needs to one-to-one correspondingly generate the preamble sequence that the terminal device needs to transmit.

**Next, we will first introduce Scheme 1 for generating the preamble sequence:**
The generation of the first sequence can refer to Method 1 (generate the first sequence corresponding to one cell based on X first m-sequences) or Method 2 (generate the first sequence corresponding to one cell based on the m-sequence subset) described earlier.

In some embodiments, after the terminal device generates the first sequence corresponding to one cell, the terminal device stores the first sequence in a memory, which can be local or non-local, such as a server, cloud platform, virtualization center, or the like.

In some embodiments, different terminal devices within the same cell randomly select one sequence from the first sequence as the preamble sequence. Alternatively, different terminal devices within the same cell select one sequence from the first sequence according to a specific rule as the preamble sequence. The preamble sequences selected by different terminal devices should be different to avoid preamble conflicts within the cell. However, it is not excluded that different terminal devices may select the same preamble sequence, which will cause conflicts. In this case, the network device and the conflicting terminal devices need to reconfirm the random access situation.

**Secondly, we introduce the Scheme 2 for generating the preamble sequence:**
Since only the preamble sequence to be transmitted needs to be generated in a one-to-one correspondence, it is first necessary to specify the preamble sequence is which one in the first sequence. Optionally, the network device indicates to the terminal device that the preamble sequence has a number *I_{S}* in the first sequence, or the communication protocol specifies that the terminal device uses the preamble sequence with a number *I_{S}* in the first sequence, or the terminal device autonomously determines that the preamble sequence has a number *I_{S}* in the first sequence.

In some embodiments, the i^{th} sequence in the first sequence is determined based on at least one of: the first start information, the cyclic shift step, or the value of i; wherein the value of i is greater than or equal to 0 and less than the total number of sequences in the first sequence.

By combining *I_{S}* and other first sequence information, such as one or more items of the first start information, cyclic shift step *N_{CS}*, and the numbering order of N first m-sequences, it is possible to determine which basic m-sequence the preamble sequence is generated from.

Illustratively, the first sequence information includes the number *I_{S}* of the preamble sequence transmitted by the terminal device in the first sequence, and the numbering order of N first m-sequences. The terminal device uniquely determines the preamble sequence to be transmitted based on *I_{S}*. In the case where the preamble sequence is a basic m-sequence, the preamble sequence can be directly generated based on the stored and/or configured sequence information.

Illustratively, the first sequence information includes the number *I_{S}* of the preamble sequence transmitted by the terminal device in the first sequence, the cyclic shift step *N_{cs},* and the numbering order of N first m-sequences. The terminal device uniquely determines the preamble sequence to be transmitted based on the *I_{S}*. In the case where the preamble sequence is a cyclic shift sequence, the preamble sequence can be directly generated based on the stored and/or configured sequence information and cyclic shift step *N_{CS}.*

**The embodiments of the present disclosure support the adoption of a formulaic representation for the Scheme 2 mentioned above for generating the preamble sequence.**

Assuming that the basic m-sequence determined by combining *I_{S}* with other first sequence information is the third m-sequence, that is, the preamble sequence is generated based on the third m-sequence.

In some embodiments, the sequence element numbered n in the preamble sequence is determined based on the sequence element numbered n' in the third m-sequence. Alternatively, it can be understood that the value of the n^{th} bit in the preamble sequence is determined based on the value of the n'^{th} bit in the third m-sequence.

In some embodiments, n' is determined based on at least one of: n, cyclic shift step, the number of the preamble sequence in the first sequence, or a first length value. The first length value is the length value of the third m-sequence. n is greater than or equal to 0 and less than the first length value.

In some embodiments, n' is determined based on a first modulo operation result. The first modulo operation result is a modulo operation result of a first sum value and the first length value. The first sum value is the sum of n and a target cyclic offset. The target cyclic offset is a cyclic offset of a target sequence relative to the third m-sequence.

In some embodiments, the target cyclic offset is equal to a first product. The first product is determined based on the cyclic shift step and a target number. The target number is the number of the target sequence in the $\left⌊L/{N}_{CS}\right⌋$ sequences generated by the third m-sequence. The target sequence is used to generate the preamble sequence, and the preamble sequence can be acquired by modulating the target sequence.

In some embodiments, the first product is equal to the cyclic shift step multiplied by the target number. For example, the numbering order of N first m-sequences is 5,1,0,4,3,2,7,8,6. In the case where the first start information indicates e=3, it means that the first sequence corresponding to this cell is generated based on the first m-sequence with number 0 and several first m-sequences subsequent to the first m-sequence with number 0. Assuming that each first m-sequence can generate 12 m-sequences (including the first m-sequence itself) based on the cyclic shift step *N_{cs},* in the case where the preamble sequence is numbered *I_{S}* = 30 in the first sequence, then considering that the first m-sequences with numbers 0 and 4 generate a total of 12*2=24 m-sequences, 30-24=6, the preamble sequence should be the cyclic shift sequence of the first m-sequence with number 3. That is, $e + \left⌊{I}_{S}/\left(\left⌊L/{N}_{CS}\right⌋\right)\right⌋ = 3 + \left⌊30/12\right⌋ = 5$, and the target sequence can be found by performing the cyclic shift on the first m-sequence ranked fifth in the N first m-sequences, which is the first m-sequence with number 3. Excluding the first m-sequence with number 3 itself, the first m-sequence with number 3 should be performed with cyclic shifts for five times based on the cyclic shift step *N_{CS}* to acquire the 30^{th} m-sequence. Therefore, the target sequence is the five-shift sequence of the first m-sequence with number 3, and the target sequence has a cyclic offset *C = N_{CS}* * (6-1) relative to the first m-sequence with number 3.

In some embodiments, the sequence element numbered n in the preamble sequence is the difference between the value 1 and a second product. The second product is the product of the value 2 and the sequence element numbered n' in the first m-sequence. Alternatively, the value of the n^{th} bit in the preamble sequence is equal to 1 minus the second product, and the second product is equal to the product of 2 and the value of the n'^{th} bit in the third m-sequence.

Illustratively, the preamble sequence can be represented as Equation (10). In this equation, *d_{preamble}*(*n*) denotes the preamble sequence, *x*₀(*n*) denotes the third m-sequence used to generate the preamble sequence, *N_{CS}* denotes the cyclic shift step, *I_{S}* denotes the number of the preamble sequence in the first sequence, and L denotes the sequence length. The target number is ${I}_{m} = {I}_{S} mod \left⌊L/{N}_{CS}\right⌋ - 1$.${d}_{preamble} \left(n\right) = 1 - 2 {x}_{0} \left(\left(n+{N}_{CS}*{I}_{m}\right)mod L\right)$ (10)

In some embodiments, equation (10) is applicable to the case where the preamble sequence is acquired through BPSK modulation.

In some embodiments, the sequence element numbered n in the preamble sequence is the sequence element numbered n' in the first m-sequence. It can also be understood that the value of the n^{th} bit in the preamble sequence is equal to the value of the n'^{th} bit in the third m-sequence.

Illustratively, the preamble sequence can be represented as Equation (11). Here, *d _{preamble}*(*n*) denotes the preamble sequence, *x*₀(*n*) denotes the third m-sequence used to generate the preamble sequence, *N_{CS}* denotes the cyclic shift step, *I_{S}* denotes the number of the preamble sequence in the first sequence, and L denotes the sequence length. The target number is ${I}_{m} = {I}_{S} mod \left⌊L/{N}_{CS}\right⌋ - 1$.${d}_{preamble} \left(n\right) = {x}_{0} \left(\left(n+{N}_{CS}*{I}_{m}\right)mod L\right)$ (11)

In some embodiments, equation (11) is applicable to the case where the preamble sequence is acquired through OOK modulation.

[Example] Assume that the numbering order of N first m-sequences is 5,1,0,4,3,2,7,8,6, the first start information indicates e=3, the cyclic shift step *N_{CS}* = 3, and each first m-sequence has an equal length, which is *L* = 127 . Then, one first m-sequence can generate a total of $\left⌊L/{N}_{CS}\right⌋ = 42$ m-sequences (including the first m-sequence itself). The total number of sequences within the first sequence is S, and the value range of the number or index is from 0 to S-1.
[1] Assuming the number of the preamble sequence in the first sequence *I_{S}* = 5 < 42, only one basic m-sequence needs to undergo cyclic shift to find the target sequence. The preamble sequence is generated based on the cyclic shift sequence of the first m-sequence with number 0. The first m-sequence with number 0 is the first m-sequence indicated by the first start information.

The above process can be represented by the formula: $e + \left⌊{I}_{S}/\left(\left⌊L/{N}_{CS}\right⌋\right)\right⌋ = 3 + \left⌊5/42\right⌋ = 3$. Therefore, the target sequence can be found by performing the cyclic shift on the first m-sequence ranked third among the N first m-sequences, and the first m-sequence ranked third is the first m-sequence with the number 0.

At this moment, the target number ${I}_{m} = {I}_{S} mod \left⌊L/{N}_{CS}\right⌋ - 1 = 5 mod 42 - 1 = 4$ and the target cycle offset = *N_{CS} * Iₘ* = 3 * 4.

If calculated through formula (10), we can obtain *d_{preamble}*(*n*) = 1- 2*x*₀((*n +* 3 * 4) mod 127).

If calculated through formula (11), we can obtain *d_{preamble}*(*n*) *= x*₀((*n +* 3 * 4) mod 127) .

Among them, *x*₀(*n*) represents the first m-sequence with the number 0, n' = (*n* + 3*4)mod127*,* and a cyclic offset of the target sequence relative to *x*₀(*n*) is 12.

[2] Assuming the number of the preamble sequence in the first sequence *I_{S}* = 50 > 42, the preamble sequence is acquired by performing the cyclic shift based on the first m-sequence with the number 4. The first m-sequence with the number 4 is immediately followed by the first m-sequence with the number 0 indicated by the first start information.

The above process can be represented by the formula: $e + \left⌊{I}_{S}/\left(\left⌊L/{N}_{CS}\right⌋\right)\right⌋ = 3 + \left⌊50/42\right⌋ = 4$. Therefore, by performing the cyclic shift on the first m-sequence ranked fourth among the N first m-sequences, the target sequence can be found, and the first m-sequence ranked fourth is the one numbered 4.

At this moment, the target number ${I}_{m} = {I}_{S} mod \left⌊L/{N}_{CS}\right⌋ - 1 = 50 mod 42 - 1 = 7$and the target cycle offset = *N_{CS} * Iₘ =* 3*7*.*

If calculated through formula (10), we can obtain *d_{preamble}*(*n*) = 1- 2*x*₀((*n +* 3 * 7) mod 127).

If calculated through formula (11), we can obtain *d_{preamble}*(*n*) = *x*₀((*n +* 3 * 7) mod 127).

Among them, *x*₀(*n*) represents the first m-sequence with the number 4, n' = (*n* + 3*7)mod127, and a cyclic offset of the target sequence relative to *x*₀(*n*) is 21.

In summary, the method according to the embodiments of the present disclosure offers a feasible and low-complexity solution for transmitting the preamble sequence through m-sequences. It supports both selecting the first m-sequence to form the first sequence and constructing an m-sequence set to form the first sequence, providing a flexible composition scheme for the first sequence corresponding to one cell. It also supports both the terminal device randomly selecting one m-sequence from the first sequence as the preamble sequence and the terminal device generating the preamble sequence through information such as the cyclic shift step and the number of the preamble sequence in the first sequence, providing a flexible determination scheme for the preamble sequence corresponding to one terminal device. Furthermore, it supports both different cells using the same first sequence to save communication resources and different cells using different first sequences to avoid conflicts within the communication system and ensure communication efficiency within the system. Moreover, m-sequences exhibit good autocorrelation and cross-correlation characteristics, and the preamble sequences generated by m-sequences still retain these good characteristics, which helps to improve the accuracy and reliability of uplink synchronization and frequency offset estimation, and ensures the reliability, success rate, and efficiency of random access. Additionally, one m-sequence can be performed with a cyclic shift to generate more m-sequences, providing a large number of optional preamble sequences for one cell and supporting the provision of preamble sequences for a vast number of terminal devices within the communication system.

**Next, taking the type of the first sequence as the gold sequence as an example, we will further introduce the relevant content regarding the generation of preamble sequence based on the gold sequences, building upon process 710.**

FIG. 13 illustrates a flow diagram of a preamble transmission method according to an exemplary embodiment of the present disclosure, which is performed by a terminal device. The method includes:
**process 1110**: transmitting a preamble sequence, wherein the preamble sequence is one of the first sequence; the first sequence is generated based on the gold sequence.

In some embodiments, the preamble sequence is a default sequence in the first sequence. Alternatively, the preamble sequence is a sequence randomly selected by the terminal device from the first sequence. Alternatively, the preamble sequence is a sequence selected by the terminal device from the first sequence according to a specific rule. Alternatively, the preamble sequence is a sequence indicated by the network device in the first sequence.

In some embodiments, the first sequence includes all preamble sequences corresponding to the cell where the terminal device is located. Alternatively, it can be understood that all preamble sequences transmitted by terminal devices located in the same cell belong to the first sequence. Therefore, the first sequence can be considered as a cell-level preamble sequence set, and the preamble sequence transmitted by the terminal device is associated with the cell where it is located.

In some embodiments, the total number of preamble sequences corresponding to one cell is pre-configured or defined in the communication protocol. That is, the total number of preamble sequences in the first sequence is pre-configured or defined in the communication protocol.

In some embodiments, the number of gold sequences used to generate the first sequence is pre-configured or defined in the communication protocol.

In some embodiments, the binary sequence used to generate the first sequence includes a first number of gold sequences. The first number of gold sequences is generated based on at least one preferred pair of m-sequences. The relevant content of the preferred pair of m-sequences has been described previously. Based on different primitive polynomials with both orders being r, a maximum of one pair of preferred m-sequences can be acquired. After modulo-2 addition of one pair of preferred m-sequences, a gold sequence can be acquired. Therefore, every time one preferred pair of m-sequences undergoes one cyclic shift, one new gold sequence can be acquired.

In some embodiments, the first number is defined in the communication protocol, configured by the network device, or autonomously determined by the terminal device. Illustratively, the first number is adjusted by the network device or the terminal device based on one or more factors such as the capabilities of the terminal device, the capabilities of the network device, the capacity of the communication system, the communication requirements, the total number of cell identifiers, or the number of terminal devices within the same cell.

Similar to the case of generating the preamble sequence based on the m-sequence, the embodiments of the present disclosure provide two methods for generating the first sequence through the gold sequence.

Method 1: First, Z gold sequence families corresponding to one cell are determined, and the first sequence for this cell is generated from these Z gold sequence families. At this point, the first number of gold sequences is all or part of the sequences in the Z gold sequence families.

Method 2: First, a large gold sequence set is constructed, which includes several gold sequence families. Then, the gold sequence set is divided into several gold sequence subsets, and a certain gold sequence subset is mapped as the first sequence of a certain cell. At this point, the first number of gold sequences is all or part of the sequences in one gold sequence subset.

**The embodiments of the present disclosure involve the concept of the gold sequence family, and here we introduce how to generate the gold sequence family.**

According to the previous text, the gold sequence is acquired by modulo-2 addition of a pair of m-sequences. In the embodiments of the present disclosure, the two m-sequences in one pair of m-sequences are referred to as a fourth m-sequence and a fifth m-sequence. It can be understood that in the present disclosure, the names "first," "second," "third," "fourth," "fifth," or the like are only used for descriptive purposes and do not imply any restrictions on the order, naming, or other aspects of the m-sequences. For example, the fourth m-sequence is any one of the m-sequences in the pair of m-sequences, and the fifth m-sequence is another m-sequence in the pair of m-sequences.

**Method 1 for generating the gold sequence family**: The fourth m-sequence remains unchanged, while the fifth m-sequence undergoes the cyclic shift.

Assuming the shift register has a stage count of r, if the fourth m-sequence remains unchanged and the fifth m-sequence undergoes the cyclic shift, by modulo-2 addition of the fourth m-sequence and the cyclic shift sequence of the fifth m-sequence, a maximum of 2*^{r}* - 1 gold sequences can be acquired. Adding the fourth and fifth m-sequences themselves, through method 1, a maximum of 2*^{r}* -1 + 2 = 2*^{r}* + 1 gold sequences can be generated.

To facilitate distinction, the plurality of gold sequences generated through Method 1 can be referred to as a first gold sequence family. The gold sequences in the first gold sequence family are referred to as the first gold sequences. The first gold sequence family can include up to 2*^{r}* + 1 first gold sequences. For example, if *r* = 5, a maximum of 33 first gold sequences can be acquired through the Method 1.

It should be noted that 2*^{r}* + 1 is the upper limit of the number of first gold sequence in the first gold sequence group, but it does not mean that the first gold sequence family must contain 2*^{r}* + 1 first gold sequences.

Optionally, the number of the first gold sequence within the first gold sequence family is determined based on at least one of: the order r, the length of the fourth m-sequence L₀, the length of the fifth m-sequence L₁, the cyclic offset, or the cyclic shift step.

Optionally, the number of the first gold sequence within the first gold sequence family is configured by the network device or defined in the communication protocol.

Assuming the number of preferred pairs of m-sequences is k, then the upper limit of the number of gold sequences that can be generated using method 1 is *k**(2*^{r}* +1). Here, k is determined based on the stage number r of the shift register and formula (8) mentioned earlier, representing the number of preferred pairs of m-sequences that can be found when the order is r.

**Method 2 for generating the gold sequence family**: The fourth m-sequence undergoes the cyclic shift, and similarly, the fifth m-sequence also undergoes the cyclic shift.

Assuming the shift register has a stage count of r, if the fourth m-sequence remains unchanged and the fifth m-sequence undergoes the cyclic shift, by modulo-2 addition of the fourth m-sequence and the cyclic shift sequence of the fifth m-sequence, a maximum of 2*^{r}* - 1 gold sequences can be acquired.

Assuming the shift register has a stage count of r, if the fifth m-sequence remains unchanged and the fourth m-sequence undergoes the cyclic shift, then by modulo-2 addition of the fifth m-sequence and the cyclic shift sequence of the fourth m-sequence, a maximum of 2*^{r}* - 1 gold sequences can be acquired.

Then, the fourth m-sequence undergoes the cyclic shift, and the fifth m-sequence also undergoes the cyclic shift. By performing modulo-2 addition on the cyclic shift sequence of the fourth m-sequence and the cyclic shift sequence of the fifth m-sequence, a maximum of (2*^{r}* -1)*(2*^{r}* -1) gold sequences can be acquired.

For ease of distinction, the plurality of gold sequences generated through method 2 can be referred to as a second gold sequence family, and the gold sequences in the second gold sequence family are referred to as second gold sequences. The second gold sequence family can include up to (2*^{r}* -1)*(2*^{r}* -1) second gold sequences. Illustratively, if *r* = 5 and the fourth m-sequence and the fifth m-sequence undergo cyclic shifts separately, a maximum of 961 second gold sequences can be acquired.

It should be noted that (2*^{r}* -1) * (2*^{r}* -1) is the upper limit of the number of second gold sequences in the second gold sequence family, but it does not mean that each second gold sequence family must contain (2*^{r}* -1)*(2*^{r}* -1) second gold sequence.

Optionally, the number of second gold sequences within the second gold sequence family is determined based on at least one of: the order r, the length of the fourth m-sequence L₀, the length of the fifth m-sequence L₁, the cyclic offset, or the cyclic shift step.

Optionally, the number of second gold sequences within the second gold sequence family is configured by the network device or defined in the communication protocol.

Assuming the number of preferred pairs of m-sequences is k, then the upper limit of the number of gold sequences that can be generated using method 2 is k*(2*^{r}* - 1)*(2*^{r}* -1). Here, k is determined based on the stage number r of the shift register and formula (8) mentioned earlier, representing the number of preferred pairs of m-sequences that can be found when the order is r.

**Method 3 for generating the gold sequence family:** Performing the cyclic shift on the first gold sequence.

As described in Method 1, when the shift register stage is r, the first gold sequence family can include up to 2*^{r}* + 1 first gold sequence. Method 3 acquires more gold sequences by continuously performing cyclic shifts on the first gold sequence within the first gold sequence family.

After one gold sequence undergoes the cyclic shift, a maximum of 2*^{r}* -1 gold sequences can be acquired. Similarly, after 2*^{r}* + 1 gold sequences undergo the cyclic shift, a maximum of (2*^{r}* +1)*(2*^{r}* -1) gold sequences can be acquired.

For ease of distinction, the plurality of gold sequences generated through method 3 can be referred to as a third gold sequence family, and the gold sequences in the third gold sequence family are referred to as third gold sequences. The third gold sequence family can include up to (2*^{r}* +1)*(2*^{r}* -1) third gold sequences. Illustratively, if *r* = 5 and method 1 can generate a maximum of 33 first gold sequences, method 3 can generate a maximum of 33*31=1023 third gold sequences.

It should be noted that (2*^{r}* + 1)*(2*^{r}* -1) is the upper limit of the number of third gold sequences in the third gold sequence group, but it does not mean that the third gold sequence family must contain (2*^{r}* +1)*(2*^{r}* -1) third gold sequences.

Optionally, the number of third gold sequences within the third gold sequence family is determined based on at least one of: the order r, the length of the fourth m-sequence L₀, the length of the fifth m-sequence L₁, the cyclic offset, or the cyclic shift step.

Optionally, the number of third gold sequences within the third gold sequence family is configured by the network device or defined in the communication protocol.

Assuming the number of preferred pairs of m-sequences is k, then the upper limit of the number of gold sequences that can be generated using method 3 is k*(2*^{r}* +1)*(2*^{r}* -1). Here, k is determined based on the stage number r of the shift register and the formula (8) mentioned earlier, representing the number of preferred pairs of m-sequences that can be found when the order is r.

It should be noted that Method 1, Method 2, and Method 3 can be used individually or in combination. That is, the first gold sequence family, the second gold sequence family, and the third gold sequence family are not conflicting. The first sequences including different types of gold sequence families can coexist within the communication system. For example, the first sequence corresponding to Cell A includes both the first gold sequence family and the third gold sequence family, while the first sequence corresponding to Cell B includes the second gold sequence family.

It can be seen that, under the same order, compared to Method 1, Methods 2 and 3 can acquire a larger number of sequences. In scenarios where it is desired to include more gold sequences within the first sequence, Methods 2 and 3 are more suitable. However, it is evident that Method 3 has a higher complexity than Method 2, and Method 2 has a higher complexity than Method 1. Therefore, if a lower complexity is desired when generating the first sequence, Method 1 is more suitable.

In the present disclosure, the gold sequence family is also referred to as the gold sequence group or the gold sequence set. One gold sequence family corresponds to one preferred pair of m-sequences.

After understanding how to generate a gold sequence family, we can consider how to generate the first sequence based on the gold sequence family.

**Next, we will first introduce Method One, which involves generating the first sequence corresponding to one cell based on Z gold sequence families.** It can be understood that Z gold sequence families correspond to Z preferred pairs of m-sequences.

In some embodiments, the value of Z is defined in the communication protocol, configured by the network device, or autonomously determined by the terminal device. Illustratively, the value of X is adjusted by the network device or terminal device based on one or more factors such as the capabilities of the terminal device, the capabilities of the network device, the capacity of the communication system, the communication requirements, the total number of cell identifiers, or the number of terminal devices within the same cell.

In some embodiments, the Z gold sequence families are defined in a communication protocol, indicated by a network device, or determined by a terminal device.

In some embodiments, the Z gold sequence families are Z of the M gold sequence families, where M is an integer greater than or equal to 1, and 1 ≤ Z ≤ M. The M gold sequence families are determined based on the shift register stage number r, specifically, determined based on the number of preferred pairs of the m-sequence corresponding to the shift register stage number r.

There is an upper limit to the number of preferred pairs of m-sequences that can be generated at different orders, so naturally, there is also an upper limit to the number of gold sequence families that correspond one-to-one with the preferred pairs of m-sequences. The value of M can either be equal to or less than the upper limit of the number of preferred pairs of m-sequences. For example, if three pairs of preferred pairs of m-sequences are found according to formula (8) when the order is r, then the value of M can be less than or equal to 3.

Optionally, the Z gold sequence families are any Z of the M gold sequence families. Optionally, the Z gold sequence families are Z selected from the M gold sequence families according to a specific rule. Optionally, the Z gold sequence families are the Z defaulted by the communication system in the M gold sequence families. Optionally, the Z gold sequence families are the Z indicated by the network device in the M gold sequence families.

Since the Z gold sequence families are within the M gold sequence families, we first need to introduce the design of the M gold sequence families before we can explain how to determine/indicate/select these Z gold sequence families.

**Firstly, the design of M gold sequence families will be introduced.** It can be understood that, in order to facilitate the distinction between various gold sequence families, each of the M gold sequence families should have a one-to-one corresponding number or index. The embodiments of the present disclosure will be explained using numbers as an example.

In some embodiments, the M gold sequence families are numbered as 0,1,2···, *M* -1 , or 1,2···, *M* , or the like. Other numbering schemes that can distinguish between the various gold sequence families are also applicable to the embodiments of the present disclosure.

In some embodiments, M gold sequence families are first arranged according to a specific rule, and then assigned numbers.

In some embodiments, the M gold sequence families are arranged according to the numbers of preferred pair of the m-sequences, and then M numbers are assigned.

Assuming that the M preferred pairs of m-sequences are selected from N m-sequences according to equation (8). It can be understood that the N m-sequences each have a corresponding sequence number, and there is a numbering order for these N m-sequences. Optionally, the numbering order of the N m-sequences is either default, random, arranged according to a specific rule, defined in a communication protocol, or indicated by a network device. For details, please refer to the relevant content in the previous "Design of N first m-sequences", which will not be repeated here.

Then, the numbers of all m-sequences in the M preferred pairs of m-sequences can be consistent or inconsistent with their numbers in the N m-sequences. For example, subsequent to selecting the M preferred pairs of m-sequences from the N m-sequences, all m-sequences in the M preferred pairs of m-sequences can be renumbered starting from 0 or 1. Whether all m-sequences in the M preferred pairs of m-sequences continue to use their numbers in the N m-sequences, the embodiments of the present disclosure support it, as long as each m-sequence has a one-to-one corresponding number.

Illustratively, the number of one preferred pair of m-sequences is the number of the fourth m-sequence in the preferred pair of m-sequences. Optionally, the fourth m-sequence can be any m-sequence in the preferred pair of m-sequences, or the fourth m-sequence can be the m-sequence with a smaller number value in the preferred pair of m-sequences, or the fourth m-sequence can be the m-sequence with a larger number value in the preferred pair of m-sequences, and so on.

Illustratively, the number of one preferred pair of m-sequences is the product of the numbers of the two m-sequences in the preferred pair. For example, if one preferred pair of m-sequences includes m-sequences with numbers 2 and 4, then the number of this preferred pair of m-sequences is 8.

Illustratively, the number of one preferred pair of m-sequences is the sum, difference, modulo result, or the like, of the two m-sequence numbers in the preferred pair of m-sequences.

In some embodiments, the numbers of M gold sequence families are consistent with the numbers of their corresponding preferred pairs of m-sequences. For example, if the number of a certain m-sequence preferred pair is 3, then the number of the gold sequence family generated by this pair is also 3.

In some embodiments, M gold sequence families are arranged according to ascending order of the numbers of the M preferred pairs of m-sequences, and then assigned to specific numbers from 0 to M-1, or assigned to specific numbers from 1 to M. For example, M=5 and the numbers of the M preferred pairs of m-sequences are 1, 3, 5, 7, and 9, the gold sequence family generated by the m-sequence pair with number 1 is assigned the number 1, and the gold sequence family generated by the m-sequence pair with number 9 is assigned the number 5.

In some embodiments, M gold sequence families are arranged in descending order of the numbers of the M pairs of preferred m-sequences, and then assigned to specific 0numbers, or assigned to specific M - 1numbers. For example, when M=5 and the numbers of the M pairs of preferred m-sequences are 9, 7, 5, 3, and 1, the gold sequence family generated by the m-sequence pair with number 9 is assigned the number 1, and the gold sequence family generated by the m-sequence pair with number 1 is assigned the number 5.

In some embodiments, M gold sequence families are first assigned numbers, and then arranged according to a specific rule. Therefore, the resulting numbering order of the M gold sequence families may be scrambled, such as not being in the order from 0 to M-1.

Illustratively, the numbering order of M gold sequence families is 2,0,*M* -1···,1 , which means that the gold sequence family with number 2 ranks first in the M gold sequence families, while the gold sequence family with number 1 ranks M^{th} in the M gold sequence families.

In some embodiments, the numbering order of M gold sequence families is either default, random, arranged according to a specific rule, defined in a communication protocol, or indicated by a network device.

In some embodiments, the numbering order of M gold sequence families is determined based on at least one of: the order r, the number of gold sequences within the gold sequence family, the length of the gold sequence within the gold sequence family, the number of gold sequence families, the numbering of gold sequences within the gold sequence family, the number of corresponding m-sequence, the numbering order of corresponding m-sequences, the coefficients of the corresponding primitive polynomial, the binary numbers of the coefficients of the corresponding primitive polynomial, or the cyclic offset.

In some embodiments, the numbering order of M gold sequence families is arranged according to ascending order of the numerical values of the gold sequence family numbers, or according to descending order of the numerical values of the gold sequence family numbers.

In some embodiments, the numbering order of M gold sequence families is arranged according to the number and/or numbering order of the m-sequences that generate the gold sequence families.

In some embodiments, the numbering order of M gold sequence families is consistent with the numbering order of their corresponding preferred pairs of m-sequences. For example, if the numbering order of M preferred pairs of m-sequences is 2,0,*M* -1···,1, then the numbering order of M gold sequence families is also 2,0,*M* -1···,1.

In some embodiments, the numbering order of M gold sequence families is arranged according to ascending order of the numbers of the M preferred pairs of m-sequences. For example, M=5 and the numbering of the M preferred pairs of m-sequences is 1, 3, 5, 7, 9, then the gold sequence family generated by the preferred pair of m-sequences with number 1 is ranked first, and the gold sequence family generated by the preferred pair of m-sequences with number 9 is ranked fifth.

In some embodiments, the numbering order of M gold sequence families is arranged according to descending order of the numbers of the M preferred pairs of m-sequences. For example, M=5 and the numbering of the M preferred pairs of m-sequences is 9, 7, 5, 3, 1, then the gold sequence family generated by the preferred pair of m-sequences with number 9 ranks first, and the gold sequence family generated by the preferred pair of m-sequences with number 1 ranks fifth.

In some embodiments, the numbering order of M gold sequence families is arranged according to the ascending order of the product of the numbers of the two m-sequences in each of the M preferred pairs of m-sequences. For example, the preferred pair of m-sequences A includes m-sequences with numbers 2 and 3, then the product of the numbers of the two m-sequences in preferred pair A is 6. The preferred pair of m-sequences B includes m-sequences with numbers 0 and 5, then the product of the numbers of the two m-sequences in preferred pair B is 0. Therefore, the gold sequence family corresponding to preferred pair A of m-sequences is arranged after the gold sequence family corresponding to preferred pair B of m-sequences.

In some embodiments, the numbering order of M gold sequence families is arranged according to the descending order of the product of the numbers of the two m-sequences in each of the M preferred pairs of m-sequences.

In some embodiments, the numbering order of M gold sequence families is arranged according to the ascending order of the sum of the numbers of the two m-sequences in each of the M preferred pairs of m-sequences. For example, the preferred pair of m-sequences A includes m-sequences with numbers 2 and 3, then the sum of the numbers of the two m-sequences in preferred pair A is 5. The preferred pair of m-sequences C includes m-sequences with numbers 0 and 1, then the sum of the numbers of the two m-sequences in preferred pair C is 1. Therefore, the gold sequence family corresponding to preferred pair A is arranged after the gold sequence family corresponding to preferred pair C.

In some embodiments, the numbering order of M gold sequence families is arranged according to the descending order of the sum of the numbers of the two m-sequences in each of M preferred pairs of m-sequences.

In some embodiments, the numbering order of the M gold sequence families is first based on the m-sequences with smaller numbers in the preferred pairs, and then on the m-sequences with larger numbers in the preferred pairs. Alternatively, the numbering order of the M gold sequence families is first based on the m-sequences with larger numbers in the preferred pairs, and then on the m-sequences with smaller numbers in the preferred pairs.

Assuming in one preferred pair of m-sequences, the m-sequence with a smaller number is referred to as sequence E, while the m-sequence with a larger number is referred to as sequence F. For instance, the preferred pair of m-sequences C is {0,1}, then within this preferred pair C, the m-sequence with the number 0 is referred to as sequence E, and the m-sequence with the number 1 is referred to as sequence F. Similarly, the preferred pair of m-sequences D is {1,2}, then within this preferred pair D, the m-sequence with the number 1 is referred to as sequence E, and the m-sequence with the number 2 is referred to as sequence F.

Illustratively, assume M preferred pairs of m-sequences are {0,1}, {1,2}, {0,3}, {4,6}, and {1,5}. If the arrangement is first performed according to the ascending order of the numbers of the sequences E (i.e., the m-sequences with smaller numbered values) in the preferred pairs, there are two preferred pairs where the sequence E numbers are both 0, and two preferred pairs where the sequence E numbers are both 1, then the arrangement is performed according to the ascending order of the numbers of the sequences F (i.e., the m-sequences with larger numbered values) in the preferred pairs, thus the arrangement order of M preferred pairs of m-sequences is acquired as: {0,1}, {0,3}, {1,2}, {1,5}, and {4,6}.

Illustratively, assume M preferred pairs of m-sequences are {0,1}, {1,2}, {0,3}, {4,6}, {1,5}. If the arrangement is first performed according to the descending order of the numbers of the sequences E in the preferred pairs, there are two preferred pairs of m-sequences where the sequence E numbers are both 0, and two preferred pairs where the sequence E numbers are both 1, then the arrangement is performed according to the descending order of the numbers of the sequences F in the preferred pairs, thus the arrangement order of M preferred pairs of m-sequences can be acquired as: {4,6}, {1,5}, {1,2}, {0,3}, {0,1}.

Illustratively, assume the M preferred pairs of m-sequences are {0,1}, {1,2}, {0,3}, {4,6}, and {1,5}. If the arrangement is performed according to the descending order of the numbers of the sequences F in the preferred pairs, the arrangement order of the M preferred pairs of m-sequences can be acquired as: {4,6}, {1,5}, {0,3}, {1,2}, and {0,1}.

Illustratively, assume the M preferred pairs of m-sequences are {0,1}, {1,2}, {0,3}, {4,6}, and {1,5}. If the arrangement is performed according to the ascending order of the numbers of the sequences F in the preferred pairs, the arrangement order of the M preferred pairs of m-sequences can be acquired as: {0,1}, {1,2}, {0,3}, {1,5}, and {4,6}.

It can be understood that when arranging sequences E and F in each preferred pair, the order is not limited to ascending or descending order. They can also be arranged according to the coefficients of the primitive polynomial, the binary numbers of the coefficients of the primitive polynomial, or the like. For specific details, please refer to the arrangement rules mentioned earlier.

In some embodiments, the numbering order of the M gold sequence families is first arranged based on the 1^{st} m-sequence in the preferred pair, and then arranged based on the 2^{nd} m-sequence in the preferred pair. Alternatively, the numbering order of the M gold sequence families is first arranged based on the 2^{nd} m-sequence in the preferred pair, and then arranged based on the 1^{st} m-sequence in the preferred pair.

For example, the preferred pair of m-sequences C is {0,1}, then the 1^{st} m-sequence in the preferred pair of m-sequences C is the m-sequence on the left, which is the m-sequence numbered 0; the 2^{nd} m-sequence is the m-sequence on the right, which is the m-sequence numbered 1. Another example, the preferred pair of m-sequences D is {2,1}, then the 1^{st} m-sequence in the preferred pair of m-sequences D is the m-sequence on the left, which is the m-sequence numbered 2, and the 2^{nd} m-sequence is the m-sequence on the right, which is the m-sequence numbered 1.

Illustratively, the M preferred pairs of m-sequences are {0,1}, {2,1}, {0,3}, {4,6}, and {1,5}. If the preferred pairs are first arranged according to the ascending order of the numbers of 1^{st} m-sequences in each preferred pair, there are two preferred pairs where the 1^{st} m-sequence has a number of 0, then the arrangement is performed according to the ascending order of the numbers of 2^{nd} m-sequences, the arrangement order of the M preferred pairs of m-sequences can be acquired as: {0,1}, {0,3}, {1,5}, {2,1}, and {4,6}.

Illustratively, the M preferred pairs of m-sequences are {0,1}, {2,1}, {0,3}, {4,6}, and {1,5}. If the preferred pairs are first arranged according to the descending order of the numbers of 2^{nd} m-sequences in each preferred pair, there are two preferred pairs where the 2^{nd} m-sequence has a number of 1, then the arrangement is performed according to the descending order of the numbers of 1^{st} m-sequences, the arrangement order of the M preferred pairs of m-sequences can be acquired as: {4,6}, {1,5}, {0,3}, {2,1}, and {0,1}.

It can be understood that when arranging the 1^{st} m-sequence and the 2^{nd} m-sequence in each preferred pair, the order is not limited to ascending or descending order. They can also be arranged according to the coefficients of the primitive polynomial, the binary numbers of the coefficients of the primitive polynomial, or the like. For specific details, please refer to the arrangement rules mentioned earlier.

In some embodiments, the design of the numbering order can be understood as a situation where both logical and physical numbering are present for the gold sequence family. Logical numbering refers to the order of the numbers of the gold sequence family in terms of data logic, which can be understood as the numbering 0,1,2···,*M* -1 or numbering 1,2···,*M* in the embodiments of the present disclosure. Physical numbering refers to the position of the numbers of the gold sequence family in memory, or in a predetermined mapping relationship, which can be understood as the numbering order in the embodiments of the present disclosure (for example, 2,0,*M* -1···,1). The logical and physical numbering of the gold sequence family can be the same or different. The reason is similar to that of the m-sequence, which supports adjusting the numbering order based on factors such as correlation, storage method, and memory management, such that the first sequence corresponding to one cell has good correlation, and the first sequences of adjacent cells also have good correlation.

**Next, introduce how Z gold sequence families are determined, selected, or indicated.**

In some embodiments, the Z gold sequence families are randomly selected by the terminal device from the M gold sequence families. Alternatively, the Z gold sequence families are the default gold sequence families in the M gold sequence families. For example, the Z gold sequence families default to the gold sequence family with the number 1 (or other values), or the gold sequence families with the numbers in the last three positions (or other positions), or the gold sequence families with even numbers.

In some embodiments, Z gold sequence families are indicated by the network device. For example, the network device indicates the numbers of the Z gold sequence families over signaling. The signaling can be one or more of system information, RRC signaling, MAC CE, DCI, or the like.

**Considering the value of Z,** we will discuss the determination method of Z gold sequence families in two cases:
1. The case of Z=1. If Z=1, it means that the first sequence corresponding to one cell is generated based on one gold sequence family.

In some embodiments, the gold sequence family is determined or selected based on the cell identifier of the terminal device. For example, the number of the gold sequence family is determined based on the cell identifier of the terminal device.

In some embodiments, the number of the gold sequence family corresponding to the first sequence is equal to the cell identifier of the terminal device. For example, the cell identifier of the terminal device is 5, the gold sequence family corresponding to the first sequence is the gold sequence family with the number 5 in M gold sequence families.

In some embodiments, the number of the gold sequence family corresponding to the first sequence is determined based on the mathematical operation result of the cell identifier of the terminal device.

Illustratively, the number of the gold sequence family corresponding to the first sequence is equal to the modulo result of the cell identifier of the terminal device and M. Here, M represents the number of M gold sequence families, which is determined by the stage number r of the shift register. The value of M can be equal to or less than the upper limit of the number of preferred pairs of m-sequences. Illustratively, the cell identifier of the terminal device is 9 and the stage number is r, a maximum of 4 preferred pairs of m-sequences can be generated. Let M take the value of 4, 9 mod 4 = 1, then the gold sequence family corresponding to the first sequence is the gold sequence family with the number 1 in M gold sequence families.

Illustratively, the number of the gold sequence family corresponding to the first sequence is equal to an integer multiple of the cell identifier of the terminal device, or equal to the upward rounding result of the quotient of the cell identifier of the terminal device and M, or equal to the downward rounding result of the quotient of the cell identifier of the terminal device and M, and so on.

In some embodiments, the network device indicates the number of the gold sequence family used to generate the first sequence, or the communication protocol specifies the number of the gold sequence family used to generate the first sequence.

2. The case of Z > 1. If Z > 1, it means that the first sequence corresponding to one cell is generated based on a plurality of gold sequence families.

In some embodiments, Z gold sequence families are determined based on second sequence information. Optionally, at least part of the second sequence information is indicated by a network device, and/or at least part of the second sequence information is defined in a communication protocol, and/or at least part of the second sequence information is determined by a terminal device.

In some embodiments, the second sequence information comprises at least one of the following information:
·the second start information, used to indicate the start position of Z gold sequence families within M gold sequence families;
·the second length information, used to indicate the value of Z;
·the second end information, used to indicate the end position of Z gold sequence families within M gold sequence families;
·the second bit bitmap, where bits one-to one correspond to the M gold sequence families;
·the numbers of Z gold sequence families;
·the total number of sequences in the first sequence;
·the number of the preamble sequence transmitted by the terminal device in the first sequence;
·the cyclic shift step, also referred to as the cyclic shift factor;
·the numbering order of M gold sequence families; or
·the cyclic offset C.

Here, the first sequence can be understood as the preamble sequence set corresponding to the cell where the terminal device is located.

In some embodiments, the second sequence information includes the second start information and the second length information. Alternatively, the second sequence information includes the second start information, the second length information, and the numbering order of M gold sequence families. Illustratively, the terminal device determines M=9 based on the shift register stage r, and the communication protocol specifies the numbering order of M gold sequence families as 0,1,2···,8. The network device indicates that the second start information=2 and the second length information=3. Therefore, the Z gold sequence families include gold sequence families numbered 2, 3, and 4.

In some embodiments, the second start information and the second length information can also be represented by an encoded value, such as SLIV.

In some embodiments, the second sequence information includes the second start information and the second end information. Alternatively, the second sequence information includes the second start information, the second end information, and the numbering order of M gold sequence families. For example, the network device indicates M=9, and the numbering order of the M gold sequence families is 2,6,5,7,1,3,8,4,0 . The network device also has second start information=3, and the communication protocol specifies second end information=7. Therefore, the Z gold sequence families include gold sequence families numbered 5, 7, 1, 3, and 8.

In some embodiments, the second sequence information includes the second length information and the second end information. Alternatively, the second sequence information includes the second length information, the second end information, and the numbering order of M gold sequence families. For example, the communication protocol specifies M=8, and the numbering order of the M gold sequence families is 3,7,1,0,5,6,4,2. The network device indicates that the second length information=3 and the second end information=7. Therefore, the Z gold sequence families include gold sequence families numbered 5, 6, and 4.

In some embodiments, the first sequence information includes the numbers of Z gold sequence families. For example, the network device indicates to the terminal device that the numbers of the Z gold sequence families are 1, 6, and 9, the terminal device generates the first sequence based on the gold sequence families with numbers 1, 6, and 9.

In some embodiments, the second sequence information includes the second bit bitmap. Alternatively, the second sequence information includes the second bit bitmap and the numbering order of M gold sequence families. In the case where the bit value is set to a first value, it indicates that the gold sequence family corresponding to that bit is indicated as one of the Z gold sequence families. In the case where the bit value is set to a second value, it indicates that the gold sequence family corresponding to that bit is not indicated as one of the Z gold sequence families. Here, the first value is "1" and the second value is "0", or the first value is "0" and the second value is "1". The first and second values can also be other numerical values. In the embodiments of the present disclosure, the first value is set to "1" and the second value is set to "0" for illustrative purposes. For example, M=6, and the numbering order of the M gold sequence families is 1,0,5,4,2,3, and the second bit bitmap includes 6 bits, which correspond one-to-one with the M gold sequence families from the least significant bit to the most significant bit. Assuming that the value of the second bit bitmap is 001101, it implies that the Z gold sequence families include the gold sequence families numbered 5, 4, and 3. By utilizing the second bit bitmap, the discrete Z gold sequence families can be determined. Compared to schemes that rely on one or more of the second start information, the second length information, and the second end information for determination, the design of the second bit bitmap offers greater flexibility but may require more bits for indication.

In some embodiments, the second sequence information includes the cyclic shift step and the numbering order of the M gold sequence families. Alternatively, the second sequence information includes the cyclic shift step and the second start information. Alternatively, the second sequence information includes the second start information and the numbering order of the M gold sequence families.

In some embodiments, the second sequence information includes the second start information, the cyclic shift step, and the numbering order of M gold sequence families. Alternatively, the second sequence information includes the second start information, the cyclic shift step, and the total number of sequences in the first sequence. Alternatively, the second sequence information includes the second start information, the numbering order of M gold sequence families, and the total number of sequences in the first sequence. Alternatively, the second sequence information includes the cyclic shift step, the numbering order of M gold sequence families, and the total number of sequences in the first sequence.

In some embodiments, the second sequence information includes the second start information, the cyclic shift step, the numbering order of M gold sequence families, and the total number of sequences in the first sequence.

Illustratively, the gold sequence family numbered u is determined based on the second starting information, the cyclic offset of the gold sequence family is determined based on the cyclic shift step, and the first preferred pair of m-sequences is cyclically shifted based on the determined cyclic offset. The first preferred pair of m-sequences is the preferred pair of m-sequences used to generate the gold sequence family numbered u, and a total of R gold sequences are acquired. It is determined whether R is less than the total number of sequences S in the first sequence. If R < S, cyclic shift is continually performed on a second preferred pair of m-sequences based on the cyclic offset. The second preferred pair of m-sequences is the preferred pair of m-sequences used to generate the gold sequence family numbered d. The gold sequence family numbered d immediately follows the gold sequence family numbered u. And so on, until the total number of gold sequences acquired is greater than or equal to the total number of sequences in the first sequence S.

The principle of determining Z gold sequence families based on the second start information, the cyclic shift step, the numbering order of M gold sequence families, and the total number of sequences in the first sequence is similar to the principle of determining X first m-sequences based on the first start information, the cyclic shift step, the numbering order of N first m-sequences, and the total number of sequences in the first sequence in the embodiment illustrated in FIG. 10. The difference lies in that one gold sequence family is generated through a preferred pair of m-sequences. During the cyclic shift process, only one m-sequence from the preferred pair of m-sequences may be shifted (corresponding to method 1 for forming the gold sequence family), or two m-sequences from the preferred pair of m-sequences may be shifted (corresponding to method 2 for forming the gold sequence family). Alternatively, the gold sequence acquired through cyclic shift can be further shifted (corresponding to method 3 for forming the gold sequence family). Therefore, compared to the first m-sequence, one preferred pair of m-sequences can generate a larger number of gold sequences; compared to the total number of sequences generated based on X first m-sequences, it is more likely to acquire a larger total number of sequences based on Z gold sequence families.

In the embodiment of the present disclosure, an illustrative example is provided where the lengths of the gold sequences within Z gold sequence families are all equal. This does not mean that the case where the lengths of the Z gold sequence families are not equal is excluded.

In some embodiments, the cyclic shift step *N_{CS}* is defined in the communication protocol, and/or indicated by the network device, and/or determined by the terminal device. For example, the cyclic shift step *N_{CS}* is associated with the cell radius, which can also be understood as the cyclic shift step *N_{CS}* is associated with the coverage radius of the network device, and the terminal device determines the cyclic shift step *N_{CS}* based on the cell radius. For instance, the cyclic shift step *N_{CS}* is associated with the cell identifier, and the terminal device determines the cyclic shift step *N_{CS}* based on the cell identifier.

Illustratively, the shift register stage number r=5, the communication protocol specifies *N_{CS}* = 2 and that the first sequence corresponding to one cell includes a total number of sequences *S* = 64 . The network device indicates the numbering order of M gold sequence families is 3,7,1,0,5,6,4,2. Assuming that the length of each of the M gold sequence families is *L* = 63. The network device indicates that the first start information=2. Subsequent to receiving the instructions from the network device, the terminal device determines the gold sequence family with the number 7 based on the first start information. Assuming that the gold sequence family with the number 7 includes a total of 2*^{r}* +1 = 33 gold sequences (including the preferred pair of m-sequences itself), it is clear that 33<64. Then, based on the numbering order of the M gold sequence families, the gold sequence family with the number 1 is determined. The gold sequence family with the number 1 can also acquire up to 33 gold sequences after cyclic shift, and it is clear that 33*2>64. Therefore, Z gold sequence families include the gold sequence families with the numbers 7 and 1. The first sequence includes 31 gold sequences from the gold sequence family with the number 7 and the gold sequence family with the number 1.

In some embodiments, the second sequence information includes the second start information, the cyclic offset C, the numbering order of M gold sequence families, and the total number of sequences in the first sequence. The principle of this case is similar to the previous case where "the second sequence information includes the first start information, the cyclic shift step *N_{CS}*, the numbering order of N first m-sequences, and the total number of sequences in the first sequence S". The difference lies in that the cyclic offset C does not need to be determined by the cyclic shift step *N_{CS}* , but can be directly determined based on the second sequence information.

In some embodiments, the second sequence information includes the second start information, a cyclic offset set, the numbering order of M gold sequence families, and the total number of sequences in the first sequence. Optionally, different cyclic offset sets can be configured for different gold sequence families to achieve more flexible cyclic shifts.

In some embodiments, the second sequence information includes the number of the preamble sequence transmitted by the terminal device in the first sequence. Alternatively, the second sequence information includes the number of the preamble sequence transmitted by the terminal device in the first sequence and the numbering order of M gold sequence families. Illustratively, the terminal device uniquely determines the preamble sequence to be transmitted based on the number of the preamble sequence to be transmitted in the first sequence, and then directly generates the preamble sequence based on the stored and/or configured sequence information.

In some embodiments, the second sequence information includes the number of the preamble sequence transmitted by the terminal device in the first sequence and the cyclic offset. Alternatively, the second sequence information includes the number of the preamble sequence transmitted by the terminal device in the first sequence, the cyclic offset, and the numbering order of M gold sequence families. Illustratively, the terminal device uniquely determines the preamble sequence to be transmitted based on the number of the preamble sequence to be transmitted in the first sequence, and then directly generates the preamble sequence based on the stored and/or configured sequence information and the cyclic offset.

In some embodiments, the second sequence information includes the number of the preamble sequence transmitted by the terminal device in the first sequence and the cyclic shift step. Alternatively, the second sequence information includes the number of the preamble sequence transmitted by the terminal device in the first sequence, the cyclic shift step, and the numbering order of M gold sequence families. Illustratively, the terminal device uniquely determines the preamble sequence to be transmitted based on the number of the preamble sequence in the first sequence, determines the cyclic offset based on the cyclic shift step, and then directly generates the preamble sequence based on the stored and/or configured sequence information and the cyclic offset.

**Subsequent to determining Z gold sequence families, the first sequence can be generated. Next, we will introduce the sequence arrangement within the first sequence.**

In some embodiments, the numbering order of the Z gold sequence families corresponding to the first sequence follows the numbering order of these groups within the M gold sequence families. That is, the numbering order of these Z gold sequence families when generating the first sequence is the same as the numbering order of these Z gold sequence families within the M gold sequence families. Illustratively, the numbering order of the M gold sequence families is 0,1,2···,8, assuming the Z gold sequence families include gold sequence families numbered 2, 3, 4, and 5, then when generating the first sequence, the Z gold sequence families are still numbered in the numbering order of 2, 3, 4, and 5.

In some embodiments, the numbering order of Z gold sequence families when generating the first sequence is determined based on at least one of: the number of the preferred pair of the m-sequences, the coefficients of the corresponding primitive polynomial, or the binary numbers of the coefficients of the corresponding primitive polynomial.

In some embodiments, the numbering order of the Z gold sequence families when generating the first sequence is either default, random, arranged according to a specific rule, defined in a communication protocol, or indicated by a network device.

In some embodiments, the numbering order of the Z gold sequence families when generating the first sequence is different from the numbering order of these Z gold sequence families in the M gold sequence families. For example, these Z gold sequence families are arranged according to ascending order of their number values, or descending order of their number values, or a sequence in which the coefficients of the primitive polynomial are from lower powers to higher powers, or a sequence in which the coefficients of the primitive polynomial are from higher powers to lower powers, or descending order of the binary numbers of the primitive polynomial, or ascending order of the binary numbers of the primitive polynomial, or ascending order of the numbers of the preferred pairs of m-sequences, or the like.

Then, the numbering order within each gold sequence family can be default, random, arranged according to a specific rule, defined in a communication protocol, or indicated by a network device.

Illustratively, the numbering order of gold sequences within each gold sequence family is arranged according to ascending order of cyclic offsets, or descending order of cyclic offsets.

Optionally, the rules for the numbering order within different gold sequence families may be the same or different. Here, we take the case of different numbering rules as an example. First, according to the numbers of the preferred pairs of m-sequences, the numbering order of the Z gold sequence families is arranged as 0,1,2···,8 , the gold sequences within the gold sequence family numbered 0 are arranged according to the ascending order of cyclic offsets, while the gold sequences within gold sequence families with other numbers are arranged according to the descending order of cyclic offsets. If the numbering rules are the same, then for example, the numbering orders within the Z gold sequence families are arranged according to the ascending order of cyclic offsets, or the descending order of cyclic offsets.

According to the previous content, the first sequence includes all or part of the gold sequences in Z gold sequence families.

If the first sequence includes some gold sequences in the Z gold sequence families, then the determination of these gold sequences has room for further discussion. Optionally, these gold sequences are randomly selected, or indicated by the network device, or defined in the communication protocol, or determined by the terminal device. Optionally, these gold sequences are determined based on at least one of: the cell identifier, the numbering order of the gold sequence families, the numbering order of the gold sequences, or the first number (i.e., the number of gold sequences in the first sequence mentioned earlier).

Illustratively, the first sequence includes a portion of gold sequences in Z gold sequence families, wherein this portion of gold sequences are either gold sequences ordered earlier in numbering in the Z gold sequence families or gold sequences with smaller cyclic offsets.

Illustratively, the first sequence includes a portion of gold sequences in Z gold sequence families, wherein this portion of gold sequences are either gold sequences ordered later in numbering in the Z gold sequence families or gold sequences with larger cyclic offsets.

Illustratively, the first sequence includes a portion of gold sequences in Z gold sequence families, and this portion of gold sequences are gold sequences with odd or even numbers in the Z gold sequence families.

Subsequent to sorting the gold sequences of Z gold sequence families based on the aforementioned method, the first sequence corresponding to the required number (such as S) can be acquired. The numbers of each sequence within the first sequence can correspond to the numbers of the preamble sequences, that is, the numbers of sequences within the first sequence are one-to-one corresponding to the numbers of the preamble sequences. For example, the gold sequence with number 0 within the first sequence corresponds to the preamble sequence with number 0; the gold sequence with number 1 within the first sequence corresponds to the preamble sequence with number 1; and so on. Similarly, the gold sequence with number 0 within the first sequence corresponds to the preamble sequence with number 1; the gold sequence with number 1 within the first sequence corresponds to the preamble sequence with number 2; and so on.

By method one, we can determine the first sequence corresponding to one cell. Then, whether it is supported for different cells to use the same first sequence is open for further discussion.

Similar to the case where the first sequence is constructed based on the m-sequences, the embodiments of the present disclosure support different cells corresponding to completely identical first sequences, partially identical first sequences, or completely different first sequences.

Whether different cells use the same first sequence, combined with the generation of Z gold sequence families, there may be the following three cases:

1. Different cells correspond to the same M gold sequence families and the same Z gold sequence families. For example, this can be achieved by indicating the same second sequence information for different cells, or by defining in the communication protocol that different cells use the same second sequence information.

2. Different cells correspond to the same M gold sequence families and different Z gold sequence families. For example, this is achieved by assigning different second sequence information to different cells. Illustratively, the network device indicates different second start information for different cells, and the communication protocol specifies that the cyclic shift steps for different cells are different, then naturally, the Z gold sequence families are different. Illustratively, the network device indicates the same second start information, and the communication protocol specifies that the values of Z corresponding to different cells are different, then naturally, the Z gold sequence families corresponding to different cells are different. Illustratively, the communication protocol specifies that different cells use the same preferred pair of m-sequences, and the network device indicates the cyclic shift steps for different cells respectively, or the terminal device autonomously determines the cyclic shift steps, then naturally, the second gold sequence families corresponding to different cells are also different. Illustratively, the network device indicates different second start information and different cyclic shift steps to different cells, such that different cells correspond to different Z gold sequence families.

3. Different cells correspond to different M gold sequence families and different Z gold sequence families. For example, let different cells correspond to different shift register stages, such that the number of preferred pairs of m-sequences corresponding to each cell is different, thereby achieving different M gold sequence families for different cells. The network device indicates different first start information and different cyclic shift steps to different cells, such that different cells correspond to different Z gold sequence families.

**Next, we will introduce Method two, which involves generating the first sequence corresponding to one cell based on the gold sequence subset.**

The gold sequence subset is a subset of the gold sequence set. The gold sequence set includes at least one gold sequence family. One gold sequence family is generated based on one preferred pair of m-sequences. For the relevant design of the gold sequence family, refer to Scheme 1.

In some embodiments, the gold sequence set includes at least one gold sequence family, and the gold sequence subset includes at least one gold sequence family.

In some embodiments, the number of gold sequence families within the gold sequence set is determined based on at least one of: the stage number r of the shift register, the cyclic offset, the cyclic shift step, the length of the m-sequence, or the number of preferred pairs of m-sequences.

In some embodiments, the number of gold sequence families within the gold sequence set is determined based on the order r and the cyclic offset, or based on the order r and the cyclic shift step, or based on the number of preferred pairs of m-sequences.

In some embodiments, the gold sequence subset is a subset of the gold sequence set. Optionally, the gold sequence subset can be any subset of the gold sequence set. It can be understood that any set is a subset of itself, therefore, the m-sequence subset can also be the m-sequence set itself. Optionally, the gold sequence subset is a subset selected from the gold sequence set according to a specific rule. Optionally, the gold sequence subset is a default subset of the gold sequence set in the communication system.

In some embodiments, the gold sequence subset is determined or selected by the terminal device from the gold sequence set. Alternatively, the gold sequence subset is indicated by the network device.

Next, we will first introduce the design of the gold sequence set, and then explain how the gold sequence subset is determined, selected, or indicated.

**Firstly, the design of the gold sequence set is introduced.** It can be understood that, for ease of distinction, each gold sequence family within the gold sequence set should have a one-to-one corresponding number or index. The embodiment of the present disclosure uses the number as an example for illustration.

In some embodiments, all gold sequence families within the gold sequence set are first arranged according to a specific rule, and then assigned numbers. Alternatively, all gold sequence families within the gold sequence set are first randomly arranged, and then assigned numbers.

In some embodiments, all gold sequence families within the gold sequence set are first assigned numbers, and then all gold sequence families are arranged according to a specific rule. Alternatively, all gold sequence families within the gold sequence set are first assigned numbers, and then all gold sequence families are randomly arranged. Therefore, the final numbering order within the gold sequence set may be scrambled.

In some embodiments, the numbering order of the gold sequence family within the gold sequence set is default, random, arranged according to a specific rule, defined in a communication protocol, or indicated by a network device.

Illustratively, each gold sequence family within the gold sequence set has a one-to-one corresponding number, and the numbering order of the gold sequence families within the gold sequence set is arranged according to ascending order of the numerical values of the numbers, or descending order of the numerical values of the numbers.

In some embodiments, the numbering order of gold sequence families within a gold sequence set is determined based on at least one of: the order, the number of gold sequences within the gold sequence family, the length of gold sequences within the gold sequence family, the number of the gold sequence family, the number of gold sequences within the gold sequence family, the number of the corresponding m-sequence, the numbering order of the corresponding m-sequences, the coefficients of the corresponding primitive polynomial, the binary numbers of the coefficients of the corresponding primitive polynomial, or the cyclic offset.

In some embodiments, the numbering order of the gold sequence families within the gold sequence set is determined based on the number and/or numbering order of the m-sequences that generate the gold sequence families.

In some embodiments, the numbering order of the gold sequence families within the gold sequence set is consistent with the numbering order of their corresponding preferred pairs of m-sequences.

In some embodiments, the numbering order of the gold sequence families within the gold sequence set is arranged according to the descending order of the numbers of the preferred pairs of m-sequences. Alternatively, the numbering order of the gold sequence families within the gold sequence set is arranged according to the ascending order of the numbers of the preferred pairs of m-sequences.

In some embodiments, the numbering order of the gold sequence families within the gold sequence set is arranged according to the ascending order of the product of the numbers of the two m-sequences in each preferred pair of m-sequences. Alternatively, the numbering order of the gold sequence families within the gold sequence set is arranged according to the descending order of the product of the numbers of the two m-sequences in each preferred pair of m-sequences.

In some embodiments, the numbering order of the gold sequence families within the gold sequence set is arranged according to the ascending order of the sum of the numbers of the two m-sequences in each preferred pair of m-sequences. Alternatively, the numbering order of the gold sequence families within the gold sequence set is arranged according to the descending order of the sum of the numbers of the two m-sequences in each preferred pair of m-sequences.

In some embodiments, the numbering order of the gold sequence families within the gold sequence set is first arranged based on the m-sequences with smaller numbers in the preferred pairs, and then arranged based on the m-sequences with larger numbers in the preferred pairs. Alternatively, the numbering order of the gold sequence families within the gold sequence set is first arranged based on the m-sequences with larger numbers in the preferred pairs, and then arranged based on the m-sequences with smaller numbers in the preferred pairs.

Assuming in a preferred pair of m-sequences, the m-sequence with a smaller number is referred to as sequence E, while the m-sequence with a larger number is referred to as sequence F. For instance, the preferred pair of m-sequences C is {0,1}, then within this preferred pair C, the m-sequence with the number 0 is referred to as sequence E, and the m-sequence with the number 1 is referred to as sequence F. Similarly, the preferred pair of m-sequences D is {1,2}, then within this preferred pair, the m-sequence with the number 1 is referred to as sequence E, and the m-sequence with the number 2 is referred to as sequence F.

Illustratively, assume M preferred pairs of m-sequences are {0,1}, {1,2}, {0,3}, {4,6}, {1,5}. If the arrangement is first performed according to the descending order of the numbers of the sequences E in the preferred pairs, there are two preferred pairs of m-sequences where the sequence E numbers are both 0, and two preferred pairs of m-sequences where the sequence E numbers are both 1, then the arrangement is performed according to the descending order of the numbers of the sequences F in the preferred pairs, thus the arrangement order of M preferred pairs of m-sequences can be acquired as: {4,6}, {1,5}, {1,2}, {0,3}, {0,1}.

Illustratively, assume that the M preferred pairs of m-sequences are {0,1}, {1,2}, {0,3}, {4,6}, and {1,5}, if the arrangement is first performed according to the descending order of the numbers of the sequences F in the preferred pairs, the arrangement order of the M preferred pairs of m-sequences can be acquired as: {4,6}, {1,5}, {0,3}, {1,2}, and {0,1}.

Illustratively, assume the M preferred pairs of m-sequences are {0,1}, {1,2}, {0,3}, {4,6}, and {1,5}. If the arrangement is first performed according to the ascending order of the numbers of the sequences F in the preferred pairs, the arrangement order of the M preferred pairs of m-sequences can be acquired as: {0,1}, {1,2}, {0,3}, {1,5}, and {4,6}.

It can be understood that when arranging sequences E and F in the preferred pairs, the order is not limited to ascending or descending order. They can also be arranged according to the coefficients of the primitive polynomial, the binary numbers of the coefficients of the primitive polynomial, or the like. For specific details, please refer to the arrangement rules mentioned earlier.

In some embodiments, the numbering order of the M gold sequence families is first based on the 1^{st} m-sequence in the preferred pair, and then on the 2^{nd} m-sequence in the preferred pair. Alternatively, the numbering order of the M gold sequence families is first based on the 2^{nd} m-sequence in the preferred pair, and then on the 1^{st} m-sequence in the preferred pair.

For example, the preferred pair of m-sequences C is {0,1}, then the 1^{st} m-sequence in the preferred pair of m-sequences C is the m-sequence on the left, which is the m-sequence numbered 0; the 2^{nd} m-sequence is the m-sequence on the right, which is the m-sequence numbered 1. Another example, the preferred pair of m-sequences D is {2,1}, then the 1^{st} m-sequence in the preferred pair of m-sequences D is the m-sequence on the left, which is the m-sequence numbered 2, and the 2^{nd} m-sequence is the m-sequence on the right, which is the m-sequence numbered 1.

Illustratively, the M preferred pairs of m-sequences are {0,1}, {2,1}, {0,3}, {4,6}, and {1,5}. If the preferred pairs are first arranged according to the ascending order of the numbers of the 1^{st} m-sequences, there are two preferred pairs where the 1^{st} m-sequence has the number of 0. Then, the preferred pairs are arranged according to the ascending order of the number of the 2^{nd} m-sequences, the arrangement order of the M preferred pairs of m-sequences can be acquired as: {0,1}, {0,3}, {1,5}, {2,1}, and {4,6}.

Illustratively, the M preferred pairs of m-sequences are {0,1}, {2,1}, {0,3}, {4,6}, and {1,5}. If the preferred pairs are first arranged according to the descending order of the number of the 2^{nd} m-sequences, there are two preferred pairs wherein the 2^{nd} m-sequence has the number of 1. Then, the preferred pairs are arranged according to the descending order of the numbers of the 1^{st} m-sequences, the arrangement order of the M preferred pairs of m-sequences can be acquired as: {4,6}, {1,5}, {0,3}, {2,1}, and {0,1}.

It can be understood that when arranging according to the 1^{st} m-sequence and the 2^{nd} m-sequence in each preferred pair, the order is not limited to ascending or descending order. They can also be arranged according to the coefficients of the primitive polynomial, the binary numbers of the coefficients of the primitive polynomial, or the like. For specific details, please refer to the arrangement rules mentioned earlier.

**Next, we will introduce how the gold sequence subset is determined, selected, or indicated.**

In some embodiments, the number of gold sequences within a gold sequence subset is preconfigured or defined in the communication protocol.

In some embodiments, the gold sequence subset is randomly selected by the terminal device from the gold sequence set. Alternatively, the gold sequence subset is a default subset of the gold sequence set. For example, the gold sequence subset is a default subset consisting of gold sequences with odd numbers, or a default subset consisting of gold sequences with numbers from 1 to 64, or a default subset consisting of gold sequences arranged in the last few positions, and so on.

In some embodiments, the gold sequence set is divided into x gold sequence subsets ( *x* ≥ 1), wherein each gold sequence subset has a one-to-one corresponding set number.

In some embodiments, the gold sequence subset is indicated by the network device. For example, the network device indicates the set number of the gold sequence subset over signaling. The signaling can be one or more of system information, RRC signaling, MAC CE, DCI, or the like.

In some embodiments, the gold sequence subset used to generate the first sequence is determined or selected based on the cell identifier of the terminal device. Illustratively, the set number of the gold sequence subset is determined based on the cell identifier of the terminal device.

In some embodiments, the set number of the gold sequence subset used to generate the first sequence is equal to the cell identifier of the terminal device. For example, the cell identifier of the terminal device is 20, the gold sequence subset used to generate the first sequence is the gold sequence subset with the number 20 in the gold sequence set.

In some embodiments, the set number of the gold sequence subset used to generate the first sequence is determined based on the mathematical operation result of the cell identifier of the terminal device.

Illustratively, the set number of the gold sequence subset used to generate the first sequence is equal to the modulo result of the terminal device's cell identifier and x. For example, the terminal device's cell identifier is 18 and x is 5, then 18 mod 5 = 3 ,so the gold sequence subset used to generate the first sequence is the subset of the gold sequence set numbered 3._{∘}

Illustratively, the set number of the gold sequence subset used for generating the first sequence is equal to an integer multiple of the cell identifier of the terminal device, or equal to the upward rounding result of the quotient of the cell identifier of the terminal device and x, or equal to the downward rounding result of the quotient of the cell identifier of the terminal device and x, and so on.

Subsequent to sorting the gold sequences within the gold sequence set based on the aforementioned method, the gold sequence subset can be acquired. Based on the gold sequence subset and the total number of sequences in the first sequence S, the corresponding required number of first sequences can be acquired. The first sequence includes all or part of the gold sequences in the gold sequence subset. The numbers of sequences in the first sequence can correspond to the numbers of the preamble sequences, that is, the numbers of sequences in the first sequence are one-to-one corresponding to the numbers of the preamble sequences. For example, the gold sequence numbered 0 in the first sequence corresponds to the preamble sequence numbered 0; the gold sequence numbered 1 in the first sequence corresponds to the preamble sequence numbered 1; and so on. Similarly, the gold sequence numbered 0 in the first sequence corresponds to the preamble sequence numbered 1; the gold sequence numbered 1 in the first sequence corresponds to the preamble sequence numbered 2; and so on.

By using Scheme 2, we can determine the gold sequence subset corresponding to one cell. However, whether it is feasible for different cells to use the same gold sequence subset remains a topic for further discussion.

Similar to Scheme 1, the embodiments of the present disclosure support different cells corresponding to either completely identical gold sequence subsets, partially identical gold sequence subsets, or completely different gold sequence subsets. Whether the gold sequence subsets are identical can be determined by comparing the set numbers or by comparing the numbers of gold sequences within the gold sequence subsets.

If different cells correspond to different gold sequence subsets, different first sequences can be generated for different cells, enabling terminal devices within different cells to select preamble sequences from different first sequences, thereby minimizing preamble conflicts and interference issues between cells.

Illustratively, assume that cell A corresponds to the gold sequence subset {0,2,4,6,8} with set number 2, indicating that the first sequence adopted by cell A includes gold sequences with sequence numbers 0, 2, 4, 6, and 8. Assume that cell B corresponds to the gold sequence subset {1,5,7} with set number 5, indicating that the first sequence adopted by cell B includes gold sequences with sequence numbers 1, 5, and 7. It can be seen that the gold sequence subset corresponding to cell A is different from the gold sequence subset corresponding to cell B, and naturally, the first sequences generated based on different gold sequence subsets are also different. Therefore, when terminal devices within cell A and terminal devices within cell B transmit preamble sequences, the possibility of conflict and interference is significantly reduced.

Subsequent to understanding how the first sequence is generated, we can further consider how to generate the preamble sequence transmitted by the terminal device. The embodiments of the present disclosure provide two schemes for generating the preamble sequence.

Scheme 1: According to the method one or method two mentioned above, the terminal device generates the first sequence. When transmitting the preamble sequence, one sequence is randomly selected from the first sequence as the preamble sequence.

It can be seen that in Scheme 1, the terminal device actually generates a preamble sequence set for the cell wherein the terminal device is located, and selects one from the generated preamble sequence set when it needs to transmit the preamble sequence.

Scheme 2: The terminal device first determines the number of the preamble sequence to be transmitted in the first sequence, and then generates the preamble sequence according to Method one or Method two described earlier.

It can be seen that in Scheme 2, the terminal device only needs to generate the preamble sequence it needs to transmit in a one-to-one correspondence.

**Next, we first introduce Scheme 1 for generating the preamble sequence:** the generation of the first sequence can refer to Method one (generate the first sequence corresponding to one cell based on Z gold sequence families) or Method two (generate the first sequence corresponding to one cell based on a gold sequence subset) described earlier.

In some embodiments, subsequent to generating the first sequence corresponding to one cell, the terminal device stores the first sequence in a memory, which can be local or non-local, such as a server, cloud platform, virtualization center, or the like.

In some embodiments, different terminal devices within the same cell respectively and randomly select one sequence from the first sequence as the preamble sequence. Alternatively, different terminal devices within the same cell respectively select one sequence from the first sequence according to a specific rule as the preamble sequence. The preamble sequences selected by different terminal devices should be different to avoid preamble conflicts within the cell. However, it is not excluded that different terminal devices may select the same preamble sequence, which will cause conflicts. In this case, the network device and the conflicting terminal devices need to reconfirm the random access situation subsequently.

**Next, we introduce the second scheme for generating the preamble sequence:**

Since only the preamble sequence to be transmitted needs to be generated in a one-to-one correspondence, determining which one the preamble sequence is in the first sequence is of primary importance. Optionally, the network device indicates to the terminal device that the preamble sequence has a number *I_{S}* in the first sequence, or the communication protocol specifies that the terminal device uses the preamble sequence with a number *I_{S}* in the first sequence, or the terminal device autonomously determines that the preamble sequence has a number *I_{S}* in the first sequence.

In some embodiments, the i^{th} sequence in the first sequence is determined based on at least one of: the second start information, the cyclic shift step, or the value of i; where the value of i is greater than or equal to 0 and less than the total number of sequences in the first sequence.

By combining *I_{S}* with other second sequence information, such as one or more of the second start information, the cyclic shift step *N_{CS}*, and the numbering order of M gold sequence families, it is possible to determine which preferred pair of m-sequences the preamble sequence corresponds to, and thus which gold sequence family it corresponds to.

Illustratively, the second sequence information includes the number of the preamble sequence transmitted by the terminal device in the first sequence *I_{S}* , and the numbering order of M gold sequence families. The terminal device uniquely determines the preamble sequence to be transmitted based on *I_{S}* , and then can directly generate the preamble sequence based on the stored and/or configured sequence information and cyclic shift step *N_{CS}* .

**The embodiments of the present disclosure support the adoption of a formulaic representation for the Scheme 2 of the aforementioned preamble sequence.**

Assuming that the target preferred pair of m-sequences determined by combining *I_{S}* with other second sequence information includes the fourth m-sequence and the fifth m-sequence, that is, the preamble sequence is generated based on the fourth m-sequence and the fifth m-sequence.

First, we will introduce how to determine the target preferred pair of m-sequences.

In some embodiments, the number of the target preferred pair of m-sequences is determined based on at least one of: the number of the preamble sequence in the first sequence *I_{S}*, the second start information, the cyclic shift step *N_{CS}* , or the numbering order of M gold sequence families.

The position of the target gold sequence family in M gold sequence families is the ${\left⌈{I}_{S}/Q\right⌉}^{th}$ position starting from the position indicated by the second start information, that is, the target gold sequence family is the gold sequence family ranked $e + {\left⌊{I}_{S}/Q\right⌋}^{th}$ in M gold sequence families. Here, e is the value indicated by the second start information, Q represents the number of gold sequences in one gold sequence family, and *I_{S}* represents the number of the preamble sequence in the first sequence. The target gold sequence family is the gold sequence family where the target sequence is located. The target sequence is used to generate the preamble sequence, and the preamble sequence can be acquired by modulating the target sequence. By determining the target gold sequence family, the preferred pair of target m-sequences is determined.

Illustratively, the numbering order is 0,1, 2, 3, 4, 5, 6, 7, 8 , assuming the second start information indicates 1, *I_{S}* = 50, Q = 12, then the position of the target gold sequence family is the fifth position starting from the first position in the M gold sequence families. Alternatively, it can be understood that the target gold sequence family is the gold sequence family ranked $e + \left⌊{I}_{S}/Q\right⌋ = 1 + 4 = 5$ in the M gold sequence families. Therefore, it can be determined that the target gold sequence family is the gold sequence family numbered 4.

Illustratively, the numbering order of M gold sequence families is 5,1,0,4,3,2,7,8,6. If the second start information indicates 3, it means that the first sequence corresponding to the cell is generated based on the gold sequence family numbered 0 and several gold sequence families subsequent to the gold sequence family numbered 0. Assuming that each preferred pair of m-sequences can generate 17 gold sequences based on the order r. If the preamble sequence is numbered *I_{S}* = 30 in the first sequence, then considering that the gold sequence family numbered 0 includes a total of 17 gold sequences, 30-17=13, the preamble sequence should be a gold sequence in the gold sequence family numbered 4. That is, the target preferred pair of m-sequences is the preferred pair of m-sequences corresponding to the gold sequence family numbered 4. Therefore, the target sequence is the 13^{th} gold sequence in the gold sequence family numbered 4.

In some embodiments, the number of the target preferred pair of m-sequences and the number of the target gold sequence family are determined based on the cell identifier. For example, the number of the target gold sequence family is determined based on the modulo result of the cell identifier and M.

In some embodiments, the sequence element numbered n in the preamble sequence is determined based on the sequence element numbered a in the fourth m-sequence and the sequence element numbered b in the fifth m-sequence. Alternatively, it can be understood as that the value of the n^{th} bit in the preamble sequence is determined based on the value of the a^{th} bit in the fourth m-sequence and the value of the b^{th} bit in the fifth m-sequence. Here, the fourth m-sequence and the fifth m-sequence constitute one preferred pair of m-sequences, with the fourth m-sequence being one m-sequence in the pair and the fifth m-sequence being the other.

In some embodiments, a is determined based on at least one of: n, a parameter m₀, or the second length value. b is determined based on at least one of: n, a parameter m₁, or the second length value. The parameter m₀ represents the cyclic offset of the fourth m-sequence when generating the preamble sequence, and the parameter m₁ represents the cyclic offset of the fifth m-sequence when generating the preamble sequence.

The second length value is the length value of the fourth m-sequence, which is also the length value of the fifth m-sequence. n is greater than or equal to 0 and less than the second length value.

In some embodiments, a is determined based on the second modulo result. The second modulo result is the modulo result of the second sum value and the second length value. The second sum value is the sum of n and parameter m_{0.}

In some embodiments, b is determined based on the third modulo result. The third modulo result is the modulo result of the third sum and the second length value. The third sum is the sum of n and the parameter m₁.

In some embodiments, the sequence element numbered n in the preamble sequence is the third product, which can also be understood as the value of the n^{th} bit in the preamble sequence being equal to the third product. The third product is the product of the first difference and the second difference. The first difference is the difference between the numerical value 1 and the fourth product, wherein the fourth product is the product of the numerical value 2 and the sequence element numbered a in the fourth m-sequence. The second difference is the difference between the numerical value 1 and the fifth product, wherein the fifth product is the product of the numerical value 2 and the sequence element numbered b in the fifth m-sequence.

Illustratively, the preamble sequence can be represented as Equation (12). Here, *d _{preamble}(n)* represents the preamble sequence, *x*₀(*n*) represents the fourth m-sequence used to generate the preamble sequence, *x*₁(*n*) represents the fifth m-sequence used to generate the preamble sequence, and L represents the second length value. ${d}_{preamble} \left(n\right) = \left[1-2{x}_{0}\left(\left(n+{m}_{0}\right)modL\right)\right] ⋅ \left[1-2{x}_{1}\left(\left(n+{m}_{1}\right)mod L\right)\right]$ (12)

In some embodiments, equation (12) is applicable to the case where the preamble sequence is acquired through BPSK modulation.

In some embodiments, the sequence element numbered n in the preamble sequence is the modulo-2 result of the sum of the sequence element numbered a in the fourth m-sequence and the sequence element numbered b in the fifth m-sequence. Alternatively, it can be understood as that the value of the n^{th} bit in the preamble sequence is equal to the modulo-2 result of the sum of the value of the a^{th} bit in the fourth m-sequence and the value of the b^{th} bit in the fifth m-sequence.

Illustratively, the preamble sequence can be represented as Equation (13). Here, *d _{preamble}(n)* represents the preamble sequence, *x*₀(*n*) represents the fourth m-sequence used to generate the preamble sequence, *x*₁(*n*) represents the fifth m-sequence used to generate the preamble sequence, and L represents the second length value.${d}_{preamble} \left(n\right) = \left[{x}_{0}\left(\left(n+{m}_{0}\right)mod L\right)+{x}_{1}\left(\left(n+{m}_{1}\right)mod L\right)\right] mod 2$ (13)

In some embodiments, equation (13) is applicable to the case where the preamble sequence is acquired through OOK modulation.

In some embodiments, the parameters m₀ and m₁ are determined based on the number of the preamble sequence in the first sequence. Assume that the number of the preamble sequence in the first sequence is *I_{S}* .

In some embodiments, the parameter m₀ is determined based on the first sub-identifier, and the parameter m₁ is determined based on the second sub-identifier. Assuming that the first sub-identifier is represented as ${N}_{ID}^{\left(1\right)}$ and the second sub-identifier is represented as ${N}_{ID}^{\left(2\right)}$.

In some embodiments, the first sub-identifier ${N}_{ID}^{\left(1\right)}$ and the second sub-identifier ${N}_{ID}^{\left(2\right)}$ are determined based on the number of the preamble sequence in the first sequence.

**Regarding the determination of parameters m₀, m₁, the first sub-identifier** ${N}_{ID}^{\left(1\right)}$**, and the second sub-identifier** ${N}_{ID}^{\left(2\right)}$**, the embodiments of the present disclosure provide two calculation methods:**

### Calculation method 1:

In some embodiments, the first sub-identifier ${N}_{ID}^{\left(1\right)}$ and the second sub-identifier ${N}_{ID}^{\left(2\right)}$ are determined based on the number of the preamble sequence in the first sequence *I_{S}* and/or the cyclic shift step *N_{CS}* . Where, 1 ≤ *N_{CS}* ≤ *S* , *S* represents the total number of sequences in the first sequence.

In some embodiments, ${I}_{S} = {N}_{CS} ∗ {N}_{ID}^{\left(1\right)} + {N}_{ID}^{\left(1\right)}$, where ${N}_{ID}^{\left(1\right)} ∈ \left\{0,1⋯,\left⌊\frac{S}{{N}_{CS}}\right⌋-1\right\}$, ${N}_{ID}^{\left(2\right)} ∈ \left\{0,1⋯,{N}_{CS}-1\right\}$.

In some embodiments, the parameter m₀ is determined based on the modulo result of the first sub-identifier and the parameter G, and the parameter m₁ is determined based on the modulo result of the second sub-identifier and the parameter F.

In some embodiments, the parameter m₀ is equal to the modulo result of the first sub-identifier and the parameter G, and the parameter m₁ is equal to the modulo result of the second sub-identifier and the parameter F. That is, ${m}_{0} = {N}_{ID}^{\left(1\right)} mod G , {m}_{1} = {N}_{ID}^{\left(2\right)} mod F$.

In some embodiments, the parameter m₀ is equal to a q₁ multiple of the modulo result of the first sub-identifier and the parameter G, and the parameter m₁ is equal to a q₂ multiple of the modulo result of the second sub-identifier and the parameter F. That is, ${m}_{0} = {q}_{1} \left({N}_{ID}^{\left(1\right)}modG\right)$, ${m}_{1} = {q}_{2} {N}_{ID}^{\left(2\right)} mod F$ . Where *q₁* is a positive integer, and q₂ is a positive integer.

Optionally, the parameter G is less than the second length value, that is, G<L. Optionally, the parameter F is less than the second length value, that is, F<L.

Optionally, the parameter m₀ is less than the second length value, that is, m₀<L. Optionally, the parameter m₁ is less than the second length value, that is, m₁<L.

In some embodiments, the parameter G and the parameter F are determined based on the total number of sequences in the first sequence.

In some embodiments, assuming the total number of sequences in the first sequence is S, the product of parameter G and parameter F equals S, that is, G*F=S. It can also be understood that parameter G and parameter F are divisors of S. For example, S=64, then G=8, F=8; or G=1, F=64; or G=2, F=32; or G=4, F=16; or G=1, F=64; or G=16, F=4; or G=32, F=2; or G=64, F=1.

In some embodiments, the sum of parameter G and parameter F equals S, that is, G+F=S. Alternatively, an integer multiple of the product of parameter G and parameter F equals S, and so on.

In some embodiments, *F = N_{CS},* $G = \left⌊S/{N}_{CS}\right⌋$, where 1 ≤ *N_{CS}* ≤ *S .*

**Example 1:** Assume that the communication protocol specifies that the total number of gold sequences within the first sequence is S ( S ≥ 1), and the value range of the numbers or indexes of S gold sequences is 0 to S-1. Assume that parameter G and parameter F are divisors of S, such as G=8, F=8. Assume that the network device indicates that the number of preamble sequence in the first sequence is *I_{S}* = 56, *L* = 63, *N_{CS}* = 3. Assume that one gold sequence family includes Q=12 gold sequences, and the communication protocol specifies that the second start information=1, then the target gold sequence family is the gold sequence family arranged in $1 + \left⌊{I}_{S}/Q\right⌋ = 5$ position in M gold sequence families. At this time, the fourth m-sequence *x₀(n)* and the fifth m-sequence *x₁(n)* correspond to the preferred pair of m-sequences arranged in position 5 in M preferred pairs of m-sequences.

Then, based on ${I}_{S} = {N}_{CS} ∗ {N}_{ID}^{\left(1\right)} + {N}_{ID}^{\left(1\right)} = 56$, we can conclude that ${N}_{ID}^{\left(1\right)} = 18 , {N}_{ID}^{\left(2\right)} = 2$.

According to ${m}_{0} = {N}_{ID}^{\left(1\right)} mod G = 18 mod 8 = 2 , {m}_{1} = {N}_{ID}^{\left(2\right)} mod F = 2 mod 8 = 2$.

If calculated through formula (12), we can acquire *d_{preamble}(n)* = [1- *2x0((n* + 2)mod 63)]·[1- 2x₁*((n* + 2) mod 63)], 0 ≤ n < 63.

If calculated through formula (13), we can acquire *d_{preamble}*(n) = [*x₀((n +* 2) mod 63) + *x₁((n* + 2) mod 63)] mod 2, 0 ≤ n < 63.

**Example 2:** Assume that the communication protocol specifies that the total number of gold sequences within the first sequence is S (S ≥ 1), and the value range of the numbers or indexes of S gold sequences is 0 to S-1. Assume that the network device indicates that the number of the preamble sequence in the first sequence is *I_{S}* =15 , *L* = 63, *N_{CS}* = 4, *q₁* = 3, q₂ = 4 . Assume that one gold sequence family includes Q=12 gold sequences, $\left⌊{I}_{S}/Q\right⌋ = 1$, and the network device indicates that the second start information=2. Then, the target gold sequence family is the gold sequence family ranked 2+1=3 in M gold sequence families. At this time, the fourth m-sequence *x₀(n)* and the fifth m-sequence x₁(n) correspond to the preferred pair of m-sequences ranked 3 in M preferred pairs of m-sequences.

Then, based on ${I}_{S} = {N}_{CS} * {N}_{ID}^{\left(1\right)} + {N}_{ID}^{\left(2\right)} = 15 = 4 {N}_{ID}^{\left(1\right)} + {N}_{ID}^{\left(2\right)}$, we can conclude that ${N}_{ID}^{\left(1\right)} = 3$*,* ${N}_{ID}^{\left(2\right)} = 3$*.*

Based on *F = N_{CS},* $G = \left⌊S/{N}_{CS}\right⌋$*,* we can conclude that F = 4, $G = \left⌊63/4\right⌋ = 15$.

According to ${m}_{0} = {q}_{1} \left({N}_{ID}^{\left(1\right)} mod G\right) = 3 \left(3mod15\right) = 9 , {m}_{1} = {q}_{2} {N}_{ID}^{\left(2\right)} mod F = 4 * 3 mod 4 = 0$.

If calculated through formula (12), we can acquire *d_{preamble}(n)* = [1- *2x0((n* + 9) mod 63)]·[1- 2x₁*((n +* 0) mod 63)], 0 ≤ n < 63 .

If calculated through formula (13), we can acquire *d_{preamble}(n) =* [*x₀((n + 9) mod* 63) + *x₁((n +* 0) mod 63)] mod 2, 0 ≤ *n* < 63.

### Calculation method 2:

In some embodiments, the first sub-identifier ${N}_{ID}^{\left(1\right)}$ and the second sub-identifier ${N}_{ID}^{\left(2\right)}$ are determined based on at least one of: the number of the preamble sequence in the first sequence I_{S}, the cyclic shift step *N_{CS},* the total number of sequences in the first sequence S, or the number of gold sequence families required to form the first sequence V, 1 ≤ *N_{CS}* ≤ *S* .

In some embodiments, ${I}_{S} mod \left(\frac{S}{V}\right) = {N}_{CS} ∗ {N}_{ID}^{\left(1\right)} + {N}_{ID}^{\left(2\right)}$, where ${N}_{ID}^{\left(1\right)} ∈ \left\{0,1⋯,\left⌊S/\left(V*{N}_{CS}\right)-1\right⌋\right\} , {N}_{ID}^{\left(1\right)} ∈ \left\{0,1⋯,{N}_{CS}-1\right\}$.

Optionally, each gold sequence family in the V gold sequence families contains the same number of gold sequences, or each gold sequence family contains a different number of gold sequences.

In some embodiments, the parameter m₀ is determined based on the modulo result of the first sub-identifier and the parameter G, and the parameter m₁ is determined based on the modulo result of the second sub-identifier and the parameter F.

In some embodiments, the parameter m₀ is equal to the modulo result of the first sub-identifier and the parameter G, and the parameter m₁ is equal to the modulo result of the second sub-identifier and the parameter F. That is, ${m}_{0} = {N}_{ID}^{\left(1\right)} mod G , {m}_{1} = {N}_{ID}^{\left(2\right)} mod F$.

In some embodiments, the parameter m₀ is equal to a q₁ multiple of the modulo result of the first sub-identifier and the parameter G, and the parameter m₁ is equal to a q₂ multiple of the modulo result of the second sub-identifier and the parameter F. That is, ${m}_{0} = {q}_{1} \left({N}_{ID}^{\left(1\right)}modG\right)$*,* ${m}_{1} = {q}_{2} {N}_{ID}^{\left(2\right)} mod F$. Where q₁ is a positive integer, and q₂ is a positive integer.

Optionally, the parameter G is less than the second length value, that is, G<L. Optionally, the parameter F is less than the second length value, that is, F<L.

Optionally, the parameter m₀ is less than the second length value, that is, m₀<L. Optionally, the parameter m₁ is less than the second length value, that is, m₁<L.

In some embodiments, the parameter G and the parameter F are determined based on at least one of: the total number of sequences in the first sequence S, the number of gold sequence families required to form the first sequence V, or the cyclic shift step *N_{CS}.*

In some embodiments, the product of parameter G and parameter F equals S/V, that is, G*F=S/V. It can also be understood that parameter G and parameter F are divisors of S/V. For example, S=64, V=2, then G=1, F=32; or G=2, F=16; or G=4, F=8; or G=8, F=4; or G=16, F=2; or G=32, F=1.

In some embodiments, the sum of parameter G and parameter F equals S/V, that is, G+F=S/V. Alternatively, an integer multiple of the product of parameter G and parameter F equals S/V, and so on.

In some embodiments, *F = N_{CS},* $G = \left⌊S/\left(V*{N}_{CS}\right)\right⌋$*,* where 1 ≤ *N_{CS}* ≤ *S.*

**Example** 3: Assume that the communication protocol specifies that the total number of gold sequences within the first sequence is S=64 and forming these 64 gold sequences requires V=2 gold sequence families, with each of these two gold sequence families containing the same number of gold sequences. Therefore, one gold sequence family needs to contain 32 gold sequences. Assume that parameter G and parameter F are divisors of S/V, such as G=4, F=8. Assume that the network device indicates the number of preamble sequence in the first sequence is *I_{S}* = 20, *L* = 63, *N_{CS}* = 3.

Then, based on ${I}_{S} mod \left(S/V\right) = {N}_{CS} * {N}_{ID}^{\left(1\right)} + {N}_{ID}^{\left(2\right)} = 20 mod \left(64/2\right) = 3 {N}_{ID}^{\left(1\right)} + {N}_{ID}^{\left(2\right)}$, we can conclude that ${N}_{ID}^{\left(1\right)} = 6 , {N}_{ID}^{\left(2\right)} = 2$*.*

According to ${m}_{0} = {N}_{ID}^{\left(1\right)} mod G = 6 mod 4 = 2 , {m}_{1} = {N}_{ID}^{\left(2\right)} mod F = 2 mod 8 = 2$.

If calculated through formula (12), we can acquire *d_{preamble}*(*n*) *=* [1- 2*x*₀((*n* + 2) mod 63)]·[1- 2*x*₁*((n* + 2) mod 63)], 0 ≤ n < 63.

If calculated through formula (13), we can acquire *d_{preamble}*(n) *=* [*x₀((n +* 2) mod 63) + *x*₁((*n* + 2) mod 63)] mod 2 , 0 ≤ n < 63 .

**Example 4:** Assume that the communication protocol specifies that the total number of gold sequences within the first sequence is S=64, and it requires V=3 gold sequence families to form these 64 gold sequences. Assume that the terminal device determines the number of the preamble sequence in the first sequence as *I_{S}* = 49, *L* = 63, *N_{CS}* = 4, *q₁* = 3, q₂ *=* 4.

Based on ${I}_{S} mod \left(S/V\right) = {N}_{CS} * {N}_{ID}^{\left(1\right)} + {N}_{ID}^{\left(2\right)} = 49 mod \left(64/3\right) = 7 = 4 {N}_{ID}^{\left(1\right)} + {N}_{ID}^{\left(2\right)}$, we can conclude that ${N}_{ID}^{\left(1\right)} = 1 , {N}_{ID}^{\left(2\right)} = 3$*.*

Based on *F = N_{CS},* $G = \left⌊S/\left(V*{N}_{CS}\right)\right⌋$*,* we can conclude that F = 4, $G = \left⌊63/\left(3*4\right)\right⌋ = 5$.

According to ${m}_{0} = {q}_{1} \left({N}_{ID}^{\left(1\right)} mod G\right) = 3 \left(1mod5\right) = 3 , {m}_{1} = {q}_{2} {N}_{ID}^{\left(2\right)} mod F = 4 * 3 mod 4 = 0$.

If calculated through formula (12), we can acquire *d_{preamble}*(*n*) = [1 - 2*x*₀((*n* + 3) mod 63)]·[1- 2*x*₁((*n +* 0) mod 63)], 0 ≤ n < 63 .

If calculated through formula (13), we can acquire *d_{preamble}*(*n*) = [*x*₀((*n* + 3) mod 63) + *x*₁((*n* + 0) mod 63)] mod 2 , 0 ≤ *n* < 63 .

It should be noted that in both calculation method 1 and calculation method 2, the calculation method for the m₀ and m₁ can be interchanged. For instance, parameter m₀ is determined based on the second sub-identifier, while parameter m₁ is determined based on the first sub-identifier. For instance, parameter m₀ equals the modulo result of the second sub-identifier and parameter F, and parameter m₁ equals the modulo result of the first sub-identifier and parameter G. For instance, ${m}_{1} = {N}_{ID}^{\left(1\right)} mod G$, ${m}_{0} = {N}_{ID}^{\left(2\right)} mod F$. For instance, ${m}_{1} = {q}_{1} \left({N}_{ID}^{\left(1\right)} mod G\right) , {m}_{0} = {q}_{2} {N}_{ID}^{\left(2\right)} mod F$.

In summary, the method according to the embodiments of the present disclosure, through the use of gold sequences, offers a feasible solution with low complexity for transmitting the preamble sequence. It supports both the selection of Z gold sequence families to form the first sequence and the construction of a gold sequence set to form the first sequence, providing a flexible composition scheme for the first sequence corresponding to one cell. It also supports both the random selection of one gold sequence from the first sequence by the terminal device as the preamble sequence and the generation of the preamble sequence by the terminal device based on information such as the cyclic shift step and the number of the preamble sequence in the first sequence, providing a flexible determination scheme for the preamble sequence corresponding to a terminal device. Furthermore, it supports both the use of the same first sequence by different cells to save communication resources and the use of different first sequences by different cells to avoid conflicts within the communication system and ensure communication efficiency within the communication system. Moreover, gold sequences have good autocorrelation and cross-correlation properties, and the preamble sequences generated through gold sequences still retain these good properties, which helps to improve the accuracy and reliability of uplink synchronization and frequency offset estimation, and ensures the reliability, success rate, and efficiency of random access. Compared to the scheme using the m-sequence to form the first sequence, using the gold sequence allows for a larger number of sequences within the first sequence, that is, it can provide more optional preamble sequences for one cell and support the provision of preamble sequences for a large number of terminal devices within the communication system. However, it can also be seen that the scheme using the m-sequence to form the first sequence is simpler and has lower complexity.

In the present disclosure, the modulation methods for the preamble sequence include at least one of: OOK modulation; PSK modulation; BPSK modulation; or FSK modulation. The preamble sequence involved in the present disclosure, such as the preamble sequences illustrated in FIGS. 9, 10, 13, 14, 15, 16, and 17, can adopt the following modulation rules:
Assuming the modulation method is OOK modulation, then the sequence elements in the preamble sequence with values of "1" and "0" correspond to high and low levels in the OOK sequence, respectively. For example, the sequence elements in the preamble sequence with value "1" correspond to high levels in the OOK sequence, and the sequence elements with value "0" correspond to low levels in the OOK sequence; alternatively, the sequence elements in the preamble sequence with value "1" correspond to low levels in the OOK sequence, and the sequence elements with value "0" correspond to high levels in the OOK sequence.

Assuming the modulation method is PSK modulation, then the sequence elements in the preamble sequence with values of "1" and "0" correspond to phase continuity (+1) and phase hopping (0 or -1) in the PSK sequence, respectively. For example, the sequence element with a value of "1" in the preamble sequence corresponds to phase continuity (+1) in the PSK sequence, and the sequence element with a value of "0" in the preamble sequence corresponds to phase hopping (0 or -1) in the PSK sequence; alternatively, the sequence element with a value of "1" in the preamble sequence corresponds to phase hopping (0 or -1) in the PSK sequence, and the sequence element with a value of "0" in the preamble sequence corresponds to phase continuity (+1) in the PSK sequence.

Assuming the modulation method is BPSK, the sequence elements in the preamble sequence with values of "1" and "0" correspond to the positive level (+1) and negative level (-1) in the BPSK sequence, respectively. For instance, the sequence element in the preamble sequence with a value of "1" corresponds to the positive level (+1) in the BPSK sequence, while the sequence element with a value of "0" corresponds to the negative level (-1) in the BPSK sequence. Alternatively, the sequence element in the preamble sequence with a value of "1" corresponds to the negative level (-1) in the BPSK sequence, and the sequence element with a value of "0" corresponds to the positive level (+1) in the BPSK sequence.

Assuming the modulation method is FSK modulation, then the sequence elements in the preamble sequence that take the values "1" and "0" correspond to two carrier frequencies of the FSK sequence, respectively. For example, the sequence element in the preamble sequence that takes the value "1" corresponds to carrier frequency 1 of the FSK sequence, and the sequence element in the preamble sequence that takes the value "0" corresponds to carrier frequency 0 of the FSK sequence; alternatively, the sequence element in the preamble sequence that takes the value "1" corresponds to carrier frequency 0 of the FSK sequence, and the sequence element in the preamble sequence that takes the value "0" corresponds to carrier frequency 1 of the FSK sequence.

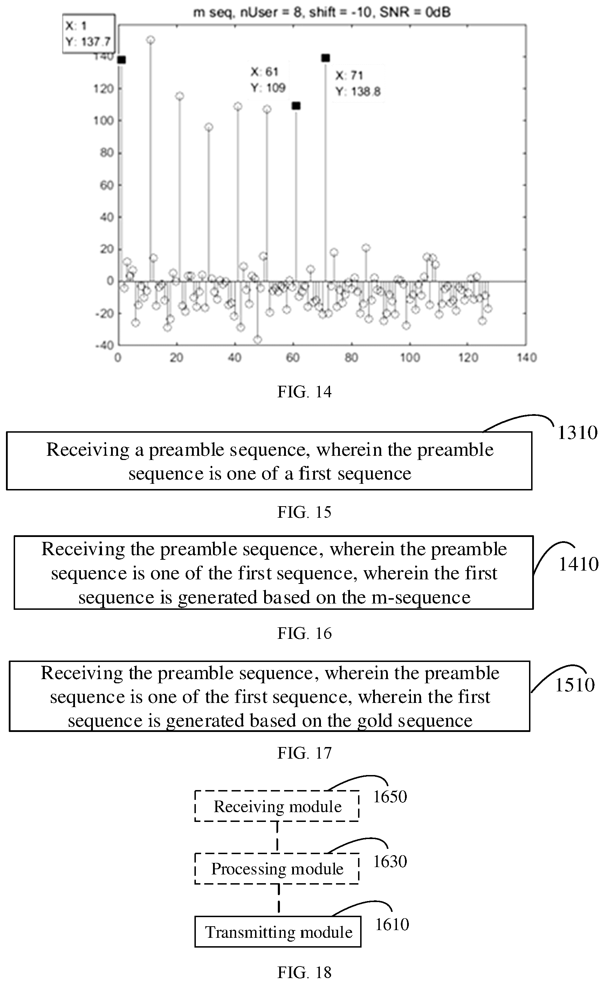

FIG. 14 illustrates the simulation result of constituting the first sequence through the m-sequence. FIG. 14 employs a basic m-sequence with a length of 127 and a shift register stage of 7, through which more shift sequences can be acquired by performing cyclic shifts. Assuming that there are 8 users multiplexing this basic m-sequence to transmit preamble sequences, the receiver can clearly detect the 8 preamble sequences, indicating full support for preamble transmission in a plurality of cells through the multiplex of one m-sequence.

Therefore, the schemes in the present disclosure, which utilize the m-sequence and the gold sequence to construct the first sequence, can generate a large preamble sequence capacity, thereby supporting the transmission of preamble sequences by a massive number of terminal devices.

If the preamble sequence is generated based on the Walsh sequence, the process of constructing the first sequence through the Walsh sequence can refer to the embodiments illustrated in FIGS. 10 and 13. Similarly, the preamble sequence can also be generated by defining the number of Walsh sequences within the first sequence, constructing a Walsh sequence set, and representing the preamble sequence through a formula.

FIG. 15 illustrates a flow diagram of a preamble transmission method according to an exemplary embodiment of the present disclosure, which is performed by a network device. The method includes:
**process 1310**: receiving a preamble sequence, wherein the preamble sequence is one of first sequence.

The first sequence is generated based on a binary sequence, wherein the binary sequence only includes sequence elements with two possible values. Therefore, the first sequence also only includes sequence elements with two possible values. For example, the first sequence only includes "0" and "1", or the first sequence only includes "+1" and "-1".

In some embodiments, the first sequence is generated based on at least one of: an m-sequence, a Gold sequence, or a Walsh sequence.

In some embodiments, the modulation method of the preamble sequence includes at least one of: OOK modulation, PSK modulation, BPSK modulation, or FSK modulation.

It should be noted that the types of binary sequences according to the present disclosure are not limited to m-sequences, Gold sequences, and Walsh sequences. Other binary sequences or sequences with characteristics similar to binary sequences are also applicable to the methods according to the embodiments of the present disclosure.

The network device performing the process 1310 can be the network device 110 illustrated in FIG. 1, or the network device 110 illustrated in FIG. 2, or a network device operating in the millimeter wave (mmWave) frequency range, and so on.

In summary, in the method according to the embodiments of the present disclosure, the first sequence is generated based on a binary sequence and the sequence elements of the first sequence have only two possible values, the method is easily combined with non-OFDM waveforms such as OOK waveform, PSK waveform, and FSK waveform. This provides the possibility of transmitting preambles for some communication scenarios where OFDM waveforms are difficult to adopt, offering a new feasible solution for preamble transmission. The preamble sequence belonging to the first sequence has the good characteristics of low complexity and simple implementation, and is conducive to achieving low-power random access, uplink synchronization, and frequency offset estimation.

FIG. 16 illustrates a flow diagram of a preamble transmission method according to an exemplary embodiment of the present disclosure. The method is performed by a network device and includes:
**process 1410**: receiving the preamble sequence, wherein the preamble sequence is one of the first sequence; wherein the first sequence is generated based on the m-sequence.

For details regarding the preamble sequence and the first sequence, please refer to process 810, which will not elaborate further here.

It should be noted that in order to accurately receive and detect the preamble sequence, the network equipment should also determine the first sequence corresponding to each cell accordingly. Specifically, due to reasons such as oscillator mismatch, Doppler frequency shift, and noise interference, the preamble sequence transmitted from the transmitter and the preamble sequence arriving at the receiver will inevitably produce deviations in the time and frequency domains. To ensure high accuracy in the detection results of the preamble sequence, the network equipment needs to perform correlation detection between the received preamble sequence and the local preamble sequence to acquire clock information and/or frequency offset estimation result. Based on the clock information, the received preamble sequence is calibrated in the time domain, and based on the frequency offset estimation result, the received preamble sequence is calibrated in the frequency domain, in order to accurately detect the preamble sequence. The local preamble sequence required for use in the detection process should be generated locally by the network equipment. However, the transmission of the preamble sequence is random, and the network equipment does not know what sequence a certain terminal device will transmit. Therefore, the network device needs to identify which sequence may be transmitted by the terminal device within each cell, such that when receiving the preamble sequence, the network device can find a similar local preamble sequence for correlation detection. That is, the network device should identify the first sequence corresponding to each cell, such that when receiving the preamble sequence, the network device can accurately detect the preamble sequence.

The two methods for generating the first sequence based on m-sequences illustrated in FIG. 10 are also applicable to the network device. That is, both the network device and the terminal device should determine the first sequence respectively, and both the network device and the terminal device should clarify which m-sequences constitute the first sequence corresponding to the cell.

Regardless of whether the network device and the terminal device adopt completely identical methods to determine the first sequence corresponding to the same cell, the first sequences generated by the network device and the terminal device for the same cell should be the same. This ensures that subsequent to receiving the preamble sequence, the network device can clearly identify which terminal device transmitted the preamble sequence.

Illustratively, the communication protocol specifies the total number of sequences in the first sequence and the cyclic shift step. The network device indicates the first start information and the order of N first m-sequences to the terminal device. Based on the first start information, the order of N first m-sequences, the cyclic shift step, and the total number of sequences in the first sequence, the terminal device determines X first m-sequences and Y second m-sequences, and generates the first sequence based on these X first m-sequences and Y second m-sequences. Meanwhile, the network device should also determine the first sequence corresponding to the cell where the terminal device is located, based on the first start information, the order of N first m-sequences, the cyclic shift step, and the total number of sequences in the first sequence.

In some embodiments, the network device determines X first m-sequences based on the cell identifier or the first sequence information.

In some embodiments, the network device determines X first m-sequences based on at least one of: the first start information, the cyclic shift step, the numbering order of N first m-sequences, or the total number of sequences in the first sequence.

In some embodiments, the network device determines the numbering order of N first m-sequences.

In some embodiments, the network device determines the number of the first m-sequences within the m-sequence set based on the stage number of the shift register.

In some embodiments, the network device determines the number of first m-sequences within the m-sequence set based on the stage number of the shift register, the number of first m-sequences, and the cyclic shift step.

In some embodiments, the network device determines the numbering order of the first m-sequences and/or the second m-sequences within the m-sequence set.

In some embodiments, the network device determines the m-sequence subset based on the cell identifier.

In summary, the method according to the embodiments of the present disclosure, where the preamble sequence is of type m-sequence, exhibits good characteristics of low complexity and simple implementation, and is conducive to achieving low-power random access, uplink synchronization, and frequency offset estimation.

The scheme for constructing the first sequence exhibits high flexibility. It supports both selecting the first m-sequence to form the first sequence and constructing an m-sequence set to form the first sequence, providing a flexible construction scheme for the first sequence corresponding to one cell. It also supports the terminal device to randomly select one m-sequence in the first sequence as the preamble sequence, as well as generate the preamble sequence through information such as the cyclic shift step and the number of the preamble sequence in the first sequence, providing a flexible determination scheme for the preamble sequence corresponding to one terminal device. Furthermore, it supports different cells using the same first sequence to save communication resources, as well as different cells using different first sequences to avoid conflicts within the communication system and ensure communication efficiency within the communication system. Moreover, the m-sequence possesses good autocorrelation and cross-correlation characteristics, and the preamble sequence generated by the m-sequence still maintains such good characteristics, which helps to improve the accuracy and reliability of uplink synchronization and frequency offset estimation, and ensures the reliability, success rate, and efficiency of random access. Additionally, one m-sequence can acquire more m-sequences by the cyclic shift, providing a large number of selectable preamble sequences for one cell and supporting the provision of preamble sequences for a massive number of terminal devices within the communication system.

FIG. 17 illustrates a flowchart of a preamble transmission method according to an exemplary embodiment of the present disclosure. The method is performed by a network device and includes:
**process 1510**: receiving the preamble sequence, where the preamble sequence is one of the first sequence; wherein the first sequence is generated based on the gold sequence.

For details related to the preamble sequence and the first sequence, please refer to process 1110. No further elaboration is provided here.

It should be noted that in order to accurately receive and detect the preamble sequence, the network device should also determine the corresponding first sequence for each cell accordingly. The reason for this can be referred to in process 1410, and will not be elaborated further here.

That is, the two methods for generating the first sequence based on the gold sequence, as illustrated in FIG. 13, are also applicable to the network device. Specifically, both the network device and the terminal device should determine the first sequence respectively, and both the network device and the terminal device should clearly identify which gold sequences constitute the first sequence corresponding to the cell.

Regardless of whether the network device and the terminal device adopt completely identical methods to determine the first sequence corresponding to the same cell, the first sequence generated by the network device and the terminal device for the same cell should be the same. This ensures that subsequent to receiving the preamble sequence, the network device can clearly identify which terminal device transmitted the preamble sequence.

Illustratively, the communication protocol specifies the total number of sequences in the first sequence and the cyclic shift step. The network device indicates the second start information and the order of M gold sequence families to the terminal device. The terminal device determines Z gold sequence families based on the second start information, the order of M gold sequence families, the cyclic shift step, and the total number of sequences in the first sequence, and generates the first sequence based on the Z gold sequence families. The network device should also determine the first sequence corresponding to the cell where the terminal device is located based on the second start information, the order of M gold sequence families, the cyclic shift step, and the total number of sequences in the first sequence.

In some embodiments, the network device determines Z gold sequence families based on the cell identifier or the second sequence information.

In some embodiments, the network device determines Z gold sequence families based on at least one of: the second start information, the cyclic shift step, the numbering order of M gold sequence families, or the total number of sequences in the first sequence.

In some embodiments, the network device determines the numbering order of M gold sequence families.

In some embodiments, the network device determines the number of sequences within the gold sequence set based on the stage number of the shift register.

In some embodiments, the network device determines the number of sequences within the gold sequence set based on at least one of: the stage number of the shift register, the cyclic offset, the cyclic shift step, the length of the m-sequence, or the number of preferred pairs of m-sequences.

In some embodiments, the network device determines the numbering order of the gold sequence families within the m-sequence set.

In some embodiments, the network device determines the gold sequence subset based on the cell identifier.

In some embodiments, the network device determines the preferred cyclic offsets m₀ and m₁ of the m-sequence based on the cell identifier.

In summary, the method according to the embodiments of the present disclosure, where the preamble sequence is of the gold sequence type, exhibits good characteristics of low complexity and simple implementation, and is conducive to achieving low-power random access, uplink synchronization, and frequency offset estimation.

The scheme for constructing the first sequence offers high flexibility. It supports both selecting Z gold sequence families to form the first sequence and constructing a gold sequence set to form the first sequence, providing a flexible construction scheme for the first sequence corresponding to one cell. It also supports both the terminal device randomly selecting one gold sequence in the first sequence as the preamble sequence and the terminal device generating the preamble sequence through information such as the cyclic shift step and the number of the preamble sequence in the first sequence, providing a flexible determination scheme for the preamble sequence corresponding to one terminal device. Furthermore, it supports both different cells using the same first sequence to save communication resources and different cells using different first sequences to avoid conflicts within the communication system and ensure communication efficiency within the communication system. Moreover, gold sequences exhibit good autocorrelation and cross-correlation characteristics, and the preamble sequence generated from gold sequences still retains these good characteristics, which helps to improve the accuracy and reliability of uplink synchronization and frequency offset estimation, and ensures the reliability, success rate, and efficiency of random access. Compared to the scheme using the m-sequence to construct the first sequence, using gold sequences allows for a larger number of sequences within the first sequence, that is, it can provide more optional preamble sequences for one cell and support the provision of preamble sequences for a massive number of terminal devices within the communication system.

FIG. 18 illustrates the structural block diagram of a preamble transmission apparatus according to an exemplary embodiment of the present disclosure. This apparatus can be implemented as a terminal device as illustrated in FIG. 9, FIG. 10, or FIG. 13, or as a part of a terminal device as illustrated in FIG. 9, FIG. 10, or FIG. 13. The apparatus includes a transmitting module 1610. Optionally, the device further includes a processing module 1630 and/or a receiving module 1650.

The transmitting module 1610 is configured to transmit a preamble sequence, wherein the preamble sequence is one of first sequences; wherein the first sequence is generated based on at least one of an m-sequence, a Gold sequence, or a Walsh sequence.

In some embodiments, the first sequence is generated based on a first m-sequence and/or a second m-sequence, wherein the second m-sequence is acquired by performing the cyclic shift on the first m-sequence.

In some embodiments, the apparatus further includes a processing module 1630 for performing the cyclic shift.

In some embodiments, in the first sequence, the number of the first m-sequences is X, and the number of the second m-sequences is Y; wherein X is an integer greater than or equal to 0, Y is an integer greater than or equal to 0, and X and Y are not both equal to 0.

In some embodiments, the X first m-sequences are determined by the apparatus in N first m-sequences, wherein N is an integer greater than 1; alternatively, the X first m-sequences are indicated by a network device.

In some embodiments, the processing module 1630 is further configured to determine the X first m-sequences.

In some embodiments, the apparatus further includes a receiving module 1650 configured to receive an indication of a network device.

In some embodiments, the X first m-sequences are any X of the N first m-sequences, wherein N is an integer greater than 1; alternatively, the X first m-sequences are determined based on the cell identifier; or alternatively, the X first m-sequences are determined based on first sequence information.

In some embodiments, the first sequence information includes at least one of: first start information, indicating the number of the start m-sequence of the X first m-sequences in the N first m-sequences; first length information, indicating the value of X; first end information, indicating the number of the end m-sequence of the X first m-sequences in the N first m-sequences; the total number of sequences in the first sequence; the number of the preamble sequence in the first sequence; cyclic shift step; the numbering order of the N first m-sequences; or a first bit bitmap, where bits of the first bit bitmap are one-to-one corresponding to the N first m-sequences.

In some embodiments, the X first m-sequences are determined based on the first start information and the first length information; alternatively, the X first m-sequences are determined based on the first length information and the first end information; alternatively, the X first m-sequences are determined based on the first start information and the first end information; alternatively, the X first m-sequences are determined based on at least one of the following: the first start information, the cyclic shift step, the numbering order of the N first m-sequences, or the total number of sequences in the first sequence.

In some embodiments, the i^{th} sequence in the first sequence is determined based on at least one of: the first start information, the cyclic shift step, or the value of i; wherein the value of i is greater than or equal to 0 and less than the total number of sequences in the first sequence.

In some embodiments, the numbering order of the N first m-sequences is either specified in a communication protocol, indicated by a network device, is a default order, or is determined by this apparatus.

In some embodiments, the processing module 1630 is further configured to determine the numbering order of the N first m-sequences.

In some embodiments, the numbering order of the N first m-sequences is determined according to one of: the ascending order of the N first m-sequences; the descending order of the N first m-sequences; the sequence in which the coefficients of the primitive polynomial are from higher powers to lower powers; the sequence in which the coefficients of the primitive polynomial are from lower powers to higher powers; the ascending order of the binary numbers of the coefficients of the primitive polynomial; or the descending order of the binary numbers of the coefficients of the primitive polynomial.

In some embodiments, the first sequence includes an m-sequence subset, which is a subset of an m-sequence set; wherein the m-sequence set includes a first m-sequence and/or a second m-sequence, wherein the second m-sequence is acquired by performing a cyclic shift on the first m-sequence.

In some embodiments, within the m-sequence set, the number of the first m-sequences is determined based on the order of the first m-sequence; within the m-sequence set, the number of the second m-sequences is determined based on at least one of: the number of the first m-sequences, the length of the first m-sequences, or the cyclic offset.

In some embodiments, the numbering order of the first m-sequences within the m-sequence set is defined in a communication protocol, indicated by a network device, is a default order, or determined by this apparatus.

In some embodiments, the processing module 1630 is further configured to determine the numbering order of the first m-sequences within the m-sequence set.

In some embodiments, the numbering order of the first m-sequences within the m-sequence set is determined according to one of: the ascending order of the numbers of the first m-sequences within the m-sequence set; the descending order of the numbers of the first m-sequences within the m-sequence set; the sequence in which the coefficients of the primitive polynomial are from higher powers to lower powers; the sequence in which the coefficients of the primitive polynomial are from lower powers to higher powers; the ascending order of the binary numbers of the coefficients of the primitive polynomial; or the descending order of the binary numbers of the coefficients of the primitive polynomial.

In some embodiments, the numbering order of the second m-sequences within the m-sequence set is determined in a communication protocol, indicated by a network device, is a default order, or determined by this apparatus.

In some embodiments, the processing module 1630 is further configured to determine the numbering order of the second m-sequences within the m-sequence set.

In some embodiments, the numbering order of the second m-sequences within the m-sequence set is determined according to one of: the ascending order of the numbers of the first m-sequences within the m-sequence set; the descending order of the numbers of the first m-sequences within the m-sequence set; the sequence in which the coefficients of the primitive polynomial are from higher powers to lower powers; the sequence in which the coefficients of the primitive polynomial are from lower powers to higher powers; the ascending order of the binary numbers of the coefficients of the primitive polynomial; the descending order of the binary numbers of the coefficients of the primitive polynomial; the ascending order of the cyclic offsets; or the descending order of the cyclic offsets.

In some embodiments, each second m-sequence within the m-sequence set is arranged after its corresponding first m-sequence according to the numbering order; alternatively, all second m-sequences within the m-sequence set are arranged after all first m-sequences within the m-sequence set according to the numbering order.

In some embodiments, the m-sequence subset is any subset of the m-sequence set; alternatively, the m-sequence subset is determined based on the cell identifier; or alternatively, the m-sequence subset is indicated by a network device.

In some embodiments, the processing module 1630 is further configured to determine the m-sequence subset.

In some embodiments, the sequence element numbered n in the preamble sequence is determined based on the sequence element numbered n' in the third m-sequence; wherein, n' is determined based on at least one of: n, the cyclic shift step, the number of the preamble sequence in the first sequence, or a first length value; wherein the first length value is the length value of the third m-sequence, and n is greater than or equal to 0 and less than the first length value.

In some embodiments, the processing module 1630 is further configured to determine the sequence element numbered n in the preamble sequence.

In some embodiments, the n' is determined based on a first modulo result; wherein the first modulo result is the modulo result of a first sum and the first length value; wherein the first sum is the sum of n and a first product; wherein the first product is the product of the cyclic shift step and the number of the preamble sequence in the first sequence.

In some embodiments, the processing module 1630 is further configured to determine n'.

In some embodiments, the sequence element numbered n in the preamble sequence is the difference between the value 1 and a second product, where the second product is the product of the value 2 and the sequence element numbered n' in the third m-sequence; alternatively, the sequence element numbered n in the preamble sequence is the sequence element numbered n' in the third m-sequence.

In some embodiments, the first sequence includes a first number of gold sequences; wherein the first number of gold sequences are generated based on at least one preferred pair of m sequences.

In some embodiments, the first number of gold sequences is all or part of the gold sequences in Z gold sequence families, wherein Z is an integer greater than or equal to 1.

In some embodiments, the Z gold sequence families are determined by the apparatus in M gold sequence families, wherein M is an integer greater than 1; alternatively, the Z gold sequence families are indicated by a network device.

In some embodiments, the processing module 1630 is further configured to determine the Z gold sequence families.

In some embodiments, the Z gold sequence families are any Z of M gold sequence families, wherein M is an integer greater than 1; alternatively, the Z gold sequence families are determined based on the cell identifier; or alternatively, the Z gold sequence families are determined based on second sequence information.

In some embodiments, the second sequence information includes at least one of: second start information, used for indicating the number of the start gold sequence family of the Z gold sequence families in the M gold sequence families; second length information, used for indicating the value of Z; second end information, used for indicating the number of the end gold sequence family of the Z gold sequence families in the M gold sequence families; the total number of sequences in the first sequence; the number of the preamble sequence in the first sequence; the cyclic shift step; the numbering order of the M gold sequence families; or a second bit bitmap, where bits of the second bit bitmap are one-to-one corresponding to the M gold sequence families.

In some embodiments, the Z gold sequence families are determined based on the second start information and the second length information; alternatively, the Z gold sequence families are determined based on the second length information and the second end information; alternatively, the Z gold sequence families are determined based on the second start information and the second end information; alternatively, the Z gold sequence families are determined based on at least one of: the second start information, the cyclic shift step, the numbering order of the M gold sequence families, or the total number of sequences in the first sequence.

In some embodiments, the i^{th} sequence in the first sequence is determined based on at least one of: the second start information, the cyclic shift step, or the value of i; wherein the value of i is greater than or equal to 0 and less than the total number of sequences in the first sequence.

In some embodiments, the numbering order of the M gold sequence families is defined in a communication protocol, indicated by a network device, is a default order, or is determined by this apparatus.

In some embodiments, the processing module 1630 is further configured to determine the numbering order of the M gold sequence families.

In some embodiments, the sequence family numbering order of the M gold sequence families is determined according to one of: ascending order of the numbers of the M gold sequence families; descending order of the numbers of the M gold sequence families; a sequence in which the coefficients of the primitive polynomial are from higher powers to lower powers; a sequence in which the coefficients of the primitive polynomial are from lower powers to higher powers; ascending order of the binary numbers of the coefficients of the primitive polynomial; descending order of the binary numbers of the coefficients of the primitive polynomial; ascending order of the numbers of the preferred pairs of m-sequences; descending order of the numbers of the preferred pairs of m-sequences; ascending order of the cyclic offsets; or descending order the cyclic offsets.

In some embodiments, the first sequence includes a gold sequence subset, wherein the gold sequence subset is a subset of a gold sequence set; wherein the gold sequence set includes at least one gold sequence family, one gold sequence family being generated based on one preferred pair of m-sequences.

In some embodiments, the processing module 1630 is further configured to generate at least one gold sequence family.

In some embodiments, the number of gold sequence families within the gold sequence set is determined based on at least one of: the order r, the cyclic offset, the cyclic shift step, the length of the m-sequence, or the number of preferred pairs of m-sequences.

In some embodiments, the processing module 1630 is further configured to determine the number of gold sequence families within the gold sequence set.

In some embodiments, the numbering order of the gold sequence families within the gold sequence set is defined in a communication protocol, indicated by a network device, is a default order, or determined by this apparatus.

In some embodiments, the processing module 1630 is further configured to determine the numbering order of the gold sequence families within the gold sequence set.

In some embodiments, the numbering order of the gold sequence families within the gold sequence set is determined according to one of: ascending order of the numbers of the gold sequence families within the gold sequence set; descending order of the numbers of the gold sequence families within the gold sequence set are decreasing; a sequence in which the coefficients of the primitive polynomial are from higher powers to lower powers; a sequence in which the coefficients of the primitive polynomial are from lower powers to higher powers; ascending order of the binary numbers of the coefficients of the primitive polynomial; descending order of the binary numbers of the coefficients of the primitive polynomial; ascending order of the numbers of the preferred pairs of m-sequences; descending order of the numbers of the preferred pairs of m-sequences; ascending order of the cyclic offsets; or descending order of the cyclic offsets.

In some embodiments, the gold sequence subset is any subset of the gold sequence set; alternatively, the gold sequence subset is determined based on the cell identifier; or alternatively, the gold sequence subset is indicated by a network device.

In some embodiments, the processing module 1630 is further configured to determine the gold sequence subset.

In some embodiments, the gold sequence family includes a first gold sequence family, wherein the first gold sequence family includes a first gold sequence, wherein the first gold sequence is acquired by performing the cyclic shift on one m-sequence in a preferred pair of m-sequences.

In some embodiments, the gold sequence family includes a second gold sequence family, wherein the second gold sequence family includes a second gold sequence, wherein the second gold sequence is acquired by respectively performing the cyclic shifts on two m-sequences in a preferred pair of m-sequences.

In some embodiments, the gold sequence family includes a third gold sequence family, wherein the third gold sequence family a third gold sequence, wherein the third gold sequence is acquired by performing the cyclic shift based on a first gold sequence, the first gold sequence being acquired by performing the cyclic shift based on one m-sequence in a preferred pair of m-sequences.

In some embodiments, the sequence element numbered n in the preamble sequence is determined based on the sequence element numbered a in the fourth m-sequence and the sequence element numbered b in the fifth m-sequence; wherein the fourth m-sequence is one of the preferred pairs of m-sequences, and the fifth m-sequence is the other m-sequence in the preferred pair of m-sequences.

In some embodiments, the sequence element numbered n in the preamble sequence is a third product, wherein the third product is the product of the first difference and the second difference; wherein the first difference is the difference between the value 1 and the fourth product, and the fourth product is the product of the value 2 and the sequence element numbered a in the fourth m-sequence; the second difference is the difference between the value 1 and the fifth product, and the fifth product is the product of the value 2 and the sequence element numbered b in the fifth m-sequence.

In some embodiments, the sequence element numbered n in the preamble sequence is the modulo-2 result of the sum of the sequence element numbered a in the fourth m-sequence and the sequence element numbered b in the fifth m-sequence.

In some embodiments, a is determined based on at least one of: n, the parameter m₀, or the second length value; b is determined based on at least one of: n, the parameter m₁, or the second length value; wherein n is greater than or equal to 0 and less than the second length value, and the second length value is the length value of the fourth m-sequence and the fifth m-sequence.

In some embodiments, the processing module 1630 is further configured to determine a and b.

In some embodiments, a is determined based on a second modulo result, wherein the second modulo result is the modulo result of the second sum value and the second length value, where the second sum value is the sum of n and the parameter m₀.; b is determined based on a third modulo result, wherein the third modulo result is the modulo result of the third sum value and the second length value, where the third sum value is the sum of n and the parameter m₁.

In some embodiments, the parameter m₀ is determined based on the first sub-identifier, and the parameter m₁ is determined based on the second sub-identifier; alternatively, the parameter m₀ is determined based on the second sub-identifier, and the parameter m₁ is determined based on the first sub-identifier; alternatively, the parameter m₀ is determined based on the first sub-identifier and the second sub-identifier, and the parameter m₁ is determined based on the first sub-identifier; alternatively, the parameter m₀ is determined based on the first sub-identifier, and the parameter m₁ is determined based on the first sub-identifier and the second sub-identifier.

In some embodiments, the first sub-identifier and the second sub-identifier are determined based on the number of the preamble sequence in the first sequence.

In some embodiments, the processing module 1630 is further configured to determine the first sub-identifier and the second sub-identifier.

In some embodiments, the first sub-identifier and the second sub-identifier are determined based on the number of the preamble sequence in the first sequence and the cyclic shift step.

In some embodiments, the first sub-identifier and the second sub-identifier are determined based on the number of the preamble sequence in the first sequence, the cyclic shift step, and the number of gold sequence families required to form the first sequence.

In some embodiments, the total number of sequences in the first sequence is defined in a communication protocol or configured by a network device.

In some embodiments, the first sequences corresponding to different cells are either completely identical, partially identical, or completely different.

In some embodiments, the modulation method of the preamble sequence includes at least one of: OOK modulation, PSK modulation, BPSK modulation, or FSK modulation.

In some embodiments, the preamble sequence is carried on a random access channel; the bandwidth occupied by the preamble sequence is related to at least one of: the total bandwidth of the random access channel; the available bandwidth of the random access channel; or the frequency margin for downlink frequency synchronization.

In summary, the apparatus according to the embodiments of the present disclosure offers a feasible and low-complexity solution for transmitting preamble sequences through the m-sequence. It supports both the selection of the first m-sequence to form the first sequence and the construction of the first sequence by forming an m-sequence set, providing a flexible composition scheme for the first sequence corresponding to one cell. It also supports both the random selection of one m-sequence from the first sequence by terminal devices as the preamble sequence and the generation of the preamble sequence by terminal devices based on information such as the cyclic shift step and the number of the preamble sequence in the first sequence, providing a flexible determination scheme for the preamble sequence corresponding to one terminal device. Furthermore, it supports both the use of the same first sequence by different cells to save communication resources and the use of different first sequences by different cells to avoid conflicts within the communication system and ensure communication efficiency within the system. Additionally, m-sequences exhibit good autocorrelation and cross-correlation characteristics, and the preamble sequences generated through m-sequences retain these favorable characteristics, which helps to improve the accuracy and reliability of uplink synchronization and frequency offset estimation, and ensures the reliability, success rate, and efficiency of random access. Moreover, a single m-sequence can be performed with the cyclic shift to acquire more m-sequences to provide a large number of selectable preamble sequences for one cell, supporting the provision of preamble sequences for a vast number of terminal devices within the communication system.

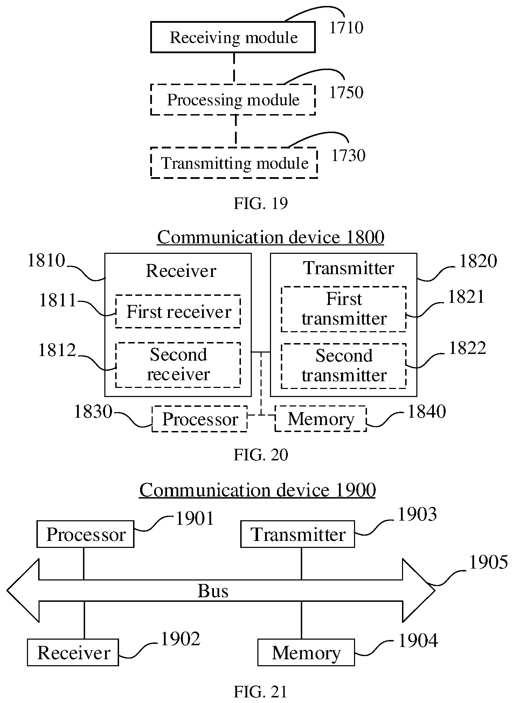

FIG. 19 illustrates the structural block diagram of a preamble transmission apparatus according to an exemplary embodiment of the present disclosure. This apparatus can be implemented as a network device as illustrated in FIG. 15, FIG. 16, or FIG. 17, or as a part of a network device as illustrated in FIG. 15, FIG. 16, or FIG. 17. The apparatus includes a receiving module 1710. Optionally, the apparatus also includes a transmitting module 1730 and/or a processing module 1750.

The receiving module 1710 is configured to receive a preamble sequence, wherein the preamble sequence is one of first sequence; and a type of the first sequence includes at least one of: an m-sequence, a Gold sequence, or a Walsh sequence.

In some embodiments, the first sequence includes a first m-sequence and/or a second m-sequence, and the second m-sequence is acquired by performing a cyclic shift on the first m-sequence.

In some embodiments, in the first sequence, the number of the first m-sequences is X, and the number of the second m-sequences is Y; where X is an integer greater than or equal to 0, Y is an integer greater than or equal to 0, and X and Y are not both equal to 0.

In some embodiments, the X first m-sequences are determined by a terminal device in N first m-sequences, where N is an integer greater than 1; alternatively, the X first m-sequences are indicated by the apparatus.

In some embodiments, the apparatus further includes a transmitting module 1730 configured to transmit an instruction and/or a configuration to the terminal device.

In some embodiments, the transmitting module 1730 is further configured to indicate the X first m-sequences.

In some embodiments, the X first m-sequences are any X of the N first m-sequences, where N is an integer greater than 1; alternatively, the X first m-sequences are determined based on the cell identifier; or alternatively, the X first m-sequences are determined based on first sequence information.

In some embodiments, the first sequence information includes at least one of: first start information used for indicating the number of the start m-sequence of the X first m-sequences in the N first m-sequences; first length information used for indicating the value of X; first end information used for indicating the number of the end m-sequence of the X first m-sequences in the N first m-sequences; the total number of sequences in the first sequence; the number of the preamble sequence in the first sequence; a cyclic shift step; the numbering order of the N first m-sequences; or a first bit bitmap, where bits of the first bit bitmap are one-to-one corresponding to the N first m-sequences.

In some embodiments, the X first m-sequences are determined based on the first start information and the first length information; alternatively, the X first m-sequences are determined based on the first length information and the first end information; alternatively, the X first m-sequences are determined based on the first start information and the first end information; alternatively, the X first m-sequences are determined based on at least one of: the first start information, the cyclic shift step, the numbering order of the N first m-sequences, or the total number of sequences in the first sequence.

In some embodiments, the i^{th} sequence in the first sequence is determined based on at least one of: the first start information, the cyclic shift step, or the value of i; wherein the value of i is greater than or equal to 0 and less than the total number of sequences in the first sequence.

In some embodiments, the numbering order of the N first m-sequences is defined in a communication protocol, indicated by the device, is a default sequence, or is determined by the terminal equipment.

In some embodiments, the transmitting module 1730 is further configured to indicate the numbering order of the N first m-sequences.

In some embodiments, the numbering order of the N first m-sequences is determined according to one of: the ascending order of the numbers of the N first m-sequences; the descending order of the numbers of the N first m-sequences; the sequence in which the coefficients of the primitive polynomial are from higher powers to lower powers; the sequence in which the coefficients of the primitive polynomial are from lower powers to higher powers; the ascending order of binary numbers of the coefficients of the primitive polynomial; or the descending order of the binary numbers of the coefficients of the primitive polynomial.

In some embodiments, the first sequence includes an m-sequence subset, which is a subset of an m-sequence set; wherein the m-sequence set includes a first m-sequence and/or a second m-sequence, wherein the second m-sequence is acquired by performing the cyclic shift on the first m-sequence.

In some embodiments, within the m-sequence set, the number of the first m-sequences is determined based on the order of the first m-sequences; within the m-sequence set, the number of the second m-sequences is determined based on at least one of: the number of the first m-sequences, the length of the first m-sequences, or the cyclic offset.

In some embodiments, the numbering order of the first m-sequences within the m-sequence set is defined in a communication protocol, indicated by the device, is a default sequence, or determined by a terminal device.

In some embodiments, the transmitting module 1730 is further configured to indicate the numbering order of the first m-sequences within the m-sequence set.

In some embodiments, the numbering order of the first m-sequences within the m-sequence set is determined according to one of: ascending order of the numbers of the first m-sequences within the m-sequence set; descending order of the numbers of the first m-sequences within the m-sequence set; the sequence in which the coefficients of the primitive polynomial are from higher powers to lower powers; the sequence in which the coefficients of the primitive polynomial are from lower powers to higher powers; ascending order of the binary numbers of the coefficients of the primitive polynomial; or descending order of the binary numbers of the coefficients of the primitive polynomial.

In some embodiments, the numbering order of the second m-sequences within the m-sequence set is defined in a communication protocol, indicated by the device, is a default sequence, or determined by the terminal device.

In some embodiments, the transmitting module 1730 is further configured to indicate the numbering order of the second m-sequences within the m-sequence set.

In some embodiments, the numbering order of the second m-sequences within the m-sequence set is determined according to one of: ascending order of the numbers of the first m-sequences within the m-sequence set; descending order of the numbers of the first m-sequences within the m-sequence set; the sequence in which the coefficients of the primitive polynomial are from higher powers to lower powers; the sequence in which the coefficients of the primitive polynomial are from lower powers to higher powers; ascending order of the binary numbers of the coefficients of the primitive polynomial; descending order of the binary numbers of the coefficients of the primitive polynomial; ascending order of the cyclic offsets; or descending order of the cyclic offsets.

In some embodiments, each second m-sequence within the m-sequence set is arranged in numbering order after its corresponding first m-sequence; alternatively, all second m-sequences within the m-sequence set are arranged in numbering order after all first m-sequences within the same set.

In some embodiments, the m-sequence subset is any subset of the m-sequence set; alternatively, the m-sequence subset is determined based on the cell identifier; or alternatively, the m-sequence subset is indicated by this apparatus.

In some embodiments, the transmitting module 1730 is further configured to indicate the m-sequence subset.

In some embodiments, the sequence element numbered n in the preamble sequence is determined based on the sequence element numbered n' in the third m-sequence; wherein, n' is determined based on at least one of: n, the cyclic shift step, the number of the preamble sequence in the first sequence, or a first length value; wherein the first length value is the length value of the third m-sequence, and n is greater than or equal to 0 and less than the first length value.

In some embodiments, n' is the determined based on a first modulo result; wherein the first modulo result is the modulo result of a first sum and the first length value; wherein the first sum is the sum of n and a first product; wherein the first product is the product of the cyclic shift step and the number of the preamble sequence in the first sequence.

In some embodiments, the sequence element numbered n in the preamble sequence is the difference between the value 1 and the second product, where the second product is the product of the value 2 and the sequence element numbered n' in the third m-sequence; alternatively, the sequence element numbered n in the preamble sequence is the sequence element numbered n' in the third m-sequence.

In some embodiments, the first sequence includes a first number of gold sequences; wherein the first number of gold sequences are generated based on at least one preferred pair of m-sequences.

In some embodiments, the first number of gold sequences are all or part of the gold sequences in Z gold sequence families, wherein Z is an integer greater than or equal to 1.

In some embodiments, the Z gold sequence families are determined by the terminal device in M gold sequence families, wherein M is an integer greater than 1; alternatively, the Z gold sequence families are indicated by this apparatus.

In some embodiments, the transmitting module 1730 is further configured to indicate the Z gold sequence families.

In some embodiments, the Z gold sequence families are any Z of M gold sequence families, wherein M is an integer greater than 1; alternatively, the Z gold sequence families are determined based on the cell identifier; or alternatively, the Z gold sequence families are determined based on second sequence information.

In some embodiments, the transmitting module 1730 is further configured to indicate the second sequence information.

In some embodiments, the second sequence information includes at least one of: second start information used for indicating the number of the start gold sequence family of the Z gold sequence families in the M gold sequence families; second length information used for indicating the value of Z; second end information used for indicating the number of the end gold sequence family of the Z gold sequence families in the M gold sequence families; the total number of sequences in the first sequence; the number of the preamble sequence in the first sequence; the cyclic shift step; the numbering order of the M gold sequence families; or a second bit bitmap, where bits of the second bit bitmap are one-to-one corresponding to the M gold sequence families.

In some embodiments, the Z gold sequence families are determined based on the second start information and the second length information; alternatively, the Z gold sequence families are determined based on the second length information and the second end information; alternatively, the Z gold sequence families are determined based on the second start information and the second end information; alternatively, the Z gold sequence families are determined based on at least one of: the second start information, the cyclic shift step, the numbering order of the M gold sequence families, or the total number of sequences in the first sequence.

In some embodiments, the i^{th} sequence in the first sequence is determined based on at least one of: the second start information, the cyclic shift step, or the value of i; wherein the value of i is greater than or equal to 0 and less than the total number of sequences in the first sequence.

In some embodiments, the numbering order of the M gold sequence families is defined in a communication protocol, indicated by the device, is a default sequence, or determined by the terminal device.

In some embodiments, the transmitting module 1730 is further configured to indicate the numbering order of the M gold sequence families.

In some embodiments, the numbering order of the M gold sequence families is determined according to one of: ascending order of the numbers of the M gold sequence families; descending order of the numbers of the M gold sequence families; the sequence in which the coefficients of the primitive polynomial are from higher powers to lower powers; the sequence in which the coefficients of the primitive polynomial are from lower powers to higher powers; ascending order of the binary numbers of the coefficients of the primitive polynomial; descending order of the binary numbers of the coefficients of the primitive polynomial; ascending order of the numbers of the preferred pairs of m-sequences; descending order of the numbers of the preferred pairs of m-sequences; ascending order of the cyclic offsets; or descending order of the cyclic offsets.

In some embodiments, the first sequence includes a gold sequence subset, which is a subset of a gold sequence set; wherein the gold sequence set includes at least one gold sequence family, one gold sequence family being generated based on one preferred pair of m-sequences.

In some embodiments, the number of gold sequence families within the gold sequence set is determined based on at least one of: the order r, the cyclic offset, the cyclic shift step, the length of the m-sequence, or the number of preferred pairs of m-sequences.

In some embodiments, the transmitting module 1730 is further configured to indicate the number of gold sequence families within the gold sequence set.

In some embodiments, the numbering order of the gold sequence families within the gold sequence set is defined in a communication protocol, indicated by the device, is a default order, or is determined by the terminal device.

In some embodiments, the transmitting module 1730 is further configured to indicate the numbering order of the gold sequence families within the gold sequence set.

In some embodiments, the numbering order of the gold sequence families within the gold sequence set is determined according to one of: ascending order of the numbers of the gold sequence families within the gold sequence set; descending order of the numbers of the gold sequence families within the gold sequence set; the sequence in which the coefficients of the primitive polynomial are from higher powers to lower powers; the sequence in which the coefficients of the primitive polynomial are from lower powers to higher powers; ascending order of the binary numbers of the coefficients of the primitive polynomial; descending order of the binary numbers of the coefficients of the primitive polynomial; ascending order of the numbers of the preferred pairs of m-sequences; descending order of the numbers of the preferred pairs of m-sequences; ascending order of the cyclic offsets; or descending order of the cyclic offsets.

In some embodiments, the gold sequence subset is any subset of the gold sequence set; alternatively, the gold sequence subset is determined based on the cell identifier; or alternatively, the gold sequence subset is indicated by this apparatus.

In some embodiments, the transmitting module 1730 is further configured to indicate the gold sequence subset.

In some embodiments, the gold sequence family includes a first gold sequence family, wherein the first gold sequence family includes a first gold sequence, wherein the first gold sequence is acquired by performing the cyclic shift based on one of the m-sequences in the preferred pair of m-sequences.

In some embodiments, the gold sequence family includes a second gold sequence family, wherein the second gold sequence family includes a second gold sequence, wherein the second gold sequence is acquired by respectively performing the cyclic shifts based on two m-sequences in a preferred pair of m-sequences.

In some embodiments, the gold sequence family includes a third gold sequence family, wherein the third gold sequence family a third gold sequence, wherein the third gold sequence is acquired by performing the cyclic shift based on a first gold sequence, the first gold sequence being acquired by performing the cyclic shift based on one m-sequence in a preferred pair of m-sequences.

In some embodiments, the sequence element numbered n in the preamble sequence is determined based on the sequence element numbered a in the fourth m-sequence and the sequence element numbered b in the fifth m-sequence; wherein, the fourth m-sequence is one of a preferred pair of m-sequences, and the fifth m-sequence is the other m-sequence in the preferred pair of m-sequences.

In some embodiments, the sequence element numbered n in the preamble sequence is a third product, wherein the third product is the product of a first difference and a second difference; wherein the first difference is the difference between the value 1 and the fourth product, and the fourth product is the product of the value 2 and the sequence element numbered a in the fourth m-sequence; the second difference is the difference between the value 1 and the fifth product, and the fifth product is the product of the value 2 and the sequence element numbered b in the fifth m-sequence.

In some embodiments, the sequence element numbered n in the preamble sequence is the modulo-2 result of the sum of the sequence element numbered a in the fourth m-sequence and the sequence element numbered b in the fifth m-sequence.

In some embodiments, a is determined based on at least one of: n, the parameter m₀, or the second length value; b is determined based on at least one of: n, the parameter m₁, or the second length value; wherein n is greater than or equal to 0 and less than the second length value, and the second length value is the length value of the fourth m-sequence and the fifth m-sequence.

In some embodiments, a is determined based on the second modulo result, which is the modulo result of the second sum value and the second length value. The second sum value is the sum of n and the parameter m₀. b is determined based on the third modulo result, which is the modulo result of the third sum value and the second length value. The third sum value is the sum of n and the parameter m₁.

In some embodiments, the parameter m₀ is determined based on the first sub-identifier, and the parameter m₁ is determined based on the second sub-identifier; alternatively, the parameter m₀ is determined based on the second sub-identifier, and the parameter m₁ is determined based on the first sub-identifier; alternatively, the parameter m₀ is determined based on the first sub-identifier and the second sub-identifier, and the parameter m₁ is determined based on the first sub-identifier; alternatively, the parameter m₀ is determined based on the first sub-identifier, and the parameter m₁ is determined based on the first sub-identifier and the second sub-identifier.

In some embodiments, the first sub-identifier and the second sub-identifier are determined based on the number of the preamble sequence in the first sequence.

In some embodiments, the first sub-identifier and the second sub-identifier are determined based on the number of the preamble sequence in the first sequence and the cyclic shift step.

In some embodiments, the first sub-identifier and the second sub-identifier are determined based on the number of the preamble sequence in the first sequence, the cyclic shift step, and the number of gold sequence families required to form the first sequence.

In some embodiments, the total number of sequences in the first sequence is defined in the communication protocol or configured by this apparatus.

In some embodiments, the first sequences corresponding to different cells are either completely identical, partially identical, or completely different.

In some embodiments, the modulation method of the preamble sequence includes at least one of: OOK modulation, PSK modulation, BPSK modulation, or FSK modulation.

In some embodiments, the preamble sequence is carried on a random access channel; the bandwidth occupied by the preamble sequence is related to at least one of: the total bandwidth of the random access channel; the available bandwidth of the random access channel; or the frequency margin for downlink frequency synchronization.

In some embodiments, the apparatus further includes a processing module 1750 for performing processes related to random access, uplink synchronization, and frequency offset estimation based on the preamble sequence.

In summary, the apparatus according to the embodiments of the present disclosure offers a feasible solution with low complexity for transmitting the preamble sequence through gold sequences. It supports both the selection of Z gold sequence families to form the first sequence and the construction of a gold sequence set to form the first sequence, providing a flexible composition scheme for the first sequence corresponding to one cell. It also supports both the random selection of one gold sequence from the first sequence by a terminal device as the preamble sequence and the generation of the preamble sequence by the terminal device based on information such as the cyclic shift step and the number of the preamble sequence in the first sequence, providing a flexible determination scheme for the preamble sequence corresponding to one terminal device. Furthermore, it supports both the use of the same first sequence by different cells to save communication resources and the use of different first sequences by different cells to avoid conflicts within the communication system and ensure communication efficiency within the system. Moreover, gold sequences exhibit good autocorrelation and cross-correlation characteristics, and the preamble sequences generated through gold sequences still retain these good characteristics, which helps to improve the accuracy and reliability of uplink synchronization and frequency offset estimation, and ensures the reliability, success rate, and efficiency of random access. Compared to the scheme using the m-sequence to form the first sequence, using gold sequences allows for a larger number of sequences within the first sequence, that is, it can provide more optional preamble sequences for one cell and support the provision of preamble sequences for a large number of terminal devices within the communication system. However, it can also be seen that the scheme using the m-sequence to form the first sequence is simpler and has lower complexity.

FIG. 20 illustrates a structural schematic diagram of a communication device 1800 according to an exemplary embodiment of the present disclosure, including a receiver 1810 and a transmitter 1820. This communication device 1800 can be used to perform at least some of the process performed by the terminal device as illustrated in FIG. 9, FIG. 10, or FIG. 13.

The receiver 1810 and the transmitter 1820 can be implemented as a communication assembly, which can be a communication chip, and this communication assembly can be referred to as a transceiver.

In some embodiments, the receiver 1810 can be utilized to implement the functions and processes of the aforementioned receiving module 1650. Optionally, the receiver 1810 can be implemented as a first receiver 1811 and/or a second receiver 1812.

In some embodiments, the transmitter 1820 can be utilized to implement the functions and processes of the aforementioned transmitting module 1610. Optionally, the transmitter 1820 can be implemented as a first transmitter 1821 and/or a second transmitter 1822.

Optionally, the communication device 1800 can further include a processor 1830. The processor 1830 includes one or more processing cores, and executes various functional applications and information processing by running software programs and modules. Optionally, the processor 1830 can be used to implement the functions and processes of the aforementioned processing module 1630.

Optionally, the communication device 1800 may further include a memory 1840. The memory 1840 may be used to store at least one instruction, and the processor 1810 may be configured to execute the at least one instruction to implement each process in the above-mentioned method embodiments. In addition, the memory 1840 may be implemented by any type of volatile or non-volatile storage device, or a combination thereof. The volatile or non-volatile storage device includes, but is not limited to: a magnetic or optical disk, an electrically-erasable programmable read only memory (EEPROM), an erasable programmable read only memory (EPROM), a static random access memory (SRAM), a read-only memory (ROM), a magnetic storage device, a flash memory, and a programmable read-only memory (PROM).

Optionally, the communication device 1800 may further include a bus (not illustrated in the figure). Optionally, the memory 1840 is connected to the processor 1830 via the bus.

In some embodiments, the receiver 1810 independently performs signal/data reception, or the processor 1830 controls the receiver 1810 to perform signal/data reception, or the processor 1830 requests the receiver 1810 to perform signal/data reception, or the processor 1830 cooperates with the receiver 1810 to perform signal/data reception.

In some embodiments, the transmitter 1820 independently transmits signals/data, or the processor 1830 controls the transmitter 1820 to transmit signals/data, or the processor 1830 requests the transmitter 1820 to transmit signals/data, or the processor 1830 cooperates with the transmitter 1820 to transmit signals/data.

In some embodiments, the first receiver 1811 is implemented as a wake-up receiver (WUR), and/or the second receiver 1812 is implemented as a main receiver.

In some embodiments, the receiver 1810 is implemented as a combined receiver of a WUR and a primary receiver.

In some embodiments, the first transmitter 1821 is implemented as a primary transmitter, and/or the second transmitter 1822 is implemented as a backscatter transmitter.

In some embodiments, the emitter 1820 is implemented as a combined transmitter of a primary transmitter and a backscatter transmitter.

In some embodiments, the processor 1830 and the receiver 1810 can be implemented as a single module, or alternatively, the processor 1830 can be implemented as a part of the receiver 1810.

In some embodiments, the processor 1830 and the transmitter 1820 can be implemented as a single module, or alternatively, the processor 1830 can be implemented as a part of the transmitter 1820.

In some embodiments, the communication device 1800 includes one or more processors 1830, with different processors being utilized to perform the same or different processes in the processing-related processes described above.

FIG. 21 illustrates the structural schematic diagram of a communication device 1900 according to an exemplary embodiment of the present disclosure, including: a processor 1901, a receiver 1902, a transmitter 1903, a memory 1904, and a bus 1905. This communication device 1900 can be used to perform at least some of the processes performed by the terminal device as illustrated in FIG. 9, FIG. 10, or FIG. 13, or can be used to perform at least some of the processes performed by the network device as illustrated in FIG. 15, FIG. 16, or FIG. 17.

The processor 1901 includes one or more processing cores, and executes various functional applications and information processing by running software programs and modules. In some embodiments, the processor 1901 can be utilized to implement the functions and processes of the aforementioned processing module 1630 and/or processing module 1750.

The receiver 1902 and the transmitter 1903 can be implemented as a communication assembly, which can be a communication chip, and this communication assembly can be referred to as a transceiver. In some embodiments, the receiver 1902 can be used to implement the functions and processes of the aforementioned receiving module 1650 and/or receiving module 1710, and the transmitter 1903 can be used to implement the functions and processes of the aforementioned transmitting module 1610 and/or transmitting module 1730.

The memory 1904 is connected to the processor 1901 via the bus 1905. The memory 1904 can be used to store at least one instruction, and the processor 1901 is used to execute the at least one instruction, so as to implement each process in the above method embodiments.

In addition, the memory 1904 can be implemented by any type of volatile or non-volatile storage device, or a combination thereof. The volatile or non-volatile storage device includes, but is not limited to: a magnetic or optical disk, an EEPROM, an EPROM, a SRAM, a ROM, a magnetic memory, a flash memory, and a PROM.

In some embodiments, the receiver 1902 performs signal/data reception independently, or the processor 1901 controls the receiver 1902 to perform signal/data reception, or the processor 1901 requests the receiver 1902 to perform signal/data reception, or the processor 1901 cooperates with the receiver 1902 to perform signal/data reception.

In some embodiments, the transmitter 1903 independently transmits signals/data, or the processor 1901 controls the transmitter 1903 to transmit signals/data, or the processor 1901 requests the transmitter 1903 to transmit signals/data, or the processor 1901 cooperates with the transmitter 1903 to transmit signals/data.

In an exemplary embodiment of the present disclosure, a computer-readable storage medium is also provided, in which at least one program is stored. The at least one program is loaded and executed by the processor to perform the preamble transmission method according to the various method embodiments described above.

In an exemplary embodiment of the present disclosure, a chip is also provided, which includes a programmable logic circuit and/or program instructions. When the chip runs on a communication device, the chip is used to perform the preamble transmission method according to the various method embodiments described above.

In an exemplary embodiment of the present disclosure, a computer program product is also provided, which, when executed on a processor of a computer device, causes the computer device to perform the aforementioned preamble transmission method.

In an exemplary embodiment of the present disclosure, a computer program is also provided, which includes computer instructions. The processor of a computer device executes the computer instructions, enabling the computer device to perform the aforementioned preamble transmission method.

Those skilled in the art can understand that all or part of the processes to perform the above embodiments can be accomplished through hardware, or by instructing relevant hardware through a program. The program can be stored in a computer-readable storage medium, which can be a read-only memory, a magnetic disk, an optical disk, or the like.

Described above are merely optional embodiments of the present disclosure and are not intended to limit the present disclosure. Any modifications, equivalent substitutions, improvements, or the like, made within the spirit and principle of the present disclosure should fall within the protection scope of the present disclosure.

## Claims

1. A preamble transmission method, performed by a terminal device, the method comprising:
transmit a preamble sequence, wherein the preamble sequence is one of a first sequence; wherein the first sequence is generated based on at least one of a m sequence, a Gold sequence, or a Walsh sequence.

2. The method according to claim 1, wherein the first sequence is generated based on a first m-sequence and/or a second m-sequence, wherein the second m-sequence is acquired by performing a cyclic shift on the first m-sequence.

3. The method according to claim 2, wherein a number of the first m-sequence corresponding to the first sequence is X, and a number of the second m-sequence corresponding to the first sequence is Y; wherein X is an integer greater than or equal to 0, Y is an integer greater than or equal to 0, and X and Y are not simultaneously equal to 0.

4. The method according to claim 3, wherein the X first m-sequence is determined by the terminal device in N first m-sequences, wherein N is an integer greater than 1; or the X first m-sequences are indicated by a network device.

5. The method according to claim 3 or 4, wherein the X first m-sequences are any X of the N first m-sequences, wherein N is an integer greater than 1; or the X first m-sequences are determined based on a cell identifier; or the X first m-sequences are determined based on first sequence information.

6. The method according to claim 5, wherein the first sequence information comprises at least one of: first start information indicating a start position of the X first m-sequences in the N first m-sequences; first length information indicating the value of X; first end information indicating an end position of the X first m-sequences in the N first m-sequences; a total number of sequences in the first sequence; number(s) of the X first m-sequence; a number of the preamble sequence in the first sequence; a cyclic shift step; a numbering order of the N first m-sequences; or a first bit bitmap, wherein bits of the first bit bitmap are one-to-one corresponding to the N first m-sequences.

7. The method according to claim 6, wherein the X first m-sequences are determined based on the first start information and the first length information; or the X first m-sequences are determined based on the first length information and the first end information; or the X first m-sequences are determined based on the first start information and the first end information; or the X first m-sequences are determined based on at least one of the first start information, the cyclic shift step, the numbering order of the N first m-sequences, or the total number of sequences in the first sequence.

8. The method according to claim 6 or 7, wherein an i^{th} sequence in the first sequence is determined based on at least one of the first start information, the cyclic shift step, or a value of i; wherein the value of i is greater than or equal to 0 and less than the total number of sequences in the first sequence.

9. The method according to any one of claims 4 to 8, wherein the numbering order of the N first m-sequences is defined by a communication protocol, indicated by a network device, is a default sequence, or determined by the terminal device.

10. The method according to claim 9, wherein the numbering order of the N first m-sequences is determined according to one of: ascending order of numbers of the N first m-sequences; descending order of the numbers of the N first m-sequences; a sequence in which coefficients of a primitive polynomial are from higher powers to lower powers; a sequence in which the coefficients of the primitive polynomial are from lower powers to higher powers; ascending order of binary numbers of the coefficients of the primitive polynomial; or descending order of the binary numbers of the coefficients of the primitive polynomial.

11. The method according to claim 1, wherein the first sequence is generated based on an m-sequence subset, wherein the m-sequence subset is a subset of an m-sequence set; wherein the m-sequence set comprises a first m-sequence and/or a second m-sequence, the second m-sequence being acquired by performing a cyclic shift on the first m-sequence.

12. The method according to claim 11, wherein, within the m-sequence set, a number of the first m-sequences is determined based on an order of the first m-sequence; and/or, within the m-sequence set, a number of the second m-sequence is determined based on at least one of the number of the first m-sequences, a length of the first m-sequence, or a cyclic shift step.

13. The method according to claim 11 or 12, wherein a numbering order of first m-sequences within the m-sequence set is defined by a communication protocol, indicated by a network device, is a default sequence, or determined by the terminal device.

14. The method according to claim 13, wherein the numbering order of the first m-sequences within the m-sequence set is determined according to one of: ascending order of numbers of the first m-sequences within the m-sequence set; descending order the numbers of the first m-sequences within the m-sequence set; a sequence in which coefficients of a primitive polynomial are from higher powers to lower powers; a sequence in which the coefficients of the primitive polynomial are from lower powers to higher powers; ascending order of binary numbers of the coefficients of the primitive polynomial; or descending order of the binary numbers of the coefficients of the primitive polynomial.

15. The method according to any one of claims 11 to 14, wherein a numbering order of second m-sequences within the m-sequence set is defined by a communication protocol, indicated by a network device, is a default sequence, or determined by the terminal device.

16. The method according to claim 15, wherein the numbering order of the second m-sequences within the m-sequence set is determined according to one of: ascending order of numbers of first m-sequences within the m-sequence set; descending order of the numbers of the first m-sequences within the m-sequence set; a sequence in which coefficients of a primitive polynomial are from higher powers to lower powers; a sequence in which the coefficients of the primitive polynomial are from lower powers to higher powers; ascending order of binary numbers of the coefficients of the primitive polynomial; descending order of the binary numbers of the coefficients of the primitive polynomial; ascending order of cyclic offsets; or descending order of the cyclic offsets.

17. The method according to any one of claims 11 to 16, wherein each second m-sequence within the m-sequence set is arranged in numerical order after its corresponding first m-sequence; or all second m-sequences within the m-sequence set are arranged in numerical order after all first m-sequences within the m-sequence set.

18. The method according to any one of claims 11 to 17, wherein the m-sequence subset is any subset of the m-sequence set; or the m-sequence subset is determined based on a cell identifier; or the m-sequence subset is indicated by a network device.

19. The method according to any one of claims 1 to 17, wherein a sequence element numbered n in the preamble sequence is determined based on a sequence element numbered n' in a third m-sequence; wherein n' is determined based on at least one of n, a cyclic shift step, a number of the preamble sequence in the first sequence, or a first length value; wherein the first length value is a length value of the third m-sequence, and n is greater than or equal to 0 and less than the first length value.

20. The method according to claim 19, wherein n' is determined based on a first modulo result; wherein the first modulo result is a modulo result of a first sum and the first length value; wherein the first sum is a sum of n and a first product; wherein the first product is a product of the cyclic shift step and a target number, wherein the target number is a number of a target sequence in all m-sequences generated by the third m-sequence, wherein the target sequence generates the preamble sequence.

21. The method according to claim 19 or 20, wherein the sequence element numbered n in the preamble sequence is a difference between a value 1 and a second product, wherein the second product is a product of a value 2 and the sequence element numbered n' in the third m-sequence; or the sequence element numbered n in the preamble sequence is the sequence element numbered n' in the third m-sequence.

22. The method according to claim 1, wherein the first sequence is generated based on a first number of gold sequences; wherein the first number of gold sequences are generated based on at least one preferred pair of m-sequences.

23. The method according to claim 22, wherein the first number of gold sequences are all or part of the gold sequences in Z gold sequence families, wherein Z is an integer greater than or equal to 1.

24. The method according to claim 23, wherein the Z gold sequence families are determined by the terminal device in M gold sequence families, wherein M is an integer greater than 1; or the Z gold sequence families are indicated by a network device.

25. The method according to claim 23 or 24, wherein the Z gold sequence families are any Z of M gold sequence families, wherein M is an integer greater than 1; or the Z gold sequence families are determined based on a cell identifier; or the Z gold sequence families are determined based on second sequence information.

26. The method according to claim 25, wherein the second sequence information comprises at least one of: second start information indicating a start position of the Z gold sequence families in the M gold sequence families; second length information indicating the value of Z; second end information indicating an end position of the Z Gold sequence families in the M gold sequence families; a total number of sequences in the first sequence; a number of the Z gold sequence family; a number of the preamble sequence in the first sequence; a cyclic shift step length; a numbering order of the M gold sequence families; or a second bit bitmap, wherein bits of the second bit bitmap are one-to-one corresponding to the M gold sequence families.

27. The method according to claim 26, wherein the Z gold sequence families are determined based on the second start information and the second length information; or the Z gold sequence families are determined based on the second length information and the second end information; or the Z gold sequence families are determined based on the second start information and the second end information; or the Z gold sequence families are determined based on at least one of the second start information, the cyclic shift step, the numbering order of the M gold sequence families, or the total number of sequences in the first sequence.

28. The method according to claim 26 or 27, wherein an i^{th} sequence in the first sequence is determined based on at least one of the second start information, the cyclic shift step, or a value of i; wherein the value of i is greater than or equal to 0 and less than the total number of sequences in the first sequence.

29. The method according to any one of claims 24 to 28, wherein a numbering order of the M gold sequence families is defined by a communication protocol, indicated by a network device, is a default sequence, or determined by the terminal device.

30. The method according to claim 29, wherein the numbering order of the M gold sequence families is determined according to one of: ascending order of numbers of the M gold sequence families; descending order of the numbers of the M gold sequence families; a sequence in which coefficients of a primitive polynomial are from higher powers to lower powers; a sequence in which the coefficients of the primitive polynomial are from lower powers to higher powers; ascending order of binary numbers of the coefficients of the primitive polynomial; descending order of the binary numbers of the coefficients of the primitive polynomial; ascending order of numbers of the preferred pairs of m-sequences; descending order of the numbers of the preferred pairs of m-sequences; ascending order of cyclic offsets; or descending order of the cyclic offsets.

31. The method according to claim 1, wherein the first sequence is generated based on a gold sequence subset, wherein the gold sequence subset is a subset of a gold sequence set; wherein the gold sequence set comprises at least one gold sequence family, one gold sequence family being generated based on one preferred pair of m-sequences.

32. The method according to claim 31, wherein a number of gold sequence families within the gold sequence set is determined based on at least one of an order r, a cyclic offset, a cyclic shift step, a length of the m-sequence, or a number of preferred pairs of m-sequences.

33. The method according to claim 31 or 32, wherein a numbering order of the gold sequence families within the gold sequence set is defined by a communication protocol, indicated by a network device, is a default sequence, or determined by the terminal device.

34. The method according to claim 33, wherein the numbering order of the gold sequence families within the gold sequence set is determined according to one of: ascending order of numbers of the gold sequence families within the gold sequence set; descending order of the numbers of the gold sequence families within the gold sequence set; a sequence in which coefficients of a primitive polynomial are from higher powers to lower powers; a sequence in which the coefficients of the primitive polynomial are from lower powers to higher powers; ascending order of binary numbers of the coefficients of the primitive polynomial; descending order of the binary numbers of the coefficients of the primitive polynomial; ascending order of numbers of the preferred pair of m-sequences; descending order of the numbers of the preferred pair of m-sequences; ascending order of cyclic offsets; or descending order of the cyclic offsets.

35. The method according to any one of claims 31 to 34, wherein the gold sequence subset is any subset of the gold sequence set; or the gold sequence subset is determined based on a cell identifier; or the gold sequence subset is indicated by a network device.

36. The method according to any one of claims 23 to 35, wherein a gold sequence family comprises a first gold sequence family, wherein the first gold sequence family comprises a first gold sequence, wherein the first gold sequence is acquired by performing modulo-2 addition based on a fourth m-sequence and a cyclic shift sequence of a fifth m-sequence, wherein the fourth m-sequence and the fifth m-sequence constitute a preferred pair of m-sequences.

37. The method according to any one of claims 23 to 35, wherein a gold sequence family comprises a second gold sequence family, wherein the second gold sequence family comprises a second gold sequence, wherein the second gold sequence is acquired by performing modulo-2 addition based on a cyclic shift sequence of a fourth m-sequence and a cyclic shift sequence of a fifth m-sequence, wherein the fourth m-sequence and the fifth m-sequence constitute a preferred pair of m-sequences.

38. The method according to any one of claims 23 to 35, wherein a gold sequence family comprises a third gold sequence family, wherein the third gold sequence family a third gold sequence, wherein the third gold sequence is acquired by performing a cyclic shift on a first gold sequence, wherein the first gold sequence is acquired by performing modulo-2 addition based on a fourth m-sequence and a cyclic shift sequence of a fifth m-sequence, wherein the fourth m-sequence and the fifth m-sequence constitute a preferred pair of m-sequences.

39. The method according to any one of claims 1 or 22 to 38, wherein a sequence element numbered n in the preamble sequence is determined based on a sequence element numbered a in a fourth m-sequence and a sequence element numbered b in a fifth m-sequence; wherein the fourth m-sequence is one m-sequence in a preferred pair of m-sequences, and the fifth m-sequence is the other m-sequence in the preferred pair of m-sequences.

40. The method according to claim 39, wherein the sequence element numbered n in the preamble sequence is a third product, wherein the third product is a product of a first difference value and a second difference value; wherein the first difference value is a difference between a numerical value 1 and a fourth product, the fourth product being a product of a numerical value 2 and the sequence element numbered a in the fourth m-sequence; and the second difference value is a difference between the numerical value 1 and a fifth product, the fifth product being a product of the numerical value 2 and the sequence element numbered b in the fifth m-sequence.

41. The method according to claim 39, wherein the sequence element numbered n in the preamble sequence is a modulo-2 result of a sum of the sequence element numbered a in the fourth m-sequence and the sequence element numbered b in the fifth m-sequence.

42. The method according to any one of claims 39 to 41, wherein a is determined based on at least one of n, a parameter m₀, or a second length value; and b is determined based on at least one of n, a parameter m₁, or the second length value; wherein n is greater than or equal to 0 and less than the second length value, and the second length value is a length value of the fourth m-sequence and the fifth m-sequence.

43. The method according to claim 42, wherein a is determined based on a second modulo result, wherein the second modulo result is a modulo result of a second sum value and the second length value, the second sum value being a sum of n and the parameter m₀; and b is determined based on a third modulo result, wherein the third modulo result is a modulo result of a third sum value and the second length value, the third sum value being a sum of n and the parameter m₁.

44. The method according to claim 42 or 43, wherein the parameter m₀ is determined based on a first sub-identifier, and the parameter m₁ is determined based on a second sub-identifier; or the parameter m₀ is determined based on the second sub-identifier, and the parameter m₁ is determined based on the first sub-identifier; or the parameter m₀ is determined based on the first sub-identifier and the second sub-identifier, and the parameter m₁ is determined based on the first sub-identifier; or the parameter m₀ is determined based on the first sub-identifier, and the parameter m₁ is determined based on the first sub-identifier and the second sub-identifier.

45. The method according to claim 44, wherein the first sub-identifier and the second sub-identifier are determined based on a number of the preamble sequence in the first sequence.

46. The method according to claim 45, wherein the first sub-identifier and the second sub-identifier are determined based on the number of the preamble sequence in the first sequence and a cyclic shift step.

47. The method according to claim 45, wherein the first sub-identifier and the second sub-identifier are determined based on the number of the preamble sequence in the first sequence, a cyclic shift step, and a number of gold sequence families required to form the first sequence.

48. The method according to any one of claims 1 to 47, wherein a total number of sequences in the first sequence is defined by a communication protocol or configured by a network device.

49. The method according to any one of claims 1 to 48, wherein first sequences corresponding to different cells are either completely identical, partially identical, or completely different.

50. The method according to any one of claims 1 to 49, wherein a modulation method of the preamble sequence comprises at least one of an OOK modulation, a PSK modulation, a BPSK modulation, or a FSK modulation.

51. The method according to any one of claims 1 to 50, wherein the preamble sequence is carried on a random access channel; and a bandwidth occupied by the preamble sequence is related to at least one of a total bandwidth of the random access channel, an available bandwidth of the random access channel, or a frequency margin for downlink frequency synchronization.

52. A preamble transmission method, performed by a network device, the method comprises:
receiving a preamble sequence, wherein the preamble sequence is one of a first sequence; wherein the first sequence is generated based on at least one of a m-sequence, a Gold sequence, or a Walsh sequence.

53. The method according to claim 52, wherein the first sequence is generated based on a first m-sequence and/or a second m-sequence, wherein the second m-sequence is acquired by performing a cyclic shift on the first m-sequence.

54. The method according to claim 53, wherein a number of the first m-sequence corresponding to the first sequence is X, and a number of the second m-sequence corresponding to the first sequence is Y; wherein X is an integer greater than or equal to 0, Y is an integer greater than or equal to 0, and X and Y are not simultaneously equal to 0.

55. The method according to claim 54, wherein the X first m-sequences are determined by a terminal device in N first m-sequences, wherein N is an integer greater than 1; or the X first m-sequences are indicated by the network device.

56. The method according to claim 54 or 55, wherein the X first m-sequences are any X of the N first m-sequences, wherein N is an integer greater than 1; or the X first m-sequences are determined based on a cell identifier; or the X first m-sequences are determined based on first sequence information.

57. The method according to claim 56, wherein the first sequence information comprises at least one of: first start information indicating a start position of the X first m-sequences in the N first m-sequences; first length information indicating the value of X; first end information indicating an end position of the X first m-sequences in the N first m-sequences; a total number of sequences in the first sequence; number(s) of the X first m-sequence; a number of the preamble sequence in the first sequence; a cyclic shift step; a numbering order of the N first m-sequences; or a first bit bitmap, wherein bits of the first bit bitmap are one-to-one corresponding to the N first m-sequences.

58. The method according to claim 57, wherein the X first m-sequences are determined based on the first start information and the first length information; or the X first m-sequences are determined based on the first length information and the first end information; or the X first m-sequences are determined based on the first start information and the first end information; or the X first m-sequences are determined based on at least one of the first start information, the cyclic shift step, the numbering order of the N first m-sequences, or the total number of sequences in the first sequence.

59. The method according to claim 57 or 58, wherein an i^{th} sequence in the first sequence is determined based on at least one of the first start information, the cyclic shift step, or a value of i; wherein the value of i is greater than or equal to 0 and less than the total number of sequences in the first sequence.

60. The method according to any one of claims 55 to 59, wherein the numbering order of the N first m-sequences is defined by a communication protocol, indicated by the network device, is a default sequence, or determined by a terminal device.

61. The method according to claim 60, wherein the numbering order of the N first m-sequences is determined according to one of: ascending order of numbers of the N first m-sequences; descending order of the numbers of the N first m-sequences; a sequence in which coefficients of the primitive polynomial are from higher powers to lower powers; a sequence in which the coefficients of the primitive polynomial are from lower powers to higher powers; ascending order of binary numbers of the coefficients of the primitive polynomial; descending order of the binary numbers of the coefficients of the primitive polynomial.

62. The method according to claim 52, wherein the first sequence is generated based on an m-sequence subset, wherein the m-sequence subset is a subset of an m-sequence set; wherein the m-sequence set comprises a first m-sequence and/or a second m-sequence, the second m-sequence being acquired by performing a cyclic shift on the first m-sequence.

63. The method according to claim 62, wherein, within the m-sequence set, a number of the first m-sequences is determined based on an order of the first m-sequence; and within the m-sequence set, a number of the second m-sequences is determined based on at least one of the number of the first m-sequences, a length of the first m-sequence, or a cyclic shift step.

64. The method according to claim 62 or 63, wherein a numbering order of first m-sequences within the m-sequence set is defined by a communication protocol, indicated by the network device, is a default sequence, or determined by a terminal device.

65. The method according to claim 64, wherein the numbering order of the first m-sequences within the m-sequence set is determined according to one of: ascending order of numbers of the first m-sequences within the m-sequence set; descending order of the numbers of the first m-sequences within the m-sequence set; a sequence in which coefficients of a primitive polynomial are from higher powers to lower powers; a sequence in which the coefficients of the primitive polynomial are from lower powers to higher powers; ascending order of binary numbers of the coefficients of the primitive polynomial; descending order of the binary numbers of the coefficients of the primitive polynomial.

66. The method according to any one of claims 62 to 65, wherein a numbering order of second m-sequences within the m-sequence set is defined by a communication protocol, or indicated by the network device, or is a default sequence, or determined by a terminal device.

67. The method according to claim 66, wherein the numbering order of the second m-sequences within the m-sequence set is determined according to one of: ascending order of numbers of first m-sequences within the m-sequence set; descending order of the numbers of the first m-sequences within the m-sequence set; a sequence in which coefficients of a primitive polynomial are from higher powers to lower powers; a sequence in which the coefficients of the primitive polynomial are from lower powers to higher powers; ascending order of binary numbers of the coefficients of the primitive polynomial; descending order of the binary numbers of the coefficients of the primitive polynomial; ascending order of cyclic offsets; descending order of the cyclic offsets.

68. The method according to any one of claims 62 to 67, wherein each second m-sequence within the m-sequence set is arranged in numerical order after its corresponding first m-sequence; or all second m-sequences within the m-sequence set are arranged in numerical order after all first m-sequences within the m-sequence set.

69. The method according to any one of claims 62 to 68, wherein the m-sequence subset is any subset of the m-sequence set; or the m-sequence subset is determined based on a cell identifier; or the m-sequence subset is indicated by the network device.

70. The method according to any one of claims 52 to 69, wherein a sequence element numbered n in the preamble sequence is determined based on a sequence element numbered n' in the third m-sequence; wherein n' is determined based on at least one of n, a cyclic shift step, a number of the preamble sequence in the first sequence, or a first length value; wherein the first length value is a length value of the third m-sequence, and n is greater than or equal to 0 and less than the first length value.

71. The method according to claim 70, wherein n' is determined based on a first modulo result; wherein the first modulo result is a modulo result of a first sum and the first length value; wherein the first sum is a sum of n and a first product; wherein the first product is a product of the cyclic shift step and a target number, wherein the target number is a number of a target sequence in all m-sequences generated by the third m-sequence, wherein the target sequence generates the preamble sequence.

72. The method according to claim 70 or 71, wherein the sequence element numbered n in the preamble sequence is a difference between a value 1 and a second product, wherein the second product is a product of a value 2 and the sequence element numbered n' in the third m-sequence; or the sequence element numbered n in the preamble sequence is the sequence element numbered n' in the third m-sequence.

73. The method according to claim 52, wherein the first sequence is generated based on a first number of gold sequences; wherein the first number of gold sequences are generated based on at least one preferred pair of m-sequences.

74. The method according to claim 73, wherein the first number of gold sequences are all or part of the gold sequences in Z gold sequence families, wherein Z is an integer greater than or equal to 1.

75. The method according to claim 74, wherein the Z gold sequence families are determined by the terminal device in M gold sequence families, wherein M is an integer greater than 1; or the Z gold sequence families are indicated by the network device.

76. The method according to claim 74 or 75, wherein the Z gold sequence families are any Z of M gold sequence families, wherein M is an integer greater than 1; or the Z gold sequence families are determined based on a cell identifier; or the Z gold sequence families are determined based on second sequence information.

77. The method according to claim 76, wherein the second sequence information comprises at least one of: second start information indicating a start position of the Z gold sequence families in the M gold sequence families; second length information indicating the value of Z; second end information indicating an end position of the Z gold sequence families in the M gold sequence families; a total number of sequences in the first sequence; a number of the Z gold sequence family; a number of the preamble sequence in the first sequence; a cyclic shift step length; a numbering order of the M gold sequence families; or a second bit bitmap, wherein bits of the second bit bitmap are one-to-one corresponding to the M gold sequence families.

78. The method according to claim 77, wherein the Z gold sequence families are determined based on the second start information and the second length information; or the Z gold sequence families are determined based on the second length information and the second end information; or the Z gold sequence families are determined based on the second start information and the second end information; or the Z gold sequence families are determined based on at least one of the second start information, the cyclic shift step, the numbering order of the M gold sequence families, or the total number of sequences in the first sequence.

79. The method according to claim 77 or 78, wherein an i^{th} sequence in the first sequence is determined based on at least one of the second start information, the cyclic shift step, or a value of i; wherein the value of i is greater than or equal to 0 and less than the total number of sequences in the first sequence.

80. The method according to any one of claims 75 to 79, wherein a numbering order of the M gold sequence families is defined by a communication protocol, or indicated by the network device, or is a default sequence, or determined by the terminal device.

81. The method according to claim 80, wherein the numbering order of the M gold sequence families is determined according to one of: ascending order of numbers of the M gold sequence families; descending order of the numbers of the M gold sequence families; a sequence in which coefficients of a primitive polynomial are from higher powers to lower powers; a sequence in which the coefficients of the primitive polynomial are from lower powers to higher powers; ascending order of binary numbers of the coefficients of the primitive polynomial; descending order of the binary numbers of the coefficients of the primitive polynomial; ascending order of numbers of the preferred pairs of m-sequences; descending order of the numbers of the preferred pairs of m-sequences; ascending order of cyclic offsets; or descending order of the cyclic offsets.

82. The method according to claim 52, wherein the first sequence is generated based on a gold sequence subset, wherein the gold sequence subset is a subset of a gold sequence set; wherein the gold sequence set comprises at least one gold sequence family, one gold sequence family being generated based on one preferred pair of m-sequences.

83. The method according to claim 82, wherein a number of gold sequence families within the gold sequence set is determined based on at least one of an order r, a cyclic offset, a cyclic shift step, a length of the m-sequence, or a number of preferred pairs of m-sequences.

84. The method according to claim 82 or 83, wherein a numbering order of the Gold sequence families within the gold sequence set is defined by a communication protocol, or indicated by the network device, or is a default sequence, or determined by the terminal device.

85. The method according to claim 84, wherein the numbering order of the gold sequence families within the gold sequence set is determined according to one of: ascending order of numbers of the gold sequence families within the gold sequence set; descending order of the numbers of the gold sequence families within the gold sequence set; a sequence in which coefficients of a primitive polynomial are from higher powers to lower powers; a sequence in which the coefficients of the primitive polynomial are from lower powers to higher powers; ascending order of binary numbers of the coefficients of the primitive polynomial; descending order of the binary numbers of the coefficients of the primitive polynomial; ascending order of numbers of the preferred pairs of m-sequences; descending order of the numbers of the preferred pairs of m-sequences; ascending order of cyclic offsets; descending order of the cyclic offsets.

86. The method according to any one of claims 82 to 85, wherein the gold sequence subset is any subset of the gold sequence set; or the gold sequence subset is determined based on a cell identifier; or the gold sequence subset is indicated by the network device.

87. The method according to any one of claims 84 to 86, wherein a gold sequence family comprises a first gold sequence family, wherein the first gold sequence family comprises a first gold sequence, wherein the first gold sequence is acquired by performing modulo-2 addition based on a fourth m-sequence and a cyclic shift sequence of a fifth m-sequence, wherein the fourth m-sequence and the fifth m-sequence constitute a preferred pair of m-sequences.

88. The method according to any one of claims 84 to 86, wherein a gold sequence family comprises a second gold sequence family, wherein the second gold sequence family comprises a second gold sequence, wherein the second gold sequence is acquired by performing modulo-2 addition based on a cyclic shift sequence of a fourth m-sequence and a cyclic shift sequence of a fifth m-sequence, wherein the fourth m-sequence and the fifth m-sequence constitute a preferred pair of m-sequences.

89. The method according to any one of claims 84 to 86, wherein a gold sequence family comprises a third gold sequence family, wherein the third gold sequence family a third gold sequence, wherein the third gold sequence is acquired by performing a cyclic shift on a first gold sequence, wherein the first gold sequence is acquired by performing modulo-2 addition on a fourth m-sequence and a cyclic shift sequence of a fifth m-sequence, wherein the fourth m-sequence and the fifth m-sequence constitute a preferred pair of m-sequences.

90. The method according to any one of claims 52 or 73 to 89, wherein a sequence element numbered n in the preamble sequence is determined based on a sequence element numbered a in the fourth m-sequence and a sequence element numbered b in the fifth m-sequence; wherein the fourth m-sequence is one m-sequence in a preferred pair of m-sequences, and the fifth m-sequence is the other m-sequence in the preferred pair of m-sequences.

91. The method according to claim 90, wherein the sequence element numbered n in the preamble sequence is a third product, wherein the third product is a product of a first difference value and a second difference value; wherein the first difference value is a difference between a numerical value 1 and a fourth product, the fourth product being a product of a numerical value 2 and the sequence element numbered a in the fourth m-sequence; and the second difference value is a difference between the numerical value 1 and a fifth product, the fifth product being a product of the numerical value 2 and the sequence element numbered b in the fifth m-sequence.

92. The method according to claim 90, wherein the sequence element numbered n in the preamble sequence is a modulo-2 result of a sum of the sequence element numbered a in the fourth m-sequence and the sequence element numbered b in the fifth m-sequence.

93. The method according to any one of claims 90 to 92, wherein said a is determined based on at least one of n, a parameter m₀, or a second length value; and b is determined based on at least one of n, a parameter m₁, or the second length value; wherein n is greater than or equal to 0 and less than the second length value, and the second length value is a length value of the fourth m-sequence and the fifth m-sequence.

94. The method according to claim 93, wherein a is determined based on a second modulo result, wherein the second modulo result is a modulo result of a second sum value and the second length value, the second sum value being a sum of n and the parameter m₀; and b is determined based on a third modulo result, wherein the third modulo result is a modulo result of a third sum value and the second length value, the third sum value being a sum of n and the parameter m₁.

95. The method according to claim 93 or 94, wherein the parameter m₀ is determined based on a first sub-identifier, and the parameter m₁ is determined based on a second sub-identifier; or the parameter m₀ is determined based on the second sub-identifier, and the parameter m₁ is determined based on the first sub-identifier; or the parameter m₀ is determined based on the first sub-identifier and the second sub-identifier, and the parameter m₁ is determined based on the first sub-identifier; or the parameter m₀ is determined based on the first sub-identifier, and the parameter m₁ is determined based on the first sub-identifier and the second sub-identifier.

96. The method according to claim 95, wherein the first sub-identifier and the second sub-identifier are determined based on a number of the preamble sequence in the first sequence.

97. The method according to claim 96, wherein the first sub-identifier and the second sub-identifier are determined based on the number of the preamble sequence in the first sequence and a cyclic shift step.

98. The method according to claim 96, wherein the first sub-identifier and the second sub-identifier are determined based on the number of the preamble sequence in the first sequence, a cyclic shift step, and a number of gold sequence families required to form the first sequence.

99. The method according to any one of claims 52 to 98, wherein a total number of sequences in the first sequence is defined by a communication protocol or configured by the network device.

100. The method according to any one of claims 52 to 99, wherein first sequences corresponding to different cells are either completely identical, partially identical, or completely different.

101. The method according to any one of claims 52 to 100, wherein a modulation mode of the preamble sequence comprises at least one of an OOK modulation, a PSK modulation, a BPSK modulation, or a FSK modulation.

102. The method according to any one of claims 52 to 101, wherein the preamble sequence is carried on a random access channel; and a bandwidth occupied by the preamble sequence is related to at least one of a total bandwidth of the random access channel, an available bandwidth of the random access channel, or a frequency margin for downlink frequency synchronization.

103. A preamble transmission apparatus, comprising:
a transmitting module, configured to transmit a preamble sequence, wherein the preamble sequence is one of a first sequence; wherein a type of the first sequence comprises at least one of an m-sequence, a Gold sequence, or a Walsh sequence.

104. A preamble transmission apparatus, comprising:
a receiving module, configured to receive a preamble sequence, wherein the preamble sequence is one of a first sequence; wherein a type of the first sequence comprises at least one of an m-sequence, a Gold sequence, or a Walsh sequence.

105. A communication device, comprising:
a processor; a receiver and/or transmitter connected to the processor; a memory for storing an instruction executable for the processor; wherein the communication device is configured to perform the preamble transmission method as defined in any one of claims 1 to 51, or any one of claims 52 to 102.

106. A communication device, comprising: a receiver and/or a transmitter; wherein the communication device is configured to perform the preamble transmission method as defined in any one of claims 1 to 51.

107. A computer-readable storage medium, wherein an executable instruction is stored in the readable storage medium, and the executable instruction is loaded and executed by a processor to perform the preamble transmission method as defined in any one of claims 1 to 51, or any one of claims 52 to 102.

108. A chip, comprising a programmable logic circuit or program, wherein the chip is configured to perform the preamble transmission method as defined in any one of claims 1 to 51, or any one of claims 52 to 102.

109. A computer program product, comprising a computer instruction stored in a computer-readable storage medium, wherein the computer instruction, when read by a processor of a computer device from the computer-readable storage medium and executed by the processor, causes the computer device to perform the preamble transmission method as defined in any one of claims 1 to 51, or any one of claims 52 to 102.

110. A computer program, comprising a computer instruction, wherein the computer instruction, when executed by a processor of a computer device, causes the computer device to perform the preamble transmission method as defined in any one of claims 1 to 51, or any one of claims 52 to 102.
